# EUROPEAN PATENT APPLICATION

(11) **EP 3 992 818 A1**
(43) Date of publication of application: **04.05.2022**
(21) Application number: 20849148.0
(22) Date of filing: 11.06.2020
(51) Int. Cl.: G06F 16/9535

(54) **METHOD AND DEVICE FOR RECOGNIZING TEXT**

(30) Priority: 02.08.2019 CN 201910712935; 30.09.2019 CN 201910944108
(71) Applicant: Huawei Technologies Co., Ltd., Longgang District Shenzhen, Guangdong 518129 (CN)
(72) Inventor: SONG, Zengmeng, Shenzhen, Guangdong 518129 (CN); GONG, Jia, Shenzhen, Guangdong 518129 (CN); XIE, Yuefei, Shenzhen, Guangdong 518129 (CN); WANG, Jun, Shenzhen, Guangdong 518129 (CN); TANG, Hua, Shenzhen, Guangdong 518129 (CN); MA, Zhanyin, Shenzhen, Guangdong 518129 (CN)
(74) Representative: Epping - Hermann - Fischer
(86) International application number: PCT/CN2020/095510
(87) International publication number: WO 2021/022900

(57) **Abstract**

A text recognition method and apparatus are provided and relate to the field of information classification. A text and profile information of a user may be obtained (301), content feature coefficients are obtained based on the text and the user profile information (302), and importance of the text is determined based on the content feature coefficients (303). In this way, a text related to the user can be automatically selected from a large quantity of texts based on content of the texts, and efficiency is relatively high.

## Description

This application claims priority to Chinese Patent Application No. 201910944108.9, filed with the China National Intellectual Property Administration on September 30, 2019 and entitled "TEXT RECOGNITION METHOD AND APPARATUS", and priority to Chinese Patent Application No. 201910712935.5, filed with the China National Intellectual Property Administration on August 2, 2019 and entitled "METHOD AND COMPUTER DEVICE FOR RECOGNIZING IMPORTANT SHORT TEXT OF USER", which are incorporated herein by reference in their entirety.

### TECHNICAL FIELD

This application relates to the field of information classification, and in particular, to a text recognition method and apparatus.

### BACKGROUND

As mobile office gains more popularity in the organizational structure field (for example, the to business (to business, 2B) field), mobile office software plays an increasingly important role in people's work. People can communicate with each other in a timely manner through mobile office software to improve work efficiency.

Currently, for users of mobile office software, texts (for example, instant chat content, emails, and meeting notifications) received or sent on a daily basis have exploded. However, among the texts received or sent by the user, only a part of the texts is related to the user. Therefore, after receiving or sending the texts, the user needs to manually select texts related to the user. However, in a large quantity of texts, manually selecting the texts related to the user is not only time-consuming but also inefficient.

### SUMMARY

Embodiments of this application provide a text recognition method and apparatus, to identify importance of a text received or sent by a user.

To achieve the foregoing objective, the following technical solutions are used in the embodiments of this application.

According to a first aspect, an embodiment of this application provides a text recognition method. The method includes: obtaining a text and profile information of a user, where the text is a text received or sent by the user, the user profile information is used to indicate N keywords in a text related to the user, and N is an integer greater than or equal to 1; obtaining content feature coefficients based on the text and the user profile information, where the content feature coefficients are used to indicate importance of content of the text; and determining importance of the text based on the content feature coefficients.

According to the technical solution provided in the first aspect, the text and the user profile information may be obtained, the content feature coefficients may be obtained based on the text and the user profile information, and the importance of the text can be determined based on the content feature coefficients, so that the importance of the text received or sent by the user can be recognized based on the content of the text.

In a possible implementation, the user profile information includes N pieces of tag information, and the N pieces of tag information correspondingly indicate the N keywords; or the user profile information includes the N pieces of tag information and a weight of each piece of tag information in the N pieces of tag information. According to the foregoing technical solution, the content feature coefficients can be obtained based on the text and the N pieces of tag information, and the importance of the text can be determined based on the content feature coefficients; or the content feature coefficients can be obtained based on the text, the N pieces of tag information, and the weight of each piece of tag information in the N pieces of tag information, and the importance of the text can be determined based on the content feature coefficients. In this way, the importance of the text received or sent by the user can be recognized based on the content of the text.

In a possible implementation, the content feature coefficients include N coefficients. The n^{th} coefficient is obtained based on the text and the n^{th} piece of tag information in the user profile information, and n is a positive integer greater than 0 and less than or equal to N. According to the foregoing technical solution, the n^{th} coefficient in the content feature coefficients can be obtained based on the text and the n^{th} piece of tag information in the user profile information, and the importance of the text can be determined based on the content feature coefficients, so that the importance of the text received or sent by the user can be recognized based on the content of the text.

In a possible implementation, the obtaining content feature coefficients based on the text and the user profile information includes: obtaining first user behavior feedback data, where the first user behavior feedback data is used to indicate importance of a historical text that is highly similar to the content of the text; obtaining a first correspondence, where the first correspondence is used to indicate an association relationship between the first user behavior feedback data and an affect coefficient of the first user behavior feedback data; obtaining the affect coefficient of the first user behavior feedback data based on the first user behavior feedback data and the first correspondence; and obtaining the content feature coefficients based on the text, the user profile information, and the affect coefficient of the first user behavior feedback data. According to the foregoing technical solution, the first user behavior feedback data may be obtained, the affect coefficient of the first user behavior feedback data is obtained based on the first user behavior feedback data and the first correspondence, the content feature coefficients are obtained based on the text, the user profile information, and the affect coefficient of the first user behavior feedback data, and the importance of the text is determined based on the content feature coefficients. In this way, the importance of the text received or sent by the user can be recognized based on the content of the text.

In a possible implementation, the method further includes: obtaining user relationship information, where the user relationship information is used to indicate a hierarchical relationship between the user and another user; and obtaining relationship feature coefficients based on the text and the user relationship information, where the relationship feature coefficients are used to indicate relationships between the user and a receiver of the text and/or a sender of the text. The determining importance of the text further includes: determining the importance of the text based on the relationship feature coefficients. According to the foregoing technical solution, the user relationship information may be obtained, the relationship feature coefficients are obtained based on the text and the user relationship information, and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user. According to the foregoing technical solution, the relationship feature coefficients may be obtained based on the text, the superior-subordinate relationship information of the user, the horizontal relationship information of the user, the collaboration relationship information, and the communicate relationship information of the user, and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a superior-subordinate relationship between the user and another user; the horizontal relationship information of the user includes a minimum unit organization of the user and another user; the collaboration relationship information includes indication information, and the indication information is used to indicate whether the user works in collaboration with another user; and the communicate relationship information of the user includes a frequency of communication between the user and another user. According to the foregoing technical solution, the relationship feature coefficients may be obtained based on the text, the superior-subordinate relationship between the user and another user, the minimum unit organization of the user and another user, the indication information, and the frequency of communication between the user and another user; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a weight of a superior-subordinate relationship between the user and another user, and the weight of the superior-subordinate relationship between the user and the another user is used to indicate a superior-subordinate relationship between the user and the another user. The horizontal relationship information of the user includes a weight of a minimum unit organization, and the weight of the minimum unit organization is used to indicate a minimum unit organization of the user and another user. The collaboration relationship information includes a collaboration relationship weight, and the collaboration relationship weight is used to indicate a collaboration relationship between the user and another user. The communicate relationship information of the user includes a communication frequency weight, and the communication frequency weight is used to indicate a frequency of communication between the user and another user. According to the foregoing technical solution, the relationship feature coefficients may be obtained based on the text, the weight of the superior-subordinate relationship between the user and the another user, the weight of the minimum unit organization, the collaboration relationship weight, and the communication frequency weight; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user. According to the foregoing technical solution, the superior-subordinate relationship feature coefficient may be obtained based on the superior-subordinate relationship information of the user, the horizontal relationship feature coefficient may be obtained based on the horizontal relationship information of the user, the collaboration relationship feature coefficient may be obtained based on the collaboration relationship information, and the communicate relationship feature coefficient may be obtained based on the communicate relationship information of the user; and the importance of the text is determined based on the content feature coefficients, the superior-subordinate relationship feature coefficient, the horizontal relationship feature coefficient, the collaboration relationship feature coefficient, and the communicate relationship feature coefficient, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The obtaining relationship feature coefficients based on the text and the user relationship information includes: obtaining second user behavior feedback data, where the second user behavior feedback data is used to indicate importance of a historical text that has the same sender as the text; obtaining a second correspondence, where the second correspondence is used to indicate an association relationship between the second user behavior feedback data and an affect coefficient of the second user behavior feedback data; obtaining the affect coefficient of the second user behavior feedback data based on the second user behavior feedback data and the second correspondence; and obtaining the relationship feature coefficients based on the text, the user relationship information, and the affect coefficient of the second user behavior feedback data. According to the foregoing technical solution, the second user behavior feedback data may be obtained; the affect coefficient of the second user behavior feedback data is obtained based on the second user behavior feedback data and the second correspondence; the relationship feature coefficients are obtained based on the text, the user relationship information, and the affect coefficient of the second user behavior feedback data; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the text includes an identifier of the receiver of the text. The method further includes: obtaining a message affect range feature coefficient based on the identifier of the receiver of the text, where the message affect range feature coefficient is used to indicate a quantity of receivers of the text. The determining importance of the text further includes: determining the importance of the text based on the message affect range feature coefficient. According to the foregoing technical solution, the message affect range feature coefficient may be obtained based on the text, and the importance of the text is determined based on the content feature coefficients, the relationship feature coefficients, and the message affect range feature coefficient. In this way, the importance of the text received or sent by the user can be recognized based on the content of the text, the relationships between the user and the receiver and the sender of the text, and the quantity of receivers of the text.

In a possible implementation, the method further includes: obtaining a relationship coefficient for the user and the receiver/sender based on the user relationship information, where the relationship coefficient for the user and the receiver/sender is used to indicate closeness of relationships/a relationship between the user and the receiver and/or the sender of the text. The determining importance of the text further includes: determining the importance of the text based on the relationship coefficient for the user and the receiver/sender. According to the foregoing technical solution, the relationship coefficient for the user and the receiver/sender may be obtained based on the user relationship information, and the importance of the text is determined based on the content feature coefficients, the relationship feature coefficients, and the relationship coefficient for the user and the receiver/sender. In this way, the importance of the text received or sent by the user can be recognized based on the content of the text, the relationships between the user and the receiver and the sender of the text, and the closeness of the relationships/relationship between the user and the receiver and/or the sender of the text.

In a possible implementation, the determining importance of the text based on the content feature coefficients includes: using the content feature coefficients as input data of a machine learning method, and determining the importance of the text by using the machine learning method. According to the foregoing technical solution, after the content feature coefficients are obtained, the content feature coefficients may be used as the input data of the machine learning method, and the importance of the text is determined by using the machine learning method, so that the importance of the text received or sent by the user can be recognized.

In a possible implementation, the determining importance of the text based on the content feature coefficients includes: using the content feature coefficients and the relationship feature coefficients as input data of a machine learning method, and determining the importance of the text by using the machine learning method. According to the foregoing technical solution, after the content feature coefficients and the relationship feature coefficients are obtained, the content feature coefficients and the relationship feature coefficients may be used as the input data of the machine learning method, and the importance of the text is determined by using the machine learning method, so that the importance of the text received or sent by the user can be recognized.

In a possible implementation, the determining importance of the text based on the content feature coefficients includes: using the content feature coefficients, the relationship feature coefficients, and the message affect range feature coefficient as input data of a machine learning method, and determining the importance of the text by using the machine learning method. According to the foregoing technical solution, after the content feature coefficients, the relationship feature coefficients, and the message affect range feature coefficient are obtained, the content feature coefficients, the relationship feature coefficients, and the message affect range feature coefficient may be used as the input data of the machine learning method, and the importance of the text is determined by using the machine learning method, so that the importance of the text received or sent by the user can be recognized.

In a possible implementation, the determining importance of the text based on the content feature coefficients includes: using the content feature coefficients, the relationship feature coefficients, the message affect range feature coefficient, and the relationship coefficient for the user and the receiver/sender as input data of a machine learning method, and determining the importance of the text by using the machine learning method. According to the foregoing technical solution, after the content feature coefficients, the relationship feature coefficients, the message affect range feature coefficient, and the relationship coefficient for the user and the receiver/sender are obtained, the content feature coefficients, the relationship feature coefficients, the message affect range feature coefficient, and the relationship coefficient for the user and the receiver/sender may be used as the input data of the machine learning method, and the importance of the text is determined by using the machine learning method, so that the importance of the text received or sent by the user can be recognized.

In a possible implementation, the content feature coefficients include N coefficients, and when there are a plurality of texts of same importance, the method further includes: performing an addition operation on all or a part of the N coefficients in the content feature coefficients to obtain an importance coefficient of the text, and sorting, based on the importance coefficient of the text, texts received or sent by the user. According to the foregoing technical solution, after the importance of the text is determined, if there are a plurality of texts of the same importance, an addition operation may be performed on all or a part of the N coefficients in the content feature coefficients to obtain the importance coefficient of the text, and the texts received or sent by the user are sorted based on the importance coefficient of the text. This allows the user to process the texts based on importance of the texts.

In a possible implementation, the content feature coefficients include N coefficients, and when there are a plurality of texts of same importance, the method further includes: performing a multiplication operation on a sum of coefficients in the content feature coefficients and a product of coefficients in the relationship feature coefficients to obtain an importance coefficient of the text, and sorting, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients to obtain the importance coefficient of the text, and the texts received or sent by the user are sorted based on the importance coefficient of the text. This allows the user to process the texts based on importance of the texts.

In a possible implementation, the content feature coefficients include N coefficients, and when there are a plurality of texts of same importance, the method further includes: performing a multiplication operation on a sum of coefficients in the content feature coefficients and a product of coefficients in the relationship feature coefficients, and dividing a result of the multiplication operation by the message affect range feature coefficient, to obtain an importance coefficient of the text; and sorting, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text, and the texts received or sent by the user are sorted based on the importance coefficient of the text. This allows the user to process the texts based on importance of the texts.

In a possible implementation, the content feature coefficients include N coefficients, and when there are a plurality of texts of same importance, the method further includes: multiplying a sum of coefficients in the content feature coefficients by a product of coefficients in the relationship feature coefficients and the relationship coefficient for the user and the receiver/sender, and dividing a result of the multiplication operation by the message affect range feature coefficient, to obtain an importance coefficient of the text; and sorting, based on the importance coefficient of the text, texts received or sent by the user. According to the foregoing technical solution, after the importance of the text is determined, if there are a plurality of texts of the same importance, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text, and the texts received or sent by the user are sorted based on the importance coefficient of the text. This allows the user to process the texts based on importance of the texts.

In a possible implementation, the determining importance of the text based on the content feature coefficients includes: performing an addition operation on all or a part of N coefficients in the content feature coefficients to obtain an importance coefficient of the text; and determining the importance of the text based on the importance coefficient of the text. According to the foregoing technical solution, after the content feature coefficients are obtained, an addition operation may be performed on all or a part of N coefficients in the content feature coefficients to obtain the importance coefficient of the text, and the importance of the text is determined based on the importance coefficient of the text. In this way, the importance of the text received or sent by the user can be recognized.

In a possible implementation, the determining importance of the text based on the content feature coefficients includes: performing a multiplication operation on a sum of coefficients in the content feature coefficients and a product of coefficients in the relationship feature coefficients to obtain the importance of the text; and determining the importance of the text based on the importance coefficient of the text. According to the foregoing technical solution, after the content feature coefficients and the relationship feature coefficients are obtained, a multiplication operation may be performed on the sum of coefficients in the content feature coefficients and the product of coefficients in the relationship feature coefficients to obtain the importance coefficient of the text, and the importance of the text is determined based on the importance coefficient of the text. In this way, the importance of the text received or sent by the user can be recognized.

In a possible implementation, the determining importance of the text based on the content feature coefficients includes: performing a multiplication operation on a sum of coefficients in the content feature coefficients and a product of coefficients in the relationship feature coefficients, and dividing a result of the multiplication operation by the message affect range feature coefficient, to obtain an importance coefficient of the text; and determining the importance of the text based on the importance coefficient of the text. According to the foregoing technical solution, after the content feature coefficients, the relationship feature coefficients, and the message affect range feature coefficient are obtained, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text, and the importance of the text is determined based on the importance coefficient of the text. In this way, the importance of the text received or sent by the user can be recognized.

In a possible implementation, the determining importance of the text based on the content feature coefficients includes: multiplying a sum of coefficients in the content feature coefficients by a product of coefficients in the relationship feature coefficients and the relationship coefficient for the user and the receiver/sender, and dividing a result of the multiplication operation by the message affect range feature coefficient, to obtain an importance coefficient of the text; and determining the importance of the text based on the importance coefficient of the text. According to the foregoing technical solution, after the content feature coefficients, the relationship feature coefficients, the message affect range feature coefficient, and the relationship coefficient for the user and the receiver/sender are obtained, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text, and the importance of the text is determined based on the importance coefficient of the text. In this way, the importance of the text received or sent by the user can be recognized.

In a possible implementation, when there are a plurality of texts of same importance, the method further includes: sorting, based on the importance coefficient of the text, texts received or sent by the user. According to the foregoing technical solution, after the importance of the text is determined, when there are a plurality of texts of same importance, the texts received or sent by the user may be sorted based on importance coefficients of the texts. This allows the user to process the texts based on importance of the texts.

In a possible implementation, the method further includes: classifying and displaying the texts based on the importance of the texts. According to the foregoing technical solution, the texts may be classified and displayed based on the importance of the texts, so that the user separately processes texts of different importance types.

According to a second aspect, an embodiment of this application provides a text recognition method. The method includes: obtaining a text and relationship information of a user, where the text is a text received or sent by the user, and the user relationship information is used to indicate a hierarchical relationship between the user and another user; obtaining relationship feature coefficients based on the text and the user relationship information, where the relationship feature coefficients are used to indicate relationships between the user and a receiver of the text and/or a sender of the text; and determining importance of the text based on the relationship feature coefficients.

According to the foregoing technical solution provided in the second aspect, the text and the user relationship information may be obtained, the relationship feature coefficients are obtained based on the text and the user relationship information, and the importance of the text is determined based on the relationship feature coefficients, so that the importance of the text received or sent by the user can be recognized based on the relationships between the user and the receiver and the sender of the text.

In a possible implementation, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user. According to the foregoing technical solution, the relationship feature coefficients may be obtained based on the text, the superior-subordinate relationship information of the user, the horizontal relationship information of the user, the collaboration relationship information, and the communicate relationship information of the user, and the importance of the text is determined based on the relationship feature coefficients, so that the importance of the text received or sent by the user can be recognized based on the relationships between the user and the receiver and the sender of the text.

In a possible implementation, the superior-subordinate relationship information of the user includes a superior-subordinate relationship between the user and another user; the horizontal relationship information of the user includes a minimum unit organization of the user and another user; the collaboration relationship information includes indication information, and the indication information is used to indicate whether the user works in collaboration with another user; and the communicate relationship information of the user includes a frequency of communication between the user and another user. According to the foregoing technical solution, the relationship feature coefficients may be obtained based on the text, the superior-subordinate relationship between the user and another user, the minimum unit organization of the user and another user, the indication information, and the frequency of communication between the user and another user; and the importance of the text is determined based on the relationship feature coefficients, so that the importance of the text received or sent by the user can be recognized based on the relationships between the user and the receiver and the sender of the text.

In a possible implementation, the superior-subordinate relationship information of the user includes a weight of a superior-subordinate relationship between the user and another user, and the weight of the superior-subordinate relationship between the user and the another user is used to indicate a superior-subordinate relationship between the user and the another user. The horizontal relationship information of the user includes a weight of a minimum unit organization, and the weight of the minimum unit organization is used to indicate a minimum unit organization of the user and another user. The collaboration relationship information includes a collaboration relationship weight, and the collaboration relationship weight is used to indicate a collaboration relationship between the user and another user. The communicate relationship information of the user includes a communication frequency weight, and the communication frequency weight is used to indicate a frequency of communication between the user and another user. According to the foregoing technical solution, the relationship feature coefficients may be obtained based on the text, the weight of the superior-subordinate relationship between the user and the another user, the weight of the minimum unit organization, the collaboration relationship weight, and the communication frequency weight; and the importance of the text is determined based on the relationship feature coefficients, so that the importance of the text received or sent by the user can be recognized based on the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user. According to the foregoing technical solution, the superior-subordinate relationship feature coefficient may be obtained based on the superior-subordinate relationship information of the user, the horizontal relationship feature coefficient may be obtained based on the horizontal relationship information of the user, the collaboration relationship feature coefficient may be obtained based on the collaboration relationship information, and the communicate relationship feature coefficient may be obtained based on the communicate relationship information of the user; and the importance of the text is determined based on the superior-subordinate relationship feature coefficient, the horizontal relationship feature coefficient, the collaboration relationship feature coefficient, and the communicate relationship feature coefficient, so that the importance of the text received or sent by the user can be recognized based on the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The obtaining relationship feature coefficients based on the text and the user relationship information includes: obtaining second user behavior feedback data, where the second user behavior feedback data is used to indicate importance of a historical text that has the same sender as the text; obtaining a second correspondence, where the second correspondence is used to indicate an association relationship between the second user behavior feedback data and an affect coefficient of the second user behavior feedback data; obtaining the affect coefficient of the second user behavior feedback data based on the second user behavior feedback data and the second correspondence; and obtaining the relationship feature coefficients based on the text, the user relationship information, and the affect coefficient of the second user behavior feedback data. According to the foregoing technical solution, the second user behavior feedback data may be obtained; the affect coefficient of the second user behavior feedback data is obtained based on the second user behavior feedback data and the second correspondence; the relationship feature coefficients are obtained based on the text, the user relationship information, and the affect coefficient of the second user behavior feedback data; and the importance of the text is determined based on the relationship feature coefficients, so that the importance of the text received or sent by the user can be recognized based on the relationships between the user and the receiver and the sender of the text.

In a possible implementation, the determining importance of the text based on the relationship feature coefficients includes: using the relationship feature coefficients as input data of a machine learning method, and determining the importance of the text by using the machine learning method. According to the foregoing technical solution, after the relationship feature coefficients are obtained, the relationship feature coefficients may be used as the input data of the machine learning method, and the importance of the text is determined by using the machine learning method, so that the importance of the text received or sent by the user can be recognized.

In a possible implementation, when there are a plurality of texts of same importance, the method further includes: performing a multiplication operation on coefficients in the relationship feature coefficients to obtain an importance coefficient of the text; and sorting, based on the importance coefficient of the text, texts received or sent by the user. According to the foregoing technical solution, after the importance of the text is determined, if there are a plurality of texts of the same importance, a multiplication operation may be performed on the coefficients in the relationship feature coefficients to obtain the importance coefficient of the text, and the texts received or sent by the user are sorted based on the importance coefficient of the text. This allows the user to process the texts based on importance of the texts.

In a possible implementation, the determining importance of the text based on the relationship feature coefficients includes: performing a multiplication operation on coefficients in the relationship feature coefficients to obtain an importance coefficient of the text; and determining the importance of the text based on the importance coefficient of the text. According to the foregoing technical solution, after the relationship feature coefficients are obtained, a multiplication operation may be performed on the coefficients in the relationship feature coefficients to obtain the importance coefficient of the text, and the importance of the text is determined based on the importance coefficient of the text. In this way, the importance of the text received or sent by the user can be recognized.

In a possible implementation, when there are a plurality of texts of same importance, the method further includes: sorting, based on the importance coefficient of the text, texts received or sent by the user. According to the foregoing technical solution, after the importance of the text is determined, when there are a plurality of texts of same importance, the texts received or sent by the user may be sorted based on importance coefficients of the texts. This allows the user to process the texts based on importance of the texts.

In a possible implementation, the method further includes: classifying and displaying the texts based on the importance of the texts. According to the foregoing technical solution, the texts may be classified and displayed based on the importance of the texts, so that the user separately processes texts of different importance types.

According to a third aspect, an embodiment of this application provides a text recognition method. The method includes: obtaining a text, profile information of a user, and user relationship information, where the text is a text received or sent by the user, the user profile information is used to indicate N keywords in a text related to the user, N is an integer greater than or equal to 1, and the user relationship information is used to indicate a hierarchical relationship between the user and another user; obtaining content feature coefficients based on the text and the user profile information, where the content feature coefficients are used to indicate importance of content of the text; obtaining relationship feature coefficients based on the text and the user relationship information, where the relationship feature coefficients are used to indicate relationships between the user and a receiver of the text and/or a sender of the text; and determining importance of the text based on the content feature coefficients and the relationship feature coefficients.

According to the technical solution provided in the third aspect, the text, the user profile information, and the user relationship information may be obtained, the content feature coefficients are obtained based on the text and the user profile information, the relationship feature coefficients are obtained based on the text and the user relationship information, and the importance of the text is determined based on the content feature coefficients and the relationship feature coefficients. In this way, the importance of the text received or sent by the user can be recognized based on the content of the text and the relationships between the user and the receiver and the sender of the text.

In a possible implementation, the user profile information includes N pieces of tag information, and the N pieces of tag information correspondingly indicate the N keywords; or the user profile information includes the N pieces of tag information and a weight of each piece of tag information in the N pieces of tag information. According to the foregoing technical solution, the content feature coefficients can be obtained based on the text and the N pieces of tag information, and the importance of the text can be determined based on the content feature coefficients and the relationship feature coefficients; or the content feature coefficients can be obtained based on the text, the N pieces of tag information, and the weight of each piece of tag information in the N pieces of tag information, and the importance of the text can be determined based on the content feature coefficients and the relationship feature coefficients. In this way, the importance of the text received or sent by the user can be recognized based on the content of the text, and the relationships between the user and the receiver and the sender of the text.

In a possible implementation, the content feature coefficients include N coefficients. The n^{th} coefficient is obtained based on the text and the n^{th} piece of tag information in the user profile information, and n is a positive integer greater than 0 and less than or equal to N. According to the foregoing technical solution, the n^{th} coefficient in the content feature coefficients can be obtained based on the text and the n^{th} piece of tag information in the user profile information, and the importance of the text can be determined based on the content feature coefficients and the relationship feature coefficients, so that the importance of the text received or sent by the user can be recognized based on the content of the text, and the relationships between the user and the receiver and the sender of the text.

In a possible implementation, the obtaining content feature coefficients based on the text and the user profile information includes: obtaining first user behavior feedback data, where the first user behavior feedback data is used to indicate importance of a historical text that is highly similar to the content of the text; obtaining a first correspondence, where the first correspondence is used to indicate an association relationship between the first user behavior feedback data and an affect coefficient of the first user behavior feedback data; obtaining the affect coefficient of the first user behavior feedback data based on the first user behavior feedback data and the first correspondence; and obtaining the content feature coefficients based on the text, the user profile information, and the affect coefficient of the first user behavior feedback data. According to the foregoing technical solution, the first user behavior feedback data may be obtained; the affect coefficient of the first user behavior feedback data is obtained based on the first user behavior feedback data and the first correspondence; the content feature coefficients are obtained based on the text, the user relationship information, and the affect coefficient of the first user behavior feedback data; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user. According to the foregoing technical solution, the relationship feature coefficients may be obtained based on the text, the superior-subordinate relationship information of the user, the horizontal relationship information of the user, the collaboration relationship information, and the communicate relationship information of the user, and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a superior-subordinate relationship between the user and another user; the horizontal relationship information of the user includes a minimum unit organization of the user and another user; the collaboration relationship information includes indication information, and the indication information is used to indicate whether the user works in collaboration with another user; and the communicate relationship information of the user includes a frequency of communication between the user and another user. According to the foregoing technical solution, the relationship feature coefficients may be obtained based on the text, the superior-subordinate relationship between the user and another user, the minimum unit organization of the user and another user, the indication information, and the frequency of communication between the user and another user; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a weight of a superior-subordinate relationship between the user and another user, and the weight of the superior-subordinate relationship between the user and the another user is used to indicate a superior-subordinate relationship between the user and the another user. The horizontal relationship information of the user includes a weight of a minimum unit organization, and the weight of the minimum unit organization is used to indicate a minimum unit organization of the user and another user. The collaboration relationship information includes a collaboration relationship weight, and the collaboration relationship weight is used to indicate a collaboration relationship between the user and another user. The communicate relationship information of the user includes a communication frequency weight, and the communication frequency weight is used to indicate a frequency of communication between the user and another user. According to the foregoing technical solution, the relationship feature coefficients may be obtained based on the text, the weight of the superior-subordinate relationship between the user and the another user, the weight of the minimum unit organization, the collaboration relationship weight, and the communication frequency weight; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user. According to the foregoing technical solution, the superior-subordinate relationship feature coefficient may be obtained based on the superior-subordinate relationship information of the user, the horizontal relationship feature coefficient may be obtained based on the horizontal relationship information of the user, the collaboration relationship feature coefficient may be obtained based on the collaboration relationship information, and the communicate relationship feature coefficient may be obtained based on the communicate relationship information of the user; and the importance of the text is determined based on the content feature coefficients, the superior-subordinate relationship feature coefficient, the horizontal relationship feature coefficient, the collaboration relationship feature coefficient, and the communicate relationship feature coefficient, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The obtaining relationship feature coefficients based on the text and the user relationship information includes: obtaining second user behavior feedback data, where the second user behavior feedback data is used to indicate importance of a historical text that has the same sender as the text; obtaining a second correspondence, where the second correspondence is used to indicate an association relationship between the second user behavior feedback data and an affect coefficient of the second user behavior feedback data; obtaining the affect coefficient of the second user behavior feedback data based on the second user behavior feedback data and the second correspondence; and obtaining the relationship feature coefficients based on the text, the user relationship information, and the affect coefficient of the second user behavior feedback data. According to the foregoing technical solution, the second user behavior feedback data may be obtained; the affect coefficient of the second user behavior feedback data is obtained based on the second user behavior feedback data and the second correspondence; the relationship feature coefficients are obtained based on the text, the user relationship information, and the affect coefficient of the second user behavior feedback data; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the method further includes: obtaining a message affect range feature coefficient based on the text, where the message affect range feature coefficient is used to indicate a quantity of receivers of the text. The determining importance of the text further includes: determining the importance of the text based on the message affect range feature coefficient. According to the foregoing technical solution, the message affect range feature coefficient may be obtained based on the text, and the importance of the text is determined based on the content feature coefficients, the relationship feature coefficients, and the message affect range feature coefficient. In this way, the importance of the text received or sent by the user can be recognized based on the content of the text, the relationships between the user and the receiver and the sender of the text, and the quantity of receivers of the text.

In a possible implementation, the method further includes: obtaining a relationship coefficient for the user and the receiver/sender based on the user relationship information, where the relationship coefficient for the user and the receiver/sender is used to indicate closeness of relationships/a relationship between the user and the receiver and/or the sender of the text. The determining importance of the text further includes: determining the importance of the text based on the relationship coefficient for the user and the receiver/sender. According to the foregoing technical solution, the relationship coefficient for the user and the receiver/sender may be obtained based on the user relationship information, and the importance of the text is determined based on the content feature coefficients, the relationship feature coefficients, and the relationship coefficient for the user and the receiver/sender. In this way, the importance of the text received or sent by the user can be recognized based on the content of the text, the relationships between the user and the receiver and the sender of the text, and the closeness of the relationships/relationship between the user and the receiver and/or the sender of the text.

In a possible implementation, the determining importance of the text based on the content feature coefficients and the relationship feature coefficients includes: using the content feature coefficients and the relationship feature coefficients as input data of a machine learning method, and determining the importance of the text by using the machine learning method. According to the foregoing technical solution, after the feature coefficient set is obtained, the content feature coefficients and the relationship feature coefficients may be used as the input data of the machine learning method, and the importance of the text is determined by using the machine learning method, so that the importance of the text received or sent by the user can be recognized.

In a possible implementation, the determining importance of the text based on the content feature coefficients and the relationship feature coefficients includes: using the content feature coefficients, the relationship feature coefficients, and the message affect range feature coefficient as input data of a machine learning method, and determining the importance of the text by using the machine learning method. According to the foregoing technical solution, after the feature coefficient set is obtained, the content feature coefficients, the relationship feature coefficients, and the message affect range feature coefficient may be used as the input data of the machine learning method, and the importance of the text is determined by using the machine learning method, so that the importance of the text received or sent by the user can be recognized.

In a possible implementation, the determining importance of the text based on the content feature coefficients and the relationship feature coefficients includes: using the content feature coefficients, the relationship feature coefficients, the message affect range feature coefficient, and the relationship coefficient for the user and the receiver/sender as input data of a machine learning method, and determining the importance of the text by using the machine learning method. According to the foregoing technical solution, after the feature coefficient set is obtained, the content feature coefficients, the relationship feature coefficients, the message affect range feature coefficient, and the relationship coefficient for the user and the receiver/sender may be used as the input data of the machine learning method, and the importance of the text is determined by using the machine learning method, so that the importance of the text received or sent by the user can be recognized.

In a possible implementation, the content feature coefficients include N coefficients, and when there are a plurality of texts of same importance, the method further includes: performing a multiplication operation on a sum of coefficients in the content feature coefficients and a product of coefficients in the relationship feature coefficients to obtain an importance coefficient of the text, and sorting, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients to obtain the importance coefficient of the text, and the texts received or sent by the user are sorted based on the importance coefficient of the text. This allows the user to process the texts based on importance of the texts.

In a possible implementation, the content feature coefficients include N coefficients, and when there are a plurality of texts of same importance, the method further includes: performing a multiplication operation on a sum of coefficients in the content feature coefficients and a product of coefficients in the relationship feature coefficients, and dividing a result of the multiplication operation by the message affect range feature coefficient, to obtain an importance coefficient of the text; and sorting, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text, and the texts received or sent by the user are sorted based on the importance coefficient of the text. This allows the user to process the texts based on importance of the texts.

In a possible implementation, the content feature coefficients include N coefficients, and when there are a plurality of texts of same importance, the method further includes: multiplying a sum of coefficients in the content feature coefficients by a product of coefficients in the relationship feature coefficients and the relationship coefficient for the user and the receiver/sender, and dividing a result of the multiplication operation by the message affect range feature coefficient, to obtain an importance coefficient of the text; and sorting, based on the importance coefficient of the text, texts received or sent by the user. According to the foregoing technical solution, after the importance of the text is determined, if there are a plurality of texts of the same importance, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text, and the texts received or sent by the user are sorted based on the importance coefficient of the text. This allows the user to process the texts based on importance of the texts.

In a possible implementation, the determining importance of the text based on the content feature coefficients and the relationship feature coefficients includes: performing a multiplication operation on a sum of coefficients in the content feature coefficients and a product of coefficients in the relationship feature coefficients to obtain an importance coefficient of the text; and determining the importance of the text based on the importance coefficient of the text. According to the foregoing technical solution, after the content feature coefficients and the relationship feature coefficients are obtained, a multiplication operation may be performed on the sum of coefficients in the content feature coefficients and the product of coefficients in the relationship feature coefficients to obtain the importance coefficient of the text, and the importance of the text is determined based on the importance coefficient of the text. In this way, the importance of the text received or sent by the user can be recognized.

In a possible implementation, the determining importance of the text based on the content feature coefficients and the relationship feature coefficients includes: performing a multiplication operation on a sum of coefficients in the content feature coefficients and a product of coefficients in the relationship feature coefficients, and dividing a result of the multiplication operation by the message affect range feature coefficient, to obtain an importance coefficient of the text; and determining the importance of the text based on the importance coefficient of the text. According to the foregoing technical solution, after the content feature coefficients, the relationship feature coefficients, and the message affect range feature coefficient are obtained, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text, and the importance of the text is determined based on the importance coefficient of the text. In this way, the importance of the text received or sent by the user can be recognized.

In a possible implementation, the determining importance of the text based on the content feature coefficients and the relationship feature coefficients includes: multiplying a sum of coefficients in the content feature coefficients by a product of coefficients in the relationship feature coefficients and the relationship coefficient for the user and the receiver/sender, and dividing a result of the multiplication operation by the message affect range feature coefficient, to obtain an importance coefficient of the text; and determining the importance of the text based on the importance coefficient of the text. According to the foregoing technical solution, after the content feature coefficients, the relationship feature coefficients, the message affect range feature coefficient, and the relationship coefficient for the user and the receiver/sender are obtained, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text, and the importance of the text is determined based on the importance coefficient of the text. In this way, the importance of the text received or sent by the user can be recognized.

In a possible implementation, when there are a plurality of texts of same importance, the method further includes: sorting, based on the importance coefficient of the text, texts received or sent by the user. According to the foregoing technical solution, after the importance of the text is determined, when there are a plurality of texts of same importance, the texts received or sent by the user may be sorted based on importance coefficients of the texts. This allows the user to process the texts based on importance of the texts.

In a possible implementation, the method further includes: classifying and displaying the texts based on the importance of the texts. According to the foregoing technical solution, the texts may be classified and displayed based on the importance of the texts, so that the user separately processes texts of different importance types.

According to a fourth aspect, an embodiment of this application provides a text recognition apparatus. The apparatus includes an obtaining module, a processing module, and a determining module. The obtaining module is configured to obtain a text and profile information of a user, where the text is a text received or sent by the user, the user profile information is used to indicate N keywords in a text related to the user, and N is an integer greater than or equal to 1. The processing module is configured to obtain content feature coefficients based on the text and the user profile information, where the content feature coefficients are used to indicate importance of content of the text. The determining module is configured to determine importance of the text based on the content feature coefficients. According to the technical solution provided in the fourth aspect, the text and the user profile information may be obtained, the content feature coefficients may be obtained based on the text and the user profile information, and the importance of the text can be determined based on the content feature coefficients, so that the importance of the text received or sent by the user can be recognized based on the content of the text.

In a possible implementation, the user profile information includes N pieces of tag information, and the N pieces of tag information correspondingly indicate the N keywords; or the user profile information includes the N pieces of tag information and a weight of each piece of tag information in the N pieces of tag information. According to the foregoing technical solution, the content feature coefficients can be obtained based on the text and the N pieces of tag information, and the importance of the text can be determined based on the content feature coefficients; or the content feature coefficients can be obtained based on the text, the N pieces of tag information, and the weight of each piece of tag information in the N pieces of tag information, and the importance of the text can be determined based on the content feature coefficients. In this way, the importance of the text received or sent by the user can be recognized based on the content of the text.

In a possible implementation, the content feature coefficients include N coefficients. The n^{th} coefficient is obtained based on the text and the n^{th} piece of tag information in the user profile information, and n is a positive integer greater than 0 and less than or equal to N. According to the foregoing technical solution, the n^{th} coefficient in the content feature coefficients can be obtained based on the text and the n^{th} piece of tag information in the user profile information, and the importance of the text can be determined based on the content feature coefficients, so that the importance of the text received or sent by the user can be recognized based on the content of the text.

In a possible implementation, the processing module is specifically configured to obtain first user behavior feedback data, where the first user behavior feedback data is used to indicate importance of a historical text that is highly similar to the content of the text. The processing module is further specifically configured to obtain a first correspondence, where the first correspondence is used to indicate an association relationship between the first user behavior feedback data and an affect coefficient of the first user behavior feedback data. The processing module is further specifically configured to obtain the affect coefficient of the first user behavior feedback data based on the first user behavior feedback data and the first correspondence. The processing module is further specifically configured to obtain the content feature coefficients based on the text, the user profile information, and the affect coefficient of the first user behavior feedback data. According to the foregoing technical solution, the first user behavior feedback data may be obtained, the affect coefficient of the first user behavior feedback data is obtained based on the first user behavior feedback data and the first correspondence, the content feature coefficients are obtained based on the text, the user profile information, and the affect coefficient of the first user behavior feedback data, and the importance of the text is determined based on the content feature coefficients. In this way, the importance of the text received or sent by the user can be recognized based on the content of the text.

In a possible implementation, the obtaining module is further configured to obtain user relationship information, where the user relationship information is used to indicate a hierarchical relationship between the user and another user. The processing module is further configured to obtain relationship feature coefficients based on the text and the user relationship information, where the relationship feature coefficients are used to indicate relationships between the user and a receiver of the text and/or a sender of the text. The determining module is further configured to determine the importance of the text based on the relationship feature coefficients. According to the foregoing technical solution, the user relationship information may be obtained, the relationship feature coefficients are obtained based on the text and the user relationship information, and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user. According to the foregoing technical solution, the relationship feature coefficients may be obtained based on the text, the superior-subordinate relationship information of the user, the horizontal relationship information of the user, the collaboration relationship information, and the communicate relationship information of the user, and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a superior-subordinate relationship between the user and another user; the horizontal relationship information of the user includes a minimum unit organization of the user and another user; the collaboration relationship information includes indication information, and the indication information is used to indicate whether the user works in collaboration with another user; and the communicate relationship information of the user includes a frequency of communication between the user and another user. According to the foregoing technical solution, the relationship feature coefficients may be obtained based on the text, the superior-subordinate relationship between the user and another user, the minimum unit organization of the user and another user, the indication information, and the frequency of communication between the user and another user; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a weight of a superior-subordinate relationship between the user and another user, and the weight of the superior-subordinate relationship between the user and the another user is used to indicate a superior-subordinate relationship between the user and the another user. The horizontal relationship information of the user includes a weight of a minimum unit organization, and the weight of the minimum unit organization is used to indicate a minimum unit organization of the user and another user. The collaboration relationship information includes a collaboration relationship weight, and the collaboration relationship weight is used to indicate a collaboration relationship between the user and another user. The communicate relationship information of the user includes a communication frequency weight, and the communication frequency weight is used to indicate a frequency of communication between the user and another user. According to the foregoing technical solution, the relationship feature coefficients may be obtained based on the text, the weight of the superior-subordinate relationship between the user and the another user, the weight of the minimum unit organization, the collaboration relationship weight, and the communication frequency weight; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user. According to the foregoing technical solution, the superior-subordinate relationship feature coefficient may be obtained based on the superior-subordinate relationship information of the user, the horizontal relationship feature coefficient may be obtained based on the horizontal relationship information of the user, the collaboration relationship feature coefficient may be obtained based on the collaboration relationship information, and the communicate relationship feature coefficient may be obtained based on the communicate relationship information of the user; and the importance of the text is determined based on the content feature coefficients, the superior-subordinate relationship feature coefficient, the horizontal relationship feature coefficient, the collaboration relationship feature coefficient, and the communicate relationship feature coefficient, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include an superior-subordinate relationship feature coefficient, a horizontal relationship feature coefficient, and a collaboration relationship feature coefficient. The processing module is specifically configured to obtain second user behavior feedback data, where the second user behavior feedback data is used to indicate importance of a historical text that has the same sender as the text. The processing module is further specifically configured to obtain an affect coefficient of the second user behavior feedback data based on the second user behavior feedback data and a second correspondence, where the second correspondence is used to indicate an association relationship between the second user behavior feedback data and the affect coefficient of the second user behavior feedback data. The processing module is further specifically configured to obtain the relationship feature coefficients based on the text, the user relationship information, and the affect coefficient of the second user behavior feedback data. According to the foregoing technical solution, the second user behavior feedback data may be obtained; the affect coefficient of the second user behavior feedback data is obtained based on the second user behavior feedback data and the second correspondence; the relationship feature coefficients are obtained based on the text, the user relationship information, and the affect coefficient of the second user behavior feedback data; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the text includes an identifier of the receiver of the text. The processing module is further configured to obtain a message affect range feature coefficient based on the identifier of the receiver of the text, where the message affect range feature coefficient is used to indicate a quantity of receivers of the text. The determining module is further configured to determine the importance of the text based on the message affect range feature coefficient. According to the foregoing technical solution, the message affect range feature coefficient may be obtained based on the text, and the importance of the text is determined based on the content feature coefficients, the relationship feature coefficients, and the message affect range feature coefficient. In this way, the importance of the text received or sent by the user can be recognized based on the content of the text, the relationships between the user and the receiver and the sender of the text, and the quantity of receivers of the text.

In a possible implementation, the processing module is further configured to obtain a relationship coefficient for the user and the receiver/sender based on the user relationship information, where the relationship coefficient for the user and the receiver/sender is used to indicate closeness of relationships/a relationship between the user and the receiver and/or the sender of the text. The determining module is further configured to determine the importance of the text based on the relationship coefficient for the user and the receiver/sender. According to the foregoing technical solution, the relationship coefficient for the user and the receiver/sender may be obtained based on the user relationship information, and the importance of the text is determined based on the content feature coefficients, the relationship feature coefficients, and the relationship coefficient for the user and the receiver/sender. In this way, the importance of the text received or sent by the user can be recognized based on the content of the text, the relationships between the user and the receiver and the sender of the text, and the closeness of the relationships/relationship between the user and the receiver and/or the sender of the text.

In a possible implementation, the determining module is specifically configured to use the content feature coefficients as input data of a machine learning method, and determine the importance of the text by using the machine learning method. According to the foregoing technical solution, after the content feature coefficients are obtained, the content feature coefficients may be used as the input data of the machine learning method, and the importance of the text is determined by using the machine learning method, so that the importance of the text received or sent by the user can be recognized.

In a possible implementation, the determining module is specifically configured to use the content feature coefficients and the relationship feature coefficients as input data of a machine learning method, and determine the importance of the text by using the machine learning method. According to the foregoing technical solution, after the content feature coefficients and the relationship feature coefficients are obtained, the content feature coefficients and the relationship feature coefficients may be used as the input data of the machine learning method, and the importance of the text is determined by using the machine learning method, so that the importance of the text received or sent by the user can be recognized.

In a possible implementation, the determining module is specifically configured to use the content feature coefficients, the relationship feature coefficients, and the message affect range feature coefficient as input data of a machine learning method, and determine the importance of the text by using the machine learning method. According to the foregoing technical solution, after the content feature coefficients, the relationship feature coefficients, and the message affect range feature coefficient are obtained, the content feature coefficients, the relationship feature coefficients, and the message affect range feature coefficient may be used as the input data of the machine learning method, and the importance of the text is determined by using the machine learning method, so that the importance of the text received or sent by the user can be recognized.

In a possible implementation, the determining module is specifically configured to use the content feature coefficients, the relationship feature coefficients, the message affect range feature coefficient, and the relationship coefficient for the user and the receiver/sender as input data of a machine learning method, and determine the importance of the text by using the machine learning method. According to the foregoing technical solution, after the content feature coefficients, the relationship feature coefficients, the message affect range feature coefficient, and the relationship coefficient for the user and the receiver/sender are obtained, the content feature coefficients, the relationship feature coefficients, the message affect range feature coefficient, and the relationship coefficient for the user and the receiver/sender may be used as the input data of the machine learning method, and the importance of the text is determined by using the machine learning method, so that the importance of the text received or sent by the user can be recognized.

In a possible implementation, the content feature coefficients include N coefficients, and there are a plurality of texts of same importance. The apparatus further includes a sorting module. In this case, the processing module is further configured to perform an addition operation on all or a part of the N coefficients in the content feature coefficients to obtain an importance coefficient of the text. The sorting module is configured to sort, based on the importance coefficient of the text, texts received or sent by the user. According to the foregoing technical solution, after the importance of the text is determined, if there are a plurality of texts of the same importance, an addition operation may be performed on all or a part of the N coefficients in the content feature coefficients to obtain the importance coefficient of the text, and the texts received or sent by the user are sorted based on the importance coefficient of the text. This allows the user to process the texts based on importance of the texts.

In a possible implementation, the content feature coefficients include N coefficients, and there are a plurality of texts of same importance. The apparatus further includes a sorting module. In this case, the processing module is further configured to perform a multiplication operation on a sum of coefficients in the content feature coefficients and a product of coefficients in the relationship feature coefficients to obtain an importance coefficient of the text. The sorting module is configured to sort, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients to obtain the importance coefficient of the text, and the texts received or sent by the user are sorted based on the importance coefficient of the text. This allows the user to process the texts based on importance of the texts.

In a possible implementation, the content feature coefficients include N coefficients, and there are a plurality of texts of same importance. The apparatus further includes a sorting module. In this case, the processing module is further configured to perform a multiplication operation on a sum of coefficients in the content feature coefficients and a product of coefficients in the relationship feature coefficients, and divide a result of the multiplication operation by the message affect range feature coefficient, to obtain an importance coefficient of the text. The sorting module is configured to sort, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text, and the texts received or sent by the user are sorted based on the importance coefficient of the text. This allows the user to process the texts based on importance of the texts.

In a possible implementation, the content feature coefficients include N coefficients, and there are a plurality of texts of same importance. The apparatus further includes a sorting module. In this case, the processing module is further configured to multiply a sum of coefficients in the content feature coefficients by a product of coefficients in the relationship feature coefficients and the relationship coefficient for the user and the receiver/sender, and divide a result of the multiplication operation by the message affect range feature coefficient, to obtain an importance coefficient of the text. The sorting module is configured to sort, based on the importance coefficient of the text, texts received or sent by the user. According to the foregoing technical solution, after the importance of the text is determined, if there are a plurality of texts of the same importance, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text, and the texts received or sent by the user are sorted based on the importance coefficient of the text. This allows the user to process the texts based on importance of the texts. In a possible implementation, the determining module is specifically configured to perform an addition operation on all or a part of the N coefficients in the content feature coefficients to obtain an importance coefficient of the text. The determining module is further specifically configured to determine the importance of the text based on the importance coefficient of the text. According to the foregoing technical solution, after the content feature coefficients are obtained, an addition operation may be performed on all or a part of N coefficients in the content feature coefficients to obtain the importance coefficient of the text, and the importance of the text is determined based on the importance coefficient of the text. In this way, the importance of the text received or sent by the user can be recognized.

In a possible implementation, the determining module is specifically configured to multiply a sum of coefficients in the content feature coefficients by a product of coefficients in the relationship feature coefficients, to obtain an importance coefficient of the text. The determining module is further specifically configured to determine the importance of the text based on the importance coefficient of the text. According to the foregoing technical solution, after the content feature coefficients and the relationship feature coefficients are obtained, a multiplication operation may be performed on the sum of coefficients in the content feature coefficients and the product of coefficients in the relationship feature coefficients to obtain the importance coefficient of the text. In this way, the importance of the text received or sent by the user can be recognized.

In a possible implementation, the determining module is specifically configured to multiply a sum of coefficients in the content feature coefficients by a product of coefficients in the relationship feature coefficients, and divide a result of the multiplication operation by the message affect range feature coefficient, to obtain an importance coefficient of the text. The determining module is further specifically configured to determine the importance of the text based on the importance coefficient of the text. According to the foregoing technical solution, after the content feature coefficients, the relationship feature coefficients, and the message affect range feature coefficient are obtained, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text. In this way, the importance of the text received or sent by the user can be recognized.

In a possible implementation, the determining module is specifically configured to multiply a sum of coefficients in the content feature coefficients by a product of coefficients in the relationship feature coefficients and the relationship coefficient for the user and the receiver/sender, and divide a result of the multiplication operation by the message affect range feature coefficient, to obtain an importance coefficient of the text. The determining module is further specifically configured to determine the importance of the text based on the importance coefficient of the text. According to the foregoing technical solution, after the content feature coefficients, the relationship feature coefficients, the message affect range feature coefficient, and the relationship coefficient for the user and the receiver/sender are obtained, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text. In this way, the importance of the text received or sent by the user can be recognized. In a possible implementation, when there are a plurality of texts of same importance, the apparatus further includes a sorting module. The sorting module is configured to sort, based on the importance coefficient of the text, texts received or sent by the user. According to the foregoing technical solution, after the importance of the text is determined, when there are a plurality of texts of same importance, the texts received or sent by the user may be sorted based on importance coefficients of the texts. This allows the user to process the texts based on importance of the texts.

In a possible implementation, the apparatus further includes a display module. The display module is configured to classify and display the texts based on importance of the texts. According to the foregoing technical solution, the texts may be classified and displayed based on the importance of the texts, so that the user separately processes texts of different importance types.

According to a fifth aspect, an embodiment of this application provides a text recognition apparatus. The apparatus includes: an obtaining module, a processing module, and a determining module. The obtaining module is configured to obtain a text and relationship information of a user, where the text is a text received or sent by the user, and the user relationship information is used to indicate a hierarchical relationship between the user and another user. The processing module is configured to obtain relationship feature coefficients based on the text and the user relationship information, where the relationship feature coefficients are used to indicate relationships between the user and a receiver of the text and/or a sender of the text. The determining module is configured to determine importance of the text based on the relationship feature coefficients.

According to the foregoing technical solution provided in the fifth aspect, the text and the user relationship information may be obtained, the relationship feature coefficients are obtained based on the text and the user relationship information, and the importance of the text is determined based on the relationship feature coefficients, so that the importance of the text received or sent by the user can be recognized based on the relationships between the user and the receiver and the sender of the text.

In a possible implementation, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user. According to the foregoing technical solution, the relationship feature coefficients may be obtained based on the text, the superior-subordinate relationship information of the user, the horizontal relationship information of the user, the collaboration relationship information, and the communicate relationship information of the user, and the importance of the text is determined based on the relationship feature coefficients, so that the importance of the text received or sent by the user can be recognized based on the relationships between the user and the receiver and the sender of the text.

In a possible implementation, the superior-subordinate relationship information of the user includes a superior-subordinate relationship between the user and another user; the horizontal relationship information of the user includes a minimum unit organization of the user and another user; the collaboration relationship information includes indication information, and the indication information is used to indicate whether the user works in collaboration with another user; and the communicate relationship information of the user includes a frequency of communication between the user and another user. According to the foregoing technical solution, the relationship feature coefficients may be obtained based on the text, the superior-subordinate relationship between the user and another user, the minimum unit organization of the user and another user, the indication information, and the frequency of communication between the user and another user; and the importance of the text is determined based on the relationship feature coefficients, so that the importance of the text received or sent by the user can be recognized based on the relationships between the user and the receiver and the sender of the text.

In a possible implementation, the superior-subordinate relationship information of the user includes a weight of a superior-subordinate relationship between the user and another user, and the weight of the superior-subordinate relationship between the user and the another user is used to indicate a superior-subordinate relationship between the user and the another user. The horizontal relationship information of the user includes a weight of a minimum unit organization, and the weight of the minimum unit organization is used to indicate a minimum unit organization of the user and another user. The collaboration relationship information includes a collaboration relationship weight, and the collaboration relationship weight is used to indicate a collaboration relationship between the user and another user. The communicate relationship information of the user includes a communication frequency weight, and the communication frequency weight is used to indicate a frequency of communication between the user and another user. According to the foregoing technical solution, the relationship feature coefficients may be obtained based on the text, the weight of the superior-subordinate relationship between the user and the another user, the weight of the minimum unit organization, the collaboration relationship weight, and the communication frequency weight; and the importance of the text is determined based on the relationship feature coefficients, so that the importance of the text received or sent by the user can be recognized based on the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user. According to the foregoing technical solution, the superior-subordinate relationship feature coefficient may be obtained based on the superior-subordinate relationship information of the user, the horizontal relationship feature coefficient may be obtained based on the horizontal relationship information of the user, the collaboration relationship feature coefficient may be obtained based on the collaboration relationship information, and the communicate relationship feature coefficient may be obtained based on the communicate relationship information of the user; and the importance of the text is determined based on the superior-subordinate relationship feature coefficient, the horizontal relationship feature coefficient, the collaboration relationship feature coefficient, and the communicate relationship feature coefficient, so that the importance of the text received or sent by the user can be recognized based on the relationships between the user and the receiver and the sender of the text.

In a possible implementation, the relationship feature coefficients include organizational relationship feature coefficients and a communicate relationship feature coefficient, and the organizational relationship feature coefficients include an superior-subordinate relationship feature coefficient, a horizontal relationship feature coefficient, and a collaboration relationship feature coefficient. The processing module is specifically configured to obtain second user behavior feedback data, where the second user behavior feedback data is used to indicate importance of a historical text that has the same sender as the text. The processing module is further specifically configured to obtain a second correspondence, where the second correspondence is used to indicate an association relationship between the second user behavior feedback data and an affect coefficient of the second user behavior feedback data. The processing module is further specifically configured to obtain the affect coefficient of the second user behavior feedback data based on the second user behavior feedback data and the second correspondence. The processing module is further specifically configured to obtain the relationship feature coefficients based on the text, the user relationship information, and the affect coefficient of the second user behavior feedback data. According to the foregoing technical solution, the second user behavior feedback data may be obtained; the affect coefficient of the second user behavior feedback data is obtained based on the second user behavior feedback data and the second correspondence; the relationship feature coefficients are obtained based on the text, the user relationship information, and the affect coefficient of the second user behavior feedback data; and the importance of the text is determined based on the relationship feature coefficients, so that the importance of the text received or sent by the user can be recognized based on the relationships between the user and the receiver and the sender of the text.

In a possible implementation, the determining module is specifically configured to use the relationship feature coefficients as input data of a machine learning method, and determine the importance of the text by using the machine learning method. According to the foregoing technical solution, after the relationship feature coefficients are obtained, the relationship feature coefficients may be used as the input data of the machine learning method, and the importance of the text is determined by using the machine learning method, so that the importance of the text received or sent by the user can be recognized.

In a possible implementation, there are a plurality of texts of same importance. The apparatus further includes a sorting module. In this case, the processing module is further configured to perform a multiplication operation on coefficients in the relationship feature coefficients to obtain an importance coefficient of the text. The sorting module is configured to sort, based on the importance coefficient of the text, texts received or sent by the user. According to the foregoing technical solution, after the importance of the text is determined, if there are a plurality of texts of the same importance, a multiplication operation may be performed on the coefficients in the relationship feature coefficients to obtain the importance coefficient of the text, and the texts received or sent by the user are sorted based on the importance coefficient of the text. This allows the user to process the texts based on importance of the texts.

In a possible implementation, the determining module is specifically configured to perform a multiplication operation on coefficients in the relationship feature coefficients to obtain an importance coefficient of the text. The determining module is further specifically configured to determine the importance of the text based on the importance coefficient of the text. According to the foregoing technical solution, after the relationship feature coefficients are obtained, a multiplication operation may be performed on the coefficients in the relationship feature coefficients to obtain the importance coefficient of the text, and the importance of the text is determined based on the importance coefficient of the text. In this way, the importance of the text received or sent by the user can be recognized.

In a possible implementation, when there are a plurality of texts of same importance, the apparatus further includes a sorting module. The sorting module is configured to sort, based on the importance coefficient of the text, texts received or sent by the user. According to the foregoing technical solution, after the importance of the text is determined, when there are a plurality of texts of same importance, the texts received or sent by the user may be sorted based on importance coefficients of the texts. This allows the user to process the texts based on importance of the texts.

In a possible implementation, the apparatus further includes a display module. The display module is configured to classify and display the texts based on importance of the texts. According to the foregoing technical solution, the texts may be classified and displayed based on the importance of the texts, so that the user separately processes texts of different importance types.

According to a sixth aspect, an embodiment of this application provides a text recognition apparatus. The apparatus includes: an obtaining module, a processing module, and a determining module. The obtaining module is configured to obtain a text, profile information of a user, and user relationship information, where the text is a text received or sent by the user, the user profile information is used to indicate N keywords in a text related to the user, N is an integer greater than or equal to 1, and the user relationship information is used to indicate a hierarchical relationship between the user and another user. The processing module is configured to obtain content feature coefficients based on the text and the user profile information, where the content feature coefficients are used to indicate importance of content of the text. The processing module is further configured to obtain relationship feature coefficients based on the text and the user relationship information, where the relationship feature coefficients are used to indicate relationships between the user and a receiver of the text and/or a sender of the text. The determining module is configured to determine importance of the text based on the content feature coefficients and the relationship feature coefficients.

According to the technical solution provided in the sixth aspect, the text, the user profile information, and the user relationship information may be obtained, the content feature coefficients are obtained based on the text and the user profile information, the relationship feature coefficients are obtained based on the text and the user relationship information, and the importance of the text is determined based on the content feature coefficients and the relationship feature coefficients. In this way, the importance of the text received or sent by the user can be recognized based on the content of the text and the relationships between the user and the receiver and the sender of the text.

In a possible implementation, the user profile information includes N pieces of tag information, and the N pieces of tag information correspondingly indicate the N keywords; or the user profile information includes the N pieces of tag information and a weight of each piece of tag information in the N pieces of tag information. According to the foregoing technical solution, the content feature coefficients can be obtained based on the text and the N pieces of tag information, and the importance of the text can be determined based on the content feature coefficients and the relationship feature coefficients; or the content feature coefficients can be obtained based on the text, the N pieces of tag information, and the weight of each piece of tag information in the N pieces of tag information, and the importance of the text can be determined based on the content feature coefficients and the relationship feature coefficients. In this way, the importance of the text received or sent by the user can be recognized based on the content of the text, and the relationships between the user and the receiver and the sender of the text.

In a possible implementation, the content feature coefficients include N coefficients. The n^{th} coefficient is obtained based on the text and the n^{th} piece of tag information in the user profile information, and n is a positive integer greater than 0 and less than or equal to N. According to the foregoing technical solution, the n^{th} coefficient in the content feature coefficients can be obtained based on the text and the n^{th} piece of tag information in the user profile information, and the importance of the text can be determined based on the content feature coefficients and the relationship feature coefficients, so that the importance of the text received or sent by the user can be recognized based on the content of the text, and the relationships between the user and the receiver and the sender of the text.

In a possible implementation, the processing module is specifically configured to obtain first user behavior feedback data, where the first user behavior feedback data is used to indicate importance of a historical text that is highly similar to the content of the text. The processing module is further specifically configured to obtain a first correspondence, where the first correspondence is used to indicate an association relationship between the first user behavior feedback data and an affect coefficient of the first user behavior feedback data. The processing module is further specifically configured to obtain the affect coefficient of the first user behavior feedback data based on the first user behavior feedback data and the first correspondence. The processing module is further specifically configured to obtain the content feature coefficients based on the text, the user profile information, and the affect coefficient of the first user behavior feedback data. According to the foregoing technical solution, the first user behavior feedback data may be obtained; the affect coefficient of the first user behavior feedback data is obtained based on the first user behavior feedback data and the first correspondence; the content feature coefficients are obtained based on the text, the user relationship information, and the affect coefficient of the first user behavior feedback data; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user. According to the foregoing technical solution, the relationship feature coefficients may be obtained based on the text, the superior-subordinate relationship information of the user, the horizontal relationship information of the user, the collaboration relationship information, and the communicate relationship information of the user, and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a superior-subordinate relationship between the user and another user; the horizontal relationship information of the user includes a minimum unit organization of the user and another user; the collaboration relationship information includes indication information, and the indication information is used to indicate whether the user works in collaboration with another user; and the communicate relationship information of the user includes a frequency of communication between the user and another user. According to the foregoing technical solution, the relationship feature coefficients may be obtained based on the text, the superior-subordinate relationship between the user and another user, the minimum unit organization of the user and another user, the indication information, and the frequency of communication between the user and another user; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a weight of a superior-subordinate relationship between the user and another user, and the weight of the superior-subordinate relationship between the user and the another user is used to indicate a superior-subordinate relationship between the user and the another user. The horizontal relationship information of the user includes a weight of a minimum unit organization, and the weight of the minimum unit organization is used to indicate a minimum unit organization of the user and another user. The collaboration relationship information includes a collaboration relationship weight, and the collaboration relationship weight is used to indicate a collaboration relationship between the user and another user. The communicate relationship information of the user includes a communication frequency weight, and the communication frequency weight is used to indicate a frequency of communication between the user and another user. According to the foregoing technical solution, the relationship feature coefficients may be obtained based on the text, the weight of the superior-subordinate relationship between the user and the another user, the weight of the minimum unit organization, the collaboration relationship weight, and the communication frequency weight; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user. According to the foregoing technical solution, the superior-subordinate relationship feature coefficient may be obtained based on the superior-subordinate relationship information of the user, the horizontal relationship feature coefficient may be obtained based on the horizontal relationship information of the user, the collaboration relationship feature coefficient may be obtained based on the collaboration relationship information, and the communicate relationship feature coefficient may be obtained based on the communicate relationship information of the user; and the importance of the text is determined based on the content feature coefficients, the superior-subordinate relationship feature coefficient, the horizontal relationship feature coefficient, the collaboration relationship feature coefficient, and the communicate relationship feature coefficient, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include an superior-subordinate relationship feature coefficient, a horizontal relationship feature coefficient, and a collaboration relationship feature coefficient. The processing module is specifically configured to obtain second user behavior feedback data, where the second user behavior feedback data is used to indicate importance of a historical text that has the same sender as the text. The processing module is further specifically configured to obtain a second correspondence, where the second correspondence is used to indicate an association relationship between the second user behavior feedback data and an affect coefficient of the second user behavior feedback data. The processing module is further specifically configured to obtain the affect coefficient of the second user behavior feedback data based on the second user behavior feedback data and the second correspondence. The processing module is further specifically configured to obtain the relationship feature coefficients based on the text, the user relationship information, and the affect coefficient of the second user behavior feedback data. According to the foregoing technical solution, the second user behavior feedback data may be obtained; the affect coefficient of the second user behavior feedback data is obtained based on the second user behavior feedback data and the second correspondence; the relationship feature coefficients are obtained based on the text, the user relationship information, and the affect coefficient of the second user behavior feedback data; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the processing module is further configured to obtain a message affect range feature coefficient based on the text, where the message affect range feature coefficient is used to indicate a quantity of receivers of the text. The determining module is further configured to determine the importance of the text based on the message affect range feature coefficient. According to the foregoing technical solution, the message affect range feature coefficient may be obtained based on the text, and the importance of the text is determined based on the content feature coefficients, the relationship feature coefficients, and the message affect range feature coefficient. In this way, the importance of the text received or sent by the user can be recognized based on the content of the text, the relationships between the user and the receiver and the sender of the text, and the quantity of receivers of the text.

In a possible implementation, the processing module is further configured to obtain a relationship coefficient for the user and the receiver/sender based on the user relationship information, where the relationship coefficient for the user and the receiver/sender is used to indicate closeness of relationships/a relationship between the user and the receiver and/or the sender of the text. The determining module is further configured to determine the importance of the text based on the relationship coefficient for the user and the receiver/sender. According to the foregoing technical solution, the relationship coefficient for the user and the receiver/sender may be obtained based on the user relationship information, and the importance of the text is determined based on the content feature coefficients, the relationship feature coefficients, and the relationship coefficient for the user and the receiver/sender. In this way, the importance of the text received or sent by the user can be recognized based on the content of the text, the relationships between the user and the receiver and the sender of the text, and the closeness of the relationships/relationship between the user and the receiver and/or the sender of the text.

In a possible implementation, the determining module is specifically configured to use the content feature coefficients and the relationship feature coefficients as input data of a machine learning method, and determine the importance of the text by using the machine learning method. According to the foregoing technical solution, after the content feature coefficients and the relationship feature coefficients are obtained, the content feature coefficients and the relationship feature coefficients may be used as the input data of the machine learning method, and the importance of the text is determined by using the machine learning method, so that the importance of the text received or sent by the user can be recognized.

In a possible implementation, the determining module is specifically configured to use the content feature coefficients, the relationship feature coefficients, and the message affect range feature coefficient as input data of a machine learning method, and determine the importance of the text by using the machine learning method. According to the foregoing technical solution, after the content feature coefficients, the relationship feature coefficients, and the message affect range feature coefficient are obtained, the content feature coefficients, the relationship feature coefficients, and the message affect range feature coefficient may be used as the input data of the machine learning method, and the importance of the text is determined by using the machine learning method, so that the importance of the text received or sent by the user can be recognized.

In a possible implementation, the determining module is specifically configured to use the content feature coefficients, the relationship feature coefficients, the message affect range feature coefficient, and the relationship coefficient for the user and the receiver/sender as input data of a machine learning method, and determine the importance of the text by using the machine learning method. According to the foregoing technical solution, after the content feature coefficients, the relationship feature coefficients, the message affect range feature coefficient, and the relationship coefficient for the user and the receiver/sender are obtained, the content feature coefficients, the relationship feature coefficients, the message affect range feature coefficient, and the relationship coefficient for the user and the receiver/sender may be used as the input data of the machine learning method, and the importance of the text is determined by using the machine learning method, so that the importance of the text received or sent by the user can be recognized.

In a possible implementation, the content feature coefficients include N coefficients, and there are a plurality of texts of same importance. The apparatus further includes a sorting module. In this case, the processing module is further configured to perform a multiplication operation on a sum of coefficients in the content feature coefficients and a product of coefficients in the relationship feature coefficients to obtain an importance coefficient of the text. The sorting module is configured to sort, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients to obtain the importance coefficient of the text, and the texts received or sent by the user are sorted based on the importance coefficient of the text. This allows the user to process the texts based on importance of the texts.

In a possible implementation, the content feature coefficients include N coefficients, and there are a plurality of texts of same importance. The apparatus further includes a sorting module. In this case, the processing module is further configured to perform a multiplication operation on a sum of coefficients in the content feature coefficients and a product of coefficients in the relationship feature coefficients, and divide a result of the multiplication operation by the message affect range feature coefficient, to obtain an importance coefficient of the text. The sorting module is configured to sort, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text, and the texts received or sent by the user are sorted based on the importance coefficient of the text. This allows the user to process the texts based on importance of the texts.

In a possible implementation, the content feature coefficients include N coefficients, and there are a plurality of texts of same importance. The apparatus further includes a sorting module. In this case, the processing module is further configured to multiply a sum of coefficients in the content feature coefficients by a product of coefficients in the relationship feature coefficients and the relationship coefficient for the user and the receiver/sender, and divide a result of the multiplication operation by the message affect range feature coefficient, to obtain an importance coefficient of the text. The sorting module is configured to sort, based on the importance coefficient of the text, texts received or sent by the user. According to the foregoing technical solution, after the importance of the text is determined, if there are a plurality of texts of the same importance, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text, and the texts received or sent by the user are sorted based on the importance coefficient of the text. This allows the user to process the texts based on importance of the texts. In a possible implementation, the determining module is specifically configured to multiply a sum of coefficients in the content feature coefficients by a product of coefficients in the relationship feature coefficients, to obtain an importance coefficient of the text. The determining module is further specifically configured to determine the importance of the text based on the importance coefficient of the text. According to the foregoing technical solution, after the content feature coefficients and the relationship feature coefficients are obtained, a multiplication operation may be performed on the sum of coefficients in the content feature coefficients and the product of coefficients in the relationship feature coefficients to obtain the importance coefficient of the text, and the importance of the text is determined based on the importance coefficient of the text. In this way, the importance of the text received or sent by the user can be recognized.

In a possible implementation, the determining module is specifically configured to multiply a sum of coefficients in the content feature coefficients by a product of coefficients in the relationship feature coefficients, and divide a result of the multiplication operation by the message affect range feature coefficient, to obtain an importance coefficient of the text. The determining module is further specifically configured to determine the importance of the text based on the importance coefficient of the text. According to the foregoing technical solution, after the content feature coefficients, the relationship feature coefficients, and the message affect range feature coefficient are obtained, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text, and the importance of the text is determined based on the importance coefficient of the text. In this way, the importance of the text received or sent by the user can be recognized.

In a possible implementation, the determining module is specifically configured to multiply a sum of coefficients in the content feature coefficients by a product of coefficients in the relationship feature coefficients and the relationship coefficient for the user and the receiver/sender, and divide a result of the multiplication operation by the message affect range feature coefficient, to obtain an importance coefficient of the text. The determining module is further specifically configured to determine the importance of the text based on the importance coefficient of the text. According to the foregoing technical solution, after the content feature coefficients, the relationship feature coefficients, the message affect range feature coefficient, and the relationship coefficient for the user and the receiver/sender are obtained, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text, and the importance of the text is determined based on the importance coefficient of the text. In this way, the importance of the text received or sent by the user can be recognized.

In a possible implementation, when there are a plurality of texts of same importance, the apparatus further includes a sorting module. The sorting module is configured to sort, based on the importance coefficient of the text, texts received or sent by the user. According to the foregoing technical solution, after the importance of the text is determined, when there are a plurality of texts of same importance, the texts received or sent by the user may be sorted based on importance coefficients of the texts. This allows the user to process the texts based on importance of the texts.

In a possible implementation, the apparatus further includes a display module. The display module is configured to classify and display the texts based on importance of the texts. According to the foregoing technical solution, the texts may be classified and displayed based on the importance of the texts, so that the user separately processes texts of different importance types.

According to a seventh aspect, this application provides a text recognition apparatus. The apparatus may include at least one processor and a memory. The memory stores a software program, and the processor is configured to invoke the software program in the memory to execute the following process: obtaining a text and profile information of a user from the memory or a server, where the text is a text received or sent by the user, the user profile information is used to indicate N keywords in a text related to the user, N is an integer greater than or equal to 1, the server is connected to the text recognition apparatus, and the server stores the text and the user profile information; obtaining content feature coefficients based on the text and the user profile information, where the content feature coefficients are used to indicate importance of content of the text; and determining importance of the text based on the content feature coefficients.

According to the technical solution provided in the seventh aspect, the text and the user profile information may be obtained, the content feature coefficients may be obtained based on the text and the user profile information, and the importance of the text can be determined based on the content feature coefficients, so that the importance of the text received or sent by the user can be recognized based on the content of the text.

In a possible implementation, the user profile information includes N pieces of tag information, and the N pieces of tag information correspondingly indicate the N keywords; or the user profile information includes the N pieces of tag information and a weight of each piece of tag information in the N pieces of tag information. According to the foregoing technical solution, the content feature coefficients can be obtained based on the text and the N pieces of tag information, and the importance of the text can be determined based on the content feature coefficients; or the content feature coefficients can be obtained based on the text, the N pieces of tag information, and the weight of each piece of tag information in the N pieces of tag information, and the importance of the text can be determined based on the content feature coefficients. In this way, the importance of the text received or sent by the user can be recognized based on the content of the text.

In a possible implementation, the content feature coefficients include N coefficients. The n^{th} coefficient is obtained based on the text and the n^{th} piece of tag information in the user profile information, and n is a positive integer greater than 0 and less than or equal to N. According to the foregoing technical solution, the n^{th} coefficient in the content feature coefficients can be obtained based on the text and the n^{th} piece of tag information in the user profile information, and the importance of the text can be determined based on the content feature coefficients, so that the importance of the text received or sent by the user can be recognized based on the content of the text.

In a possible implementation, the obtaining content feature coefficients based on the text and the user profile information includes: obtaining first user behavior feedback data from the memory or the server, where the first user behavior feedback data is used to indicate importance of a historical text that is highly similar to the content of the text; obtaining a first correspondence from the memory or the server, where the first correspondence is used to indicate an association relationship between the first user behavior feedback data and an affect coefficient of the first user behavior feedback data; obtaining the affect coefficient of the first user behavior feedback data based on the first user behavior feedback data and the first correspondence; and obtaining the content feature coefficients based on the text, the user profile information, and the affect coefficient of the first user behavior feedback data. According to the foregoing technical solution, the first user behavior feedback data may be obtained, the affect coefficient of the first user behavior feedback data is obtained based on the first user behavior feedback data and the first correspondence, the content feature coefficients are obtained based on the text, the user profile information, and the affect coefficient of the first user behavior feedback data, and the importance of the text is determined based on the content feature coefficients. In this way, the importance of the text received or sent by the user can be recognized based on the content of the text.

In a possible implementation, the processor is further configured to invoke the software program in the memory to execute the following process: obtaining user relationship information from the memory or the server, where the user relationship information is used to indicate a hierarchical relationship between the user and another user; and obtaining relationship feature coefficients based on the text and the user relationship information, where the relationship feature coefficients are used to indicate relationships between the user and a receiver of the text and/or a sender of the text. The determining importance of the text further includes: determining the importance of the text based on the relationship feature coefficients. According to the foregoing technical solution, the user relationship information may be obtained, the relationship feature coefficients are obtained based on the text and the user relationship information, and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user. According to the foregoing technical solution, the relationship feature coefficients may be obtained based on the text, the superior-subordinate relationship information of the user, the horizontal relationship information of the user, the collaboration relationship information, and the communicate relationship information of the user, and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a superior-subordinate relationship between the user and another user; the horizontal relationship information of the user includes a minimum unit organization of the user and another user; the collaboration relationship information includes indication information, and the indication information is used to indicate whether the user works in collaboration with another user; and the communicate relationship information of the user includes a frequency of communication between the user and another user. According to the foregoing technical solution, the relationship feature coefficients may be obtained based on the text, the superior-subordinate relationship between the user and another user, the minimum unit organization of the user and another user, the indication information, and the frequency of communication between the user and another user; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a weight of a superior-subordinate relationship between the user and another user, and the weight of the superior-subordinate relationship between the user and the another user is used to indicate a superior-subordinate relationship between the user and the another user. The horizontal relationship information of the user includes a weight of a minimum unit organization, and the weight of the minimum unit organization is used to indicate a minimum unit organization of the user and another user. The collaboration relationship information includes a collaboration relationship weight, and the collaboration relationship weight is used to indicate a collaboration relationship between the user and another user. The communicate relationship information of the user includes a communication frequency weight, and the communication frequency weight is used to indicate a frequency of communication between the user and another user. According to the foregoing technical solution, the relationship feature coefficients may be obtained based on the text, the weight of the superior-subordinate relationship between the user and the another user, the weight of the minimum unit organization, the collaboration relationship weight, and the communication frequency weight; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user. According to the foregoing technical solution, the superior-subordinate relationship feature coefficient may be obtained based on the superior-subordinate relationship information of the user, the horizontal relationship feature coefficient may be obtained based on the horizontal relationship information of the user, the collaboration relationship feature coefficient may be obtained based on the collaboration relationship information, and the communicate relationship feature coefficient may be obtained based on the communicate relationship information of the user; and the importance of the text is determined based on the content feature coefficients, the superior-subordinate relationship feature coefficient, the horizontal relationship feature coefficient, the collaboration relationship feature coefficient, and the communicate relationship feature coefficient, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The obtaining relationship feature coefficients based on the text and the user relationship information includes: obtaining second user behavior feedback data from the memory or the server, where the second user behavior feedback data is used to indicate importance of a historical text that has the same sender as the text; obtaining a second correspondence, where the second correspondence is used to indicate an association relationship between the second user behavior feedback data and an affect coefficient of the second user behavior feedback data; obtaining the affect coefficient of the second user behavior feedback data based on the second user behavior feedback data and the second correspondence; and obtaining the relationship feature coefficients based on the text, the user relationship information, and the affect coefficient of the second user behavior feedback data. According to the foregoing technical solution, the second user behavior feedback data may be obtained; the affect coefficient of the second user behavior feedback data is obtained based on the second user behavior feedback data and the second correspondence; the relationship feature coefficients are obtained based on the text, the user relationship information, and the affect coefficient of the second user behavior feedback data; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the text includes an identifier of the receiver of the text. The processor is further configured to invoke the software program in the memory to execute the following process: obtaining a message affect range feature coefficient based on the identifier of the receiver of the text, where the message affect range feature coefficient is used to indicate a quantity of receivers of the text. The determining importance of the text further includes: determining the importance of the text based on the message affect range feature coefficient. According to the foregoing technical solution, the message affect range feature coefficient may be obtained based on the text, and the importance of the text is determined based on the content feature coefficients, the relationship feature coefficients, and the message affect range feature coefficient. In this way, the importance of the text received or sent by the user can be recognized based on the content of the text, the relationships between the user and the receiver and the sender of the text, and the quantity of receivers of the text.

In a possible implementation, the processor is further configured to invoke the software program in the memory to execute the following process: obtaining a relationship coefficient for the user and the receiver/sender based on the user relationship information, where the relationship coefficient for the user and the receiver/sender is used to indicate closeness of relationships/a relationship between the user and the receiver and/or the sender of the text. The determining importance of the text further includes: determining the importance of the text based on the relationship coefficient for the user and the receiver/sender. According to the foregoing technical solution, the relationship coefficient for the user and the receiver/sender may be obtained based on the user relationship information, and the importance of the text is determined based on the content feature coefficients, the relationship feature coefficients, and the relationship coefficient for the user and the receiver/sender. In this way, the importance of the text received or sent by the user can be recognized based on the content of the text, the relationships between the user and the receiver and the sender of the text, and the closeness of the relationships/relationship between the user and the receiver and/or the sender of the text.

In a possible implementation, the determining importance of the text based on the content feature coefficients includes: using the content feature coefficients as input data of a machine learning method, and determining the importance of the text by using the machine learning method. According to the foregoing technical solution, after the content feature coefficients are obtained, the content feature coefficients may be used as the input data of the machine learning method, and the importance of the text is determined by using the machine learning method, so that the importance of the text received or sent by the user can be recognized.

In a possible implementation, the determining importance of the text based on the content feature coefficients includes: using the content feature coefficients and the relationship feature coefficients as input data of a machine learning method, and determining the importance of the text by using the machine learning method. According to the foregoing technical solution, after the content feature coefficients and the relationship feature coefficients are obtained, the content feature coefficients and the relationship feature coefficients may be used as the input data of the machine learning method, and the importance of the text is determined by using the machine learning method, so that the importance of the text received or sent by the user can be recognized.

In a possible implementation, the determining importance of the text based on the content feature coefficients includes: using the content feature coefficients, the relationship feature coefficients, and the message affect range feature coefficient as input data of a machine learning method, and determining the importance of the text by using the machine learning method. According to the foregoing technical solution, after the content feature coefficients, the relationship feature coefficients, and the message affect range feature coefficient are obtained, the content feature coefficients, the relationship feature coefficients, and the message affect range feature coefficient may be used as the input data of the machine learning method, and the importance of the text is determined by using the machine learning method, so that the importance of the text received or sent by the user can be recognized.

In a possible implementation, the determining importance of the text based on the content feature coefficients includes: using the content feature coefficients, the relationship feature coefficients, the message affect range feature coefficient, and the relationship coefficient for the user and the receiver/sender as input data of a machine learning method, and determining the importance of the text by using the machine learning method. According to the foregoing technical solution, after the content feature coefficients, the relationship feature coefficients, the message affect range feature coefficient, and the relationship coefficient for the user and the receiver/sender are obtained, the content feature coefficients, the relationship feature coefficients, the message affect range feature coefficient, and the relationship coefficient for the user and the receiver/sender may be used as the input data of the machine learning method, and the importance of the text is determined by using the machine learning method, so that the importance of the text received or sent by the user can be recognized.

In a possible implementation, the content feature coefficients include N coefficients, and when there are a plurality of texts of same importance, the processor is further configured to invoke the software program in the memory to execute the following process: performing an addition operation on all or a part of the N coefficients in the content feature coefficients to obtain an importance coefficient of the text, and sorting, based on the importance coefficient of the text, texts received or sent by the user. According to the foregoing technical solution, after the importance of the text is determined, if there are a plurality of texts of the same importance, an addition operation may be performed on all or a part of the N coefficients in the content feature coefficients to obtain the importance coefficient of the text, and the texts received or sent by the user are sorted based on the importance coefficient of the text. This allows the user to process the texts based on importance of the texts.

In a possible implementation, the content feature coefficients include N coefficients, and when there are a plurality of texts of same importance, the processor is further configured to invoke the software program in the memory to execute the following process: performing a multiplication operation on a sum of coefficients in the content feature coefficients and a product of coefficients in the relationship feature coefficients to obtain an importance coefficient of the text, and sorting, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients to obtain the importance coefficient of the text, and the texts received or sent by the user are sorted based on the importance coefficient of the text. This allows the user to process the texts based on importance of the texts.

In a possible implementation, the content feature coefficients include N coefficients, and when there are a plurality of texts of same importance, the processor is further configured to invoke the software program in the memory to execute the following process: performing a multiplication operation on a sum of coefficients in the content feature coefficients and a product of coefficients in the relationship feature coefficients, and dividing a result of the multiplication operation by the message affect range feature coefficient, to obtain an importance coefficient of the text, and sorting, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text, and the texts received or sent by the user are sorted based on the importance coefficient of the text. This allows the user to process the texts based on importance of the texts.

In a possible implementation, the content feature coefficients include N coefficients, and when there are a plurality of texts of same importance, the processor is further configured to invoke the software program in the memory to execute the following process: multiplying a sum of coefficients in the content feature coefficients by a product of coefficients in the relationship feature coefficients and the relationship coefficient for the user and the receiver/sender, and dividing a result of the multiplication operation by the message affect range feature coefficient, to obtain an importance coefficient of the text, and sorting, based on the importance coefficient of the text, texts received or sent by the user. According to the foregoing technical solution, after the importance of the text is determined, if there are a plurality of texts of the same importance, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text, and the texts received or sent by the user are sorted based on the importance coefficient of the text. This allows the user to process the texts based on importance of the texts.

In a possible implementation, the determining importance of the text based on the content feature coefficients includes: performing an addition operation on all or a part of N coefficients in the content feature coefficients to obtain an importance coefficient of the text; and determining the importance of the text based on the importance coefficient of the text. According to the foregoing technical solution, after the content feature coefficients are obtained, an addition operation may be performed on all or a part of N coefficients in the content feature coefficients to obtain the importance coefficient of the text, and the importance of the text is determined based on the importance coefficient of the text. In this way, the importance of the text received or sent by the user can be recognized.

In a possible implementation, the determining importance of the text based on the content feature coefficients includes: performing a multiplication operation on a sum of coefficients in the content feature coefficients and a product of coefficients in the relationship feature coefficients to obtain an importance coefficient of the text; and determining the importance of the text based on the importance coefficient of the text. According to the foregoing technical solution, after the content feature coefficients and the relationship feature coefficients are obtained, a multiplication operation may be performed on the sum of coefficients in the content feature coefficients and the product of coefficients in the relationship feature coefficients to obtain the importance coefficient of the text, and the importance of the text is determined based on the importance coefficient of the text. In this way, the importance of the text received or sent by the user can be recognized.

In a possible implementation, the determining importance of the text based on the content feature coefficients includes: performing a multiplication operation on a sum of coefficients in the content feature coefficients and a product of coefficients in the relationship feature coefficients, and dividing a result of the multiplication operation by the message affect range feature coefficient, to obtain an importance coefficient of the text; and determining the importance of the text based on the importance coefficient of the text. According to the foregoing technical solution, after the content feature coefficients, the relationship feature coefficients, and the message affect range feature coefficient are obtained, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text, and the importance of the text is determined based on the importance coefficient of the text. In this way, the importance of the text received or sent by the user can be recognized.

In a possible implementation, the determining importance of the text based on the content feature coefficients includes: multiplying a sum of coefficients in the content feature coefficients by a product of coefficients in the relationship feature coefficients and the relationship coefficient for the user and the receiver/sender, and dividing a result of the multiplication operation by the message affect range feature coefficient, to obtain an importance coefficient of the text; and determining the importance of the text based on the importance coefficient of the text. According to the foregoing technical solution, after the content feature coefficients, the relationship feature coefficients, the message affect range feature coefficient, and the relationship coefficient for the user and the receiver/sender are obtained, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text, and the importance of the text is determined based on the importance coefficient of the text. In this way, the importance of the text received or sent by the user can be recognized.

In a possible implementation, when there are a plurality of texts of same importance, the processor is further configured to invoke the software program in the memory to execute the following process: sorting, based on the importance coefficient of the text, texts received or sent by the user. According to the foregoing technical solution, after the importance of the text is determined, when there are a plurality of texts of same importance, the texts received or sent by the user may be sorted based on importance coefficients of the texts. This allows the user to process the texts based on importance of the texts.

In a possible implementation, the processor is further configured to invoke the software program in the memory to execute the following process: classify and display the texts based on importance of the texts. According to the foregoing technical solution, the texts may be classified and displayed based on the importance of the texts, so that the user separately processes texts of different importance types.

According to an eighth aspect, this application provides a text recognition apparatus. The apparatus may include at least one processor and a memory, the memory stores a software program, and the processor invokes the software program in the memory to execute the following process: obtaining a text and relationship information of a user from the memory or a server, where the text is a text received or sent by the user, the user relationship information is used to indicate a hierarchical relationship between the user and another user, the server is connected to the text recognition apparatus, and the server stores the text and the user relationship information; obtaining relationship feature coefficients based on the text and the user relationship information, where the relationship feature coefficients are used to indicate relationships between the user and a receiver of the text and/or a sender of the text; and determining importance of the text based on the relationship feature coefficients.

According to the foregoing technical solution provided in the eighth aspect, the text and the user relationship information may be obtained, the relationship feature coefficients are obtained based on the text and the user relationship information, and the importance of the text is determined based on the relationship feature coefficients, so that the importance of the text received or sent by the user can be recognized based on the relationships between the user and the receiver and the sender of the text.

In a possible implementation, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user. According to the foregoing technical solution, the relationship feature coefficients may be obtained based on the text, the superior-subordinate relationship information of the user, the horizontal relationship information of the user, the collaboration relationship information, and the communicate relationship information of the user, and the importance of the text is determined based on the relationship feature coefficients, so that the importance of the text received or sent by the user can be recognized based on the relationships between the user and the receiver and the sender of the text.

In a possible implementation, the superior-subordinate relationship information of the user includes a superior-subordinate relationship between the user and another user; the horizontal relationship information of the user includes a minimum unit organization of the user and another user; the collaboration relationship information includes indication information, and the indication information is used to indicate whether the user works in collaboration with another user; and the communicate relationship information of the user includes a frequency of communication between the user and another user. According to the foregoing technical solution, the relationship feature coefficients may be obtained based on the text, the superior-subordinate relationship between the user and another user, the minimum unit organization of the user and another user, the indication information, and the frequency of communication between the user and another user; and the importance of the text is determined based on the relationship feature coefficients, so that the importance of the text received or sent by the user can be recognized based on the relationships between the user and the receiver and the sender of the text.

In a possible implementation, the superior-subordinate relationship information of the user includes a weight of a superior-subordinate relationship between the user and another user, and the weight of the superior-subordinate relationship between the user and the another user is used to indicate a superior-subordinate relationship between the user and the another user. The horizontal relationship information of the user includes a weight of a minimum unit organization, and the weight of the minimum unit organization is used to indicate a minimum unit organization of the user and another user. The collaboration relationship information includes a collaboration relationship weight, and the collaboration relationship weight is used to indicate a collaboration relationship between the user and another user. The communicate relationship information of the user includes a communication frequency weight, and the communication frequency weight is used to indicate a frequency of communication between the user and another user. According to the foregoing technical solution, the relationship feature coefficients may be obtained based on the text, the weight of the superior-subordinate relationship between the user and the another user, the weight of the minimum unit organization, the collaboration relationship weight, and the communication frequency weight; and the importance of the text is determined based on the relationship feature coefficients, so that the importance of the text received or sent by the user can be recognized based on the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user. According to the foregoing technical solution, the superior-subordinate relationship feature coefficient may be obtained based on the superior-subordinate relationship information of the user, the horizontal relationship feature coefficient may be obtained based on the horizontal relationship information of the user, the collaboration relationship feature coefficient may be obtained based on the collaboration relationship information, and the communicate relationship feature coefficient may be obtained based on the communicate relationship information of the user; and the importance of the text is determined based on the superior-subordinate relationship feature coefficient, the horizontal relationship feature coefficient, the collaboration relationship feature coefficient, and the communicate relationship feature coefficient, so that the importance of the text received or sent by the user can be recognized based on the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The obtaining relationship feature coefficients based on the text and the user relationship information includes: obtaining second user behavior feedback data from the memory or the server, where the second user behavior feedback data is used to indicate importance of a historical text that has the same sender as the text; obtaining a second correspondence, where the second correspondence is used to indicate an association relationship between the second user behavior feedback data and an affect coefficient of the second user behavior feedback data; obtaining the affect coefficient of the second user behavior feedback data based on the second user behavior feedback data and the second correspondence; and obtaining the relationship feature coefficients based on the text, the user relationship information, and the affect coefficient of the second user behavior feedback data. According to the foregoing technical solution, the second user behavior feedback data may be obtained; the affect coefficient of the second user behavior feedback data is obtained based on the second user behavior feedback data and the second correspondence; the relationship feature coefficients are obtained based on the text, the user relationship information, and the affect coefficient of the second user behavior feedback data; and the importance of the text is determined based on the relationship feature coefficients, so that the importance of the text received or sent by the user can be recognized based on the relationships between the user and the receiver and the sender of the text.

In a possible implementation, the determining importance of the text based on the relationship feature coefficients includes: using the relationship feature coefficients as input data of a machine learning method, and determining the importance of the text by using the machine learning method. According to the foregoing technical solution, after the relationship feature coefficients are obtained, the relationship feature coefficients may be used as the input data of the machine learning method, and the importance of the text is determined by using the machine learning method, so that the importance of the text received or sent by the user can be recognized.

In a possible implementation, when there are a plurality of texts of same importance, the processor is further configured to invoke the software program in the memory to execute the following process: performing a multiplication operation on coefficients in the relationship feature coefficients to obtain an importance coefficient of the text, and sorting, based on the importance coefficient of the text, texts received or sent by the user. According to the foregoing technical solution, after the importance of the text is determined, if there are a plurality of texts of the same importance, a multiplication operation may be performed on the coefficients in the relationship feature coefficients to obtain the importance coefficient of the text, and the texts received or sent by the user are sorted based on the importance coefficient of the text. This allows the user to process the texts based on importance of the texts. In a possible implementation, the determining importance of the text based on the relationship feature coefficients includes: performing a multiplication operation on coefficients in the relationship feature coefficients to obtain an importance coefficient of the text; and determining the importance of the text based on the importance coefficient of the text. According to the foregoing technical solution, after the relationship feature coefficients are obtained, a multiplication operation may be performed on the coefficients in the relationship feature coefficients to obtain the importance coefficient of the text, and the importance of the text is determined based on the importance coefficient of the text. In this way, the importance of the text received or sent by the user can be recognized.

In a possible implementation, when there are a plurality of texts of same importance, the processor is further configured to invoke the software program in the memory to execute the following process: sorting, based on the importance coefficient of the text, texts received or sent by the user. According to the foregoing technical solution, after the importance of the text is determined, when there are a plurality of texts of same importance, the texts received or sent by the user may be sorted based on importance coefficients of the texts. This allows the user to process the texts based on importance of the texts.

In a possible implementation, the processor is further configured to invoke the software program in the memory to execute the following process: classify and display the texts based on importance of the texts. According to the foregoing technical solution, the texts may be classified and displayed based on the importance of the texts, so that the user separately processes texts of different importance types.

According to a ninth aspect, this application provides a text recognition apparatus. The apparatus may include at least one processor and a memory, the memory stores a software program, and the processor is configured to invoke the software program in the memory to execute the following process: obtaining a text, profile information of a user, and user relationship information from the memory or a server, where the text is a text received or sent by the user, the user profile information is used to indicate N keywords in a text related to the user, N is an integer greater than or equal to 1, the user relationship information is used to indicate a hierarchical relationship between the user and another user, the server is connected to the text recognition apparatus, and the server stores the text, the user profile information, and the user relationship information; obtaining content feature coefficients based on the text and the user profile information, where the content feature coefficients are used to indicate importance of content of the text; obtaining relationship feature coefficients based on the text and the user relationship information, where the relationship feature coefficients are used to indicate relationships between the user and a receiver of the text and/or a sender of the text; and determining importance of the text based on the content feature coefficients and the relationship feature coefficients.

According to the technical solution provided in the ninth aspect, the text, the user profile information, and the user relationship information may be obtained, the content feature coefficients are obtained based on the text and the user profile information, the relationship feature coefficients are obtained based on the text and the user relationship information, and the importance of the text is determined based on the content feature coefficients and the relationship feature coefficients. In this way, the importance of the text received or sent by the user can be recognized based on the content of the text and the relationships between the user and the receiver and the sender of the text.

In a possible implementation, the user profile information includes N pieces of tag information, and the N pieces of tag information correspondingly indicate the N keywords; or the user profile information includes the N pieces of tag information and a weight of each piece of tag information in the N pieces of tag information. According to the foregoing technical solution, the content feature coefficients can be obtained based on the text and the N pieces of tag information, and the importance of the text can be determined based on the content feature coefficients and the relationship feature coefficients; or the content feature coefficients can be obtained based on the text, the N pieces of tag information, and the weight of each piece of tag information in the N pieces of tag information, and the importance of the text can be determined based on the content feature coefficients and the relationship feature coefficients. In this way, the importance of the text received or sent by the user can be recognized based on the content of the text, and the relationships between the user and the receiver and the sender of the text.

In a possible implementation, the content feature coefficients include N coefficients. The n^{th} coefficient is obtained based on the text and the n^{th} piece of tag information in the user profile information, and n is a positive integer greater than 0 and less than or equal to N. According to the foregoing technical solution, the n^{th} coefficient in the content feature coefficients can be obtained based on the text and the n^{th} piece of tag information in the user profile information, and the importance of the text can be determined based on the content feature coefficients and the relationship feature coefficients, so that the importance of the text received or sent by the user can be recognized based on the content of the text, and the relationships between the user and the receiver and the sender of the text.

In a possible implementation, the obtaining content feature coefficients based on the text and the user profile information includes: obtaining first user behavior feedback data from the memory or the server, where the first user behavior feedback data is used to indicate importance of a historical text that is highly similar to the content of the text; obtaining a first correspondence from the memory or the server, where the first correspondence is used to indicate an association relationship between the first user behavior feedback data and an affect coefficient of the first user behavior feedback data; obtaining the affect coefficient of the first user behavior feedback data based on the first user behavior feedback data and the first correspondence; and obtaining the content feature coefficients based on the text, the user profile information, and the affect coefficient of the first user behavior feedback data. According to the foregoing technical solution, the first user behavior feedback data may be obtained; the affect coefficient of the first user behavior feedback data is obtained based on the first user behavior feedback data and the first correspondence; the content feature coefficients are obtained based on the text, the user relationship information, and the affect coefficient of the first user behavior feedback data; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user. According to the foregoing technical solution, the relationship feature coefficients may be obtained based on the text, the superior-subordinate relationship information of the user, the horizontal relationship information of the user, the collaboration relationship information, and the communicate relationship information of the user, and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a superior-subordinate relationship between the user and another user; the horizontal relationship information of the user includes a minimum unit organization of the user and another user; the collaboration relationship information includes indication information, and the indication information is used to indicate whether the user works in collaboration with another user; and the communicate relationship information of the user includes a frequency of communication between the user and another user. According to the foregoing technical solution, the relationship feature coefficients may be obtained based on the text, the superior-subordinate relationship between the user and another user, the minimum unit organization of the user and another user, the indication information, and the frequency of communication between the user and another user; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the superior-subordinate relationship information of the user includes a weight of a superior-subordinate relationship between the user and another user, and the weight of the superior-subordinate relationship between the user and the another user is used to indicate a superior-subordinate relationship between the user and the another user. The horizontal relationship information of the user includes a weight of a minimum unit organization, and the weight of the minimum unit organization is used to indicate a minimum unit organization of the user and another user. The collaboration relationship information includes a collaboration relationship weight, and the collaboration relationship weight is used to indicate a collaboration relationship between the user and another user. The communicate relationship information of the user includes a communication frequency weight, and the communication frequency weight is used to indicate a frequency of communication between the user and another user. According to the foregoing technical solution, the relationship feature coefficients may be obtained based on the text, the weight of the superior-subordinate relationship between the user and the another user, the weight of the minimum unit organization, the collaboration relationship weight, and the communication frequency weight; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user. According to the foregoing technical solution, the superior-subordinate relationship feature coefficient may be obtained based on the superior-subordinate relationship information of the user, the horizontal relationship feature coefficient may be obtained based on the horizontal relationship information of the user, the collaboration relationship feature coefficient may be obtained based on the collaboration relationship information, and the communicate relationship feature coefficient may be obtained based on the communicate relationship information of the user; and the importance of the text is determined based on the content feature coefficients, the superior-subordinate relationship feature coefficient, the horizontal relationship feature coefficient, the collaboration relationship feature coefficient, and the communicate relationship feature coefficient, so that the importance of the text received or sent by the user can be recognized based on the content of the text and the relationships between the user and the receiver and the sender of the text.

In a possible implementation, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The obtaining relationship feature coefficients based on the text and the user relationship information includes: obtaining second user behavior feedback data from the memory or the server, where the second user behavior feedback data is used to indicate importance of a historical text that has the same sender as the text; obtaining a second correspondence from the memory or the server, where the second correspondence is used to indicate an association relationship between the second user behavior feedback data and an affect coefficient of the second user behavior feedback data; obtaining the affect coefficient of the second user behavior feedback data based on the second user behavior feedback data and the second correspondence; and obtaining the relationship feature coefficients based on the text, the user relationship information, and the affect coefficient of the second user behavior feedback data. According to the foregoing technical solution, the second user behavior feedback data may be obtained; the affect coefficient of the second user behavior feedback data is obtained based on the second user behavior feedback data and the second correspondence; the relationship feature coefficients are obtained based on the text, the user relationship information, and the affect coefficient of the second user behavior feedback data; and the importance of the text is determined based on the content feature coefficients and the relationship feature coefficients, so that the importance of the text received or sent by the user can be recognized based on the content of the text and the relationships between the user and the receiver and the sender of the text.

In a possible implementation, the processor is further configured to invoke the software program in the memory to execute the following process: obtaining a message affect range feature coefficient based on the text, where the message affect range feature coefficient is used to indicate a quantity of receivers of the text. The determining importance of the text further includes: determining the importance of the text based on the message affect range feature coefficient. According to the foregoing technical solution, the message affect range feature coefficient may be obtained based on the text, and the importance of the text is determined based on the content feature coefficients, the relationship feature coefficients, and the message affect range feature coefficient. In this way, the importance of the text received or sent by the user can be recognized based on the content of the text, the relationships between the user and the receiver and the sender of the text, and the quantity of receivers of the text.

In a possible implementation, the processor is further configured to invoke the software program in the memory to execute the following process: obtaining a relationship coefficient for the user and the receiver/sender based on the user relationship information, where the relationship coefficient for the user and the receiver/sender is used to indicate closeness of relationships/a relationship between the user and the receiver and/or the sender of the text. The determining importance of the text further includes: determining the importance of the text based on the relationship coefficient for the user and the receiver/sender. According to the foregoing technical solution, the relationship coefficient for the user and the receiver/sender may be obtained based on the user relationship information, and the importance of the text is determined based on the content feature coefficients, the relationship feature coefficients, and the relationship coefficient for the user and the receiver/sender. In this way, the importance of the text received or sent by the user can be recognized based on the content of the text, the relationships between the user and the receiver and the sender of the text, and the closeness of the relationships/relationship between the user and the receiver and/or the sender of the text.

In a possible implementation, the determining importance of the text based on the content feature coefficients and the relationship feature coefficients includes: using the content feature coefficients and the relationship feature coefficients as input data of a machine learning method, and determining the importance of the text by using the machine learning method. According to the foregoing technical solution, after the content feature coefficients and the relationship feature coefficients are obtained, the content feature coefficients and the relationship feature coefficients may be used as the input data of the machine learning method, and the importance of the text is determined by using the machine learning method, so that the importance of the text received or sent by the user can be recognized.

In a possible implementation, the determining importance of the text based on the content feature coefficients and the relationship feature coefficients includes: using the content feature coefficients, the relationship feature coefficients, and the message affect range feature coefficient as input data of a machine learning method, and determining the importance of the text by using the machine learning method. According to the foregoing technical solution, after the feature coefficient set is obtained, the content feature coefficients, the relationship feature coefficients, and the message affect range feature coefficient may be used as the input data of the machine learning method, and the importance of the text is determined by using the machine learning method, so that the importance of the text received or sent by the user can be recognized.

In a possible implementation, the determining importance of the text based on the content feature coefficients and the relationship feature coefficients includes: using the content feature coefficients, the relationship feature coefficients, the message affect range feature coefficient, and the relationship coefficient for the user and the receiver/sender as input data of a machine learning method, and determining the importance of the text by using the machine learning method. According to the foregoing technical solution, after the feature coefficient set is obtained, the content feature coefficients, the relationship feature coefficients, the message affect range feature coefficient, and the relationship coefficient for the user and the receiver/sender may be used as the input data of the machine learning method, and the importance of the text is determined by using the machine learning method, so that the importance of the text received or sent by the user can be recognized.

In a possible implementation, the content feature coefficients include N coefficients, and when there are a plurality of texts of same importance, the processor is further configured to invoke the software program in the memory to execute the following process: performing a multiplication operation on a sum of coefficients in the content feature coefficients and a product of coefficients in the relationship feature coefficients to obtain an importance coefficient of the text, and sorting, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients to obtain the importance coefficient of the text, and the texts received or sent by the user are sorted based on the importance coefficient of the text. This allows the user to process the texts based on importance of the texts.

In a possible implementation, the content feature coefficients include N coefficients, and when there are a plurality of texts of same importance, the processor is further configured to invoke the software program in the memory to execute the following process: performing a multiplication operation on a sum of coefficients in the content feature coefficients and a product of coefficients in the relationship feature coefficients, and dividing a result of the multiplication operation by the message affect range feature coefficient, to obtain an importance coefficient of the text, and sorting, based on the importance coefficient of the text, texts received or sent by the user. According to the foregoing technical solution, after the importance of the text is determined, if there are a plurality of texts of the same importance, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text, and the texts received or sent by the user are sorted based on the importance coefficient of the text. This allows the user to process the texts based on importance of the texts.

In a possible implementation, the content feature coefficients include N coefficients, and when there are a plurality of texts of same importance, the processor is further configured to invoke the software program in the memory to execute the following process: multiplying a sum of coefficients in the content feature coefficients by a product of coefficients in the relationship feature coefficients and the relationship coefficient for the user and the receiver/sender, and dividing a result of the multiplication operation by the message affect range feature coefficient, to obtain an importance coefficient of the text, and sorting, based on the importance coefficient of the text, texts received or sent by the user. According to the foregoing technical solution, after the importance of the text is determined, if there are a plurality of texts of the same importance, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text, and the texts received or sent by the user are sorted based on the importance coefficient of the text. This allows the user to process the texts based on importance of the texts.

In a possible implementation, the determining importance of the text based on the content feature coefficients and the relationship feature coefficients includes: performing a multiplication operation on a sum of coefficients in the content feature coefficients and a product of coefficients in the relationship feature coefficients to obtain an importance coefficient of the text; and determining the importance of the text based on the importance coefficient of the text. According to the foregoing technical solution, after the content feature coefficients and the relationship feature coefficients are obtained, a multiplication operation may be performed on the sum of coefficients in the content feature coefficients and the product of coefficients in the relationship feature coefficients to obtain the importance coefficient of the text, and the importance of the text is determined based on the importance coefficient of the text. In this way, the importance of the text received or sent by the user can be recognized.

In a possible implementation, the determining importance of the text based on the content feature coefficients and the relationship feature coefficients includes: performing a multiplication operation on a sum of coefficients in the content feature coefficients and a product of coefficients in the relationship feature coefficients, and dividing a result of the multiplication operation by the message affect range feature coefficient, to obtain an importance coefficient of the text; and determining the importance of the text based on the importance coefficient of the text. According to the foregoing technical solution, after the content feature coefficients, the relationship feature coefficients, and the message affect range feature coefficient are obtained, a multiplication operation may be performed on the sum of coefficients in the content feature coefficients and the product of coefficients in the relationship feature coefficients, and the result of the multiplication operation is divided by the message affect range feature coefficient, to obtain the importance coefficient of the text, and the importance of the text is determined based on the importance coefficient of the text. In this way, the importance of the text received or sent by the user can be recognized.

In a possible implementation, the determining importance of the text based on the content feature coefficients and the relationship feature coefficients includes: multiplying a sum of coefficients in the content feature coefficients by a product of coefficients in the relationship feature coefficients and the relationship coefficient for the user and the receiver/sender, and dividing a result of the multiplication operation by the message affect range feature coefficient, to obtain an importance coefficient of the text; and determining the importance of the text based on the importance coefficient of the text. According to the foregoing technical solution, after the content feature coefficients, the relationship feature coefficients, the message affect range feature coefficient, and the relationship coefficient for the user and the receiver/sender are obtained, the sum of coefficients in the content feature coefficients is multiplied by the product of coefficients in the relationship feature coefficients and the relationship coefficient for the user and the receiver/sender, and the result of the multiplication operation is divided by the message affect range feature coefficient, to obtain the importance coefficient of the text, and the importance of the text is determined based on the importance coefficient of the text. In this way, the importance of the text received or sent by the user can be recognized.

In a possible implementation, when there are a plurality of texts of same importance, the processor is further configured to invoke the software program in the memory to execute the following process: sorting, based on the importance coefficient of the text, texts received or sent by the user. According to the foregoing technical solution, after the importance of the text is determined, when there are a plurality of texts of same importance, the texts received or sent by the user may be sorted based on importance coefficients of the texts. This allows the user to process the texts based on importance of the texts.

In a possible implementation, the processor is further configured to invoke the software program in the memory to execute the following process: classify and display the texts based on importance of the texts. According to the foregoing technical solution, the texts may be classified and displayed based on the importance of the texts, so that the user separately processes texts of different importance types.

According to a tenth aspect, this application provides a system chip. The system chip may be applied to a text recognition apparatus. The system chip includes at least one processor, and related program instructions are executed in the at least one processor to implement the text recognition method according to any one of the first aspect and the possible implementations of the first aspect. Optionally, the system chip may further include at least one memory. The memory stores the related program instructions.

According to an eleventh aspect, this application provides a system chip. The system chip may be applied to a text recognition apparatus. The system chip includes at least one processor, and related program instructions are executed in the at least one processor to implement the text recognition method according to any two of the first aspect and the possible implementations of the second aspect. Optionally, the system chip may further include at least one memory. The memory stores the related program instructions.

According to a twelfth aspect, this application provides a system chip. The system chip may be applied to a text recognition apparatus. The system chip includes at least one processor, and related program instructions are executed in the at least one processor to implement the text recognition method according to any one of the third aspect and the possible implementations of the third aspect. Optionally, the system chip may further include at least one memory. The memory stores the related program instructions.

According to a thirteenth aspect, this application provides a computer storage medium. The computer storage medium may be applied to a text recognition apparatus, the computer-readable storage medium stores program instructions, and related program instructions are run, to implement the text recognition method according to the first aspect and the possible implementations of the first aspect.

According to a fourteenth aspect, this application provides a computer storage medium. The computer storage medium may be applied to a text recognition apparatus, the computer-readable storage medium stores program instructions, and related program instructions are run, to implement the text recognition method according to the second aspect and the possible implementations of the second aspect.

According to a fifteenth aspect, this application provides a computer storage medium. The computer storage medium may be applied to a text recognition apparatus, the computer-readable storage medium stores program instructions, and related program instructions are run, to implement the text recognition method according to the third aspect and the possible implementations of the third aspect.

According to a sixteenth aspect, this application provides a computer program product. The computer program product includes program instructions, and related program instructions are executed, to implement the text recognition method according to the first aspect and the possible implementations of the first aspect.

According to a seventeenth aspect, this application provides a computer program product. The computer program product includes program instructions, and related program instructions are executed, to implement the text recognition method according to the second aspect and the possible implementations of the second aspect.

According to an eighteenth aspect, this application provides a computer program product. The computer program product includes program instructions, and related program instructions are executed, to implement the text recognition method according to the third aspect and the possible implementations of the third aspect.

It may be understood that any system chip, computer storage medium, or computer program product provided above is configured to perform a corresponding method provided above. Therefore, for beneficial effects that can be achieved by the system chip, computer storage medium, or computer program product, refer to beneficial effects in the corresponding method. Details are not described herein again.

### BRIEF DESCRIPTION OF DRAWINGS

FIG. 1 is a schematic diagram of a display interface according to an embodiment of this application;
FIG. 2 is a schematic diagram of a hardware structure of a hardware device according to an embodiment of this application;
FIG. 3 is schematic flowchart 1 of a text recognition method according to an embodiment of this application;
FIG. 4 is schematic flowchart 2 of a text recognition method according to an embodiment of this application;
FIG. 5 is schematic flowchart 3 of a text recognition method according to an embodiment of this application;
FIG. 6 is schematic flowchart 4 of a text recognition method according to an embodiment of this application;
FIG. 7 is schematic flowchart 5 of a text recognition method according to an embodiment of this application;
FIG. 8 is schematic diagram 1 of a structure of a text recognition apparatus according to an embodiment of this application;
FIG. 9 is schematic diagram 2 of a structure of a text recognition apparatus according to an embodiment of this application;
FIG. 10 is schematic diagram 3 of a structure of a text recognition apparatus according to an embodiment of this application;
FIG. 11 is schematic diagram 4 of a structure of a text recognition apparatus according to an embodiment of this application;
FIG. 12 is schematic diagram 5 of a structure of a text recognition apparatus according to an embodiment of this application;
FIG. 13 is schematic diagram 6 of a structure of a text recognition apparatus according to an embodiment of this application;
FIG. 14 is schematic diagram 7 of a structure of a text recognition apparatus according to an embodiment of this application;
FIG. 15 is schematic diagram 8 of a structure of a text recognition apparatus according to an embodiment of this application; and
FIG. 16 is schematic diagram 9 of a structure of a text recognition apparatus according to an embodiment of this application.

### DESCRIPTION OF EMBODIMENTS

Currently, mobile office software (for example, Real Time eXpert, eSpace, and Outlook) has become an indispensable application in people's daily work. With mobile office software, a user receives or sends a large quantity of texts every day, but only a part of these texts is related to the user. Therefore, the user needs to select a text related to the user from the large quantity of texts. How to efficiently select the text related to the user from the large quantity of texts is an urgent problem to be resolved.

To resolve the problem of how to select the text related to the user from the large quantity of texts, the embodiments of this application provide a text recognition method. The method may be applied to an apparatus installed with mobile office software. After a user sends or receives a text, the text and user profile information may be obtained, content feature coefficients are obtained based on the text and the user profile information, and importance of the text is determined based on the content feature coefficients. In this way, the importance of the text can be determined based on content of the text. Therefore, a text related to the user can be automatically selected from a large quantity of texts. This is more efficient than manually obtaining a text related to the user through filtering in the current technology. Alternatively, after a user sends or receives a text, user relationship information and an identifier of a receiver of the text and/or an identifier of a sender of the text may be obtained, then relationship feature coefficients are obtained based on the user relationship information and the identifier of the receiver of the text and/or the identifier of the sender of the text, and importance of the text is determined based on the relationship feature coefficients. In this way, the importance of the text can be determined based on a relationship between the user and the receiver of the text and/or the sender of the text. Therefore, a text related to the user can be automatically selected from a large quantity of texts. This is more efficient than manually obtaining a text related to the user through filtering in the current technology.

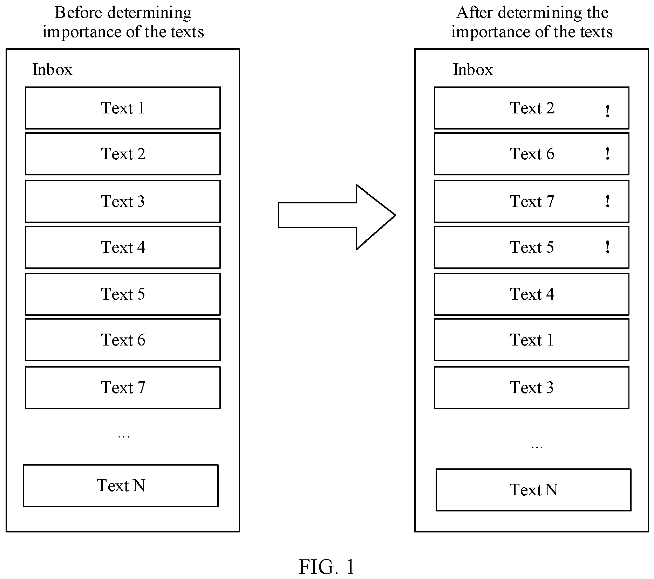

For example, FIG. 1 is a schematic diagram of a display interface according to an embodiment of this application. In FIG. 1, a user receives Text 1 to Text N, and there are N texts in total. A text recognition apparatus may obtain each text and user profile information, obtain content feature coefficients of each text based on the text and the user profile information, and determine importance of each text based on the content feature coefficients of each text. Text 2, Text 6, Text 7, and Text 5 are important texts (texts marked with exclamation marks in FIG. 1), and the rest are non-important texts.

The terms: text, user profile information, content feature coefficient, identifier of the receiver of the text (briefly referred to as identifier of the receiver below), identifier of the sender of the text (briefly referred to as identifier of the sender below), user relationship information, and relationship feature coefficient are described in the following. The text may be a text received or sent by the user, and the text may include an identifier of a receiver, an identifier of a sender, and content of the text. For example, the text may be an instant message received by the user through Real Time eXpert, or an email sent by the user through a mailbox. In the following embodiment of this application, an example in which the text is a text received by the user is used for description. For a case in which the text is a text sent by the user, refer to the description of the case in which the text is a text received by the user in the following embodiment of this application. Details are not described again.

The user profile information may be used to indicate N keywords in a user-related text. N is an integer greater than or equal to 1. For example, the user profile information may be used to indicate N words that appear frequently in a historical user-related text. For another example, the user profile information may be used to indicate a name of an important project.

The user profile information may include N pieces of tag information, and the N pieces of tag information correspond to the N keywords. For example, the N pieces of tag information may be {tag₁, tag₂, ..., tag_{N}}. Alternatively, the user profile information may include N pieces of tag information and a weight of each piece of tag information in the N pieces of tag information, for example, {tag₁, tag₂, ..., tag_{N}} and {tagVali, tagVal₂, ..., tagVal_{N}}, where tagVal₁ is a weight of tag₁, tagVal₂ is a weight of tag₂, ..., and tagVal_{N} is a weight of tag_{N}. The tag information may include one or more characters.

The user profile information may be set by the user or obtained based on historical texts sent or received by the user. For example, an important historical text of the user is obtained, words that appear frequently are extracted from the important text, a word that appears frequently is used as tag information, and a weight of each piece of tag information is set based on an occurrence frequency of each piece of tag information. A higher occurrence frequency of tag information indicates a greater weight of the label information.

The content feature coefficient may be used to indicate importance of content of a text.

There may be N content feature coefficients, and the n^{th} coefficient may be obtained based on the text and the n^{th} piece of tag information in the user profile information. Herein, n is an integer greater than 0 and less than or equal to N. The identifier of the receiver may be a user name of the receiver or an ID of the receiver. The ID of the receiver may include a number and a letter.

The identifier of the sender may be a user name of the sender or an ID of the sender. The ID of the sender may include a number and a letter.

The user relationship information may include organizational relationship information of the user and communicate relationship information of the user.

The organizational relationship information of the user may be used to indicate hierarchical relationships between the user and other users in an organization (briefly referred to as the user and other users).

Optionally, the organizational relationship information of the user includes superior-subordinate relationship information of the user, horizontal relationship information of the user, and collaboration relationship information of the user.

The following describes the superior-subordinate relationship information of the user.

The superior-subordinate relationship information of the user may be used to indicate superior-subordinate relationships between the user and other users. The superior-subordinate relationships between the user and other users may include a superior of the user, a peer of the user, a subordinate of the user, the absence of a superior-subordinate relationship, and the like.

In a possible implementation, the superior-subordinate relationship information of the user includes superior-subordinate relationships between the user and other users.

For example, superior-subordinate relationship information of user 1 may include {user 1, user 2, superior}, {user 1, user 3, peer}, {user 1, user 4, subordinate}, {user 1, user 5, no superior-subordinate relationship}, and the like. User 2 is a superior user of user 1, user 3 is a peer user of user 1, user 4 is a subordinate user of user 1, and user 5 does not have a superior-subordinate relationship with user 1.

In another possible implementation, the superior-subordinate relationship information of the user includes weights of the superior-subordinate relationships between the user and other users. A weight of a superior-subordinate relationship may be used to indicate a superior-subordinate relationship between the user and another user.

It should be noted that the weights of the superior-subordinate relationships between the user and other users may include: a weight of a superior-subordinate relationship between the user and a superior user, a weight of a superior-subordinate relationship between the user and a peer user, a weight of a superior-subordinate relationship between the user and a subordinate user, and a weight of a superior-subordinate relationship between the user and a user that does not have a superior-subordinate relationship with the user. The weight of the superior-subordinate relationship between the user and the superior user is greater than the weight of the superior-subordinate relationship between the user and the peer user. The weight of the superior-subordinate relationship between the user and the peer user is greater than the weight of the superior-subordinate relationship between the user and the subordinate user. The weight of the superior-subordinate relationship between the user and the subordinate user is greater than the weight of the superior-subordinate relationship between the user and the user that does not have a superior-subordinate relationship with the user.

For example, the weight of the superior-subordinate relationship between the user and the superior user is X, the weight of the superior-subordinate relationship between the user and the peer user is Y, the weight of the superior-subordinate relationship between the user and the subordinate user is Z. Superior-subordinate relationship information of user 1 includes {user 1, user 2, X}, {user 1, user 3, Y}, {user 1, user 4, Z}, {user 1, user 5, W}, and the like. In this case, user 2 is a superior of user 1, and X is a weight of a superior-subordinate relationship between user 1 and user 2. User 3 is a peer user of user 1, and Y is a weight of a superior-subordinate relationship between user 1 and user 3. User 4 is a subordinate of user 1, and Z is a weight of a superior-subordinate relationship between user 1 and user 4. User 5 is a user that does not have a superior-subordinate relationship with user 1, and W is a weight of a superior-subordinate relationship between user 1 and user 5. Herein, X > Y > Z > W. X, Y, Z, and W are positive numbers.

It should be noted that in addition to the superior of the user, the peer of the user, and the subordinate of the user, the superior-subordinate relationships between the user and other users may include other superior-subordinate relationships, for example, a superior of the superior of the user, a subordinate of the subordinate of the user, and the like. This is not limited in this embodiment of this application.

It should be noted that, in addition to the form in the foregoing example, the superior-subordinate relationship information of the user may be in another form, for example, a list form. This is not limited in this embodiment of this application.

The following describes the horizontal relationship information of the user.

The horizontal relationship information of the user may be used to indicate minimum unit organizations of the user and other users. A minimum unit organization of a user and another user may be described as an organization with the smallest quantity of users in organizations to which both the user and the another user belong.

The minimum unit organizations may be classified into a small organization, a large organization, a first organization, and the like. The large organization may include a plurality of small organizations, and the first organization may include a plurality of large organizations. For example, a minimum unit organization of user 1 is small organization 1 (that is, an organization with the smallest quantity of users in organizations to which user 1 belongs is small organization 1), a minimum unit organization of user 2 is small organization 1, a minimum unit organization of user 3 is small organization 2, and small organization 1 and small organization 2 are groups in large organization 1. In this case, a minimum cell organization of user 1 and user 2 is small organization 1, a minimum unit organization of user 1 and user 3 is large organization 1, and a minimum unit organization of user 2 and user 3 is also large organization 1. In a possible implementation, the horizontal relationship information of the user includes minimum unit organizations between the user and other users.

For example, horizontal relationship information of user 1 may include {user 1, user 2, small organization 1}, {user 1, user 3, small organization 1}, {user 1, user 4, large organization 1}, and the like. A minimum unit organization of user 1 and user 2 is small organization 1, a minimum unit organization of user 1 and user 3 is also small organization 1, and a minimum unit organization of user 1 and user 4 is large organization 1.

In another possible implementation, the horizontal relationship information of the user includes weights of minimum unit organizations. A weight of a minimum unit organization may be a weight of a minimum unit organization of the user and another user. A weight of a minimum unit organization may be used to indicate a minimum unit organization between the user and another user.

It should be noted that the weights of minimum unit organizations may include a weight of a small organization, a weight of a large organization, and a weight of a first organization. The weight of the small organization is greater than the weight of the large organization, and the weight of the large organization is greater than the weight of the first organization.

For example, the weight of the small organization is A, the weight of the large organization is B, the weight of the first organization is C, and horizontal relationship information of user 1 includes {user 1, user 2, A}, {user 1, user 3, B}, {user 1, user 4, C}, and the like. In this case, user 2 is a user in a small organization to which user 1 belongs, and A is a weight of a minimum unit organization of user 1 and user 2. User 3 is not a user in the small organization to which user 1 belongs, but user 3 is a user in a large organization to which user 1 belongs, and B is a weight of a minimum unit organization of user 1 and user 3. User 4 is not a user in the small organization or the large organization to which user 1 belongs, but user 4 is a user in a first organization to which user 1 belongs, and C is a weight of a minimum unit organization of user 1 and user 4. Herein, A > B > C. A, B, and C are positive numbers.

It should be noted that, in addition to the form in the foregoing example, the horizontal relationship information of the user may be in another form, for example, a list form. This is not limited in this embodiment of this application.

It should be noted that the minimum unit organizations may include another type of organization in addition to the small organization, the large organization, and the first organization. This is not limited in this embodiment of this application.

The following is an introduction to the collaboration relationship information.

The collaboration relationship information may be used to indicate whether the user works in collaboration with other users.

In a possible implementation, the collaboration relationship information includes indication information, and the indication information is used to indicate whether the user works in collaboration with another user.

Optionally, the indication information may be 1-bit indication information. For example, when the indication information is 0, it may indicate that the user does not work in collaboration with another user; when the indication information is 1, it may indicate that the user works in collaboration with another user; and vice versa.

For example, collaboration relationship information of user 1 may include {user 1, user 2, 0}, {user 1, user 3, 1}, {user 1, user 4, 1}, and the like. User 1 and user 2 do not work in collaboration, user 1 and user 3 work in collaboration, and user 1 and user 4 work in collaboration.

In another possible implementation, the collaboration relationship information includes collaboration relationship weights, and the collaboration relationship weights may be weights of collaboration relationships between the user and other users. A collaboration relationship weight of the user and another user may indicate a collaboration relationship between the user and the another user.

In a case, the collaboration relationship weights may include: a collaboration relationship weight for a case in which the user has a collaboration relationship with another user, and a collaboration relationship weight for a case in which the user does not have a collaboration relationship with another user. The collaboration relationship weight for a case in which the user has a collaboration relationship with another user is greater than the collaboration relationship weight for a case in which the user does not have a collaboration relationship with another user.

For example, the collaboration relationship weight for a case in which the user has a collaboration relationship with another user is P, and the collaboration relationship weight for a case in which the user does not have a collaboration relationship with another user is M. Collaboration relationship information of user 1 may include {user 1, user 2, P}, {user 1, user 3, M}, {user 1, user 4, M}, and the like. User 1 and user 2 work in collaboration, user 1 and user 3 do not work in collaboration, and user 1 and user 4 do not work in collaboration. P > M. P and M are positive numbers. In another case, the collaboration relationship weights may include: a collaboration relationship weight for a case in which the user does not have a collaboration relationship with another user, a collaboration relationship weight for a case in which the user has a collaboration relationship with another user in an important project, and a collaboration relationship weight for a case in which the user has a collaboration relationship with another user in a non-important project. The collaboration relationship weight for a case in which the user has a collaboration relationship with another user in an important project is greater than the collaboration relationship weight for a case in which the user has a collaboration relationship with another user in a non-important project, and the collaboration relationship weight for a case in which the user has a collaboration relationship with another user in a non-important project is greater than the collaboration relationship weight for a case in which the user does not have a collaboration relationship with another user.

For example, the collaboration relationship weight for a case in which the user does not have a collaboration relationship with another user is H, the collaboration relationship weight for a case in which the user has a collaboration relationship with another user in an important project is I, and the collaboration relationship weight for a case in which the user has a collaboration relationship with another user in a non-important project is J. Collaboration relationship information of user 1 may include {user 1, user 2, H}, {user 1, user 3, 1}, {user 1, user 4, J}, and the like. User 1 and user 2 do not work in collaboration, user 1 and user 3 work in collaboration in an important project, and user 1 and user 4 work in collaboration in a non-important project. I > J > H. I, J, and H are positive numbers.

The communicate relationship information of the user may be used to indicate a frequency of communication between the user and another user.

In a possible implementation, the communicate relationship information of the user includes a communication frequency, and the communication frequency is a frequency of communication between the user and another user. For example, if user 1 sends or receives 20 pieces of information to/from user 2 within a day, communicate relationship information of user 1 is 20.

In another possible implementation, the communicate relationship information of the user includes a communication frequency weight. The communication frequency weight is a weight of a frequency of communication between the user and another user. A communication frequency weight of the user and another user is used to indicate a frequency of communication between the user and the another user.

Optionally, a communication frequency weight is positively related to a frequency of communication between the user and another user. That is, a higher frequency of communication between the user and another user indicates a larger communication frequency weight, and a lower frequency of communication between the user and another user indicates a smaller communication frequency weight.

As shown in Table 1, if a frequency of communication between the user and another user is greater than or equal to 0 times/day and less than or equal to 10 times/day, a communication frequency weight is R; if a frequency of communication between the user and another user is greater than or equal to 11 times/day and less than or equal to 30 times/day, a communication frequency weight is S; if a frequency of communication between the user and another user is greater than or equal to 31 times/day, a communication frequency weight is T. Herein, T > S > R, and T, S, and R are positive numbers.

**Table 1**

| Communication frequency weights | Frequencies of communication between the user and other users (times/day) |
|---|---|
| R | 0-10 |
| s | 11-30 |
| T | 31 or more |

Relationship feature coefficients may be used to indicate relationships between the user and a receiver and/or a sender. The relationship feature coefficients may include organizational relationship feature coefficients and a communicate relationship feature coefficient. The organizational relationship feature coefficients may include a superior-subordinate relationship feature coefficient, a horizontal relationship feature coefficient, and a collaboration relationship feature coefficient.

If the user is a sender, the superior-subordinate relationship feature coefficient may include a superior-subordinate relationship feature coefficient for the user and each receiver, and the superior-subordinate relationship feature coefficient for the user and each receiver may be used to indicate a superior-subordinate relationship between the user and each receiver. The horizontal relationship feature coefficient may include a horizontal relationship feature coefficient for the user and each receiver, and the horizontal relationship feature coefficient for the user and each receiver may be used to indicate a minimum unit organization of the user and each receiver. The collaboration relationship feature coefficient may include a collaboration relationship feature coefficient for the user and each receiver, and the collaboration relationship feature coefficient for the user and each receiver may be used to indicate whether the user and each receiver work in collaboration. The communicate relationship feature coefficient may include a communicate relationship feature coefficient for the user and each receiver, and the communicate relationship feature coefficient for the user and each receiver may be used to indicate a frequency of communication between the user and each receiver.

If the user is the only receiver, the superior-subordinate relationship feature coefficient may include a superior-subordinate relationship feature coefficient for the user and a sender, and the superior-subordinate relationship feature coefficient for the user and the sender may be used to indicate a superior-subordinate relationship between the user and the sender. The horizontal relationship feature coefficient may include a horizontal relationship feature coefficient for the user and the sender, and the horizontal relationship feature coefficient for the user and the sender may be used to indicate a minimum unit organization of the user and the sender. The collaboration relationship feature coefficient may include a collaboration relationship feature coefficient for the user and the sender, and the collaboration relationship feature coefficient for the user and the sender may be used to indicate whether the user and the sender work in collaboration. The communicate relationship feature coefficient may include a communicate relationship feature coefficient for the user and the sender, and the communicate relationship feature coefficient for the user and the sender may be used to indicate a frequency of communication between the user and the sender.

If the user is one of a plurality of receivers, the superior-subordinate relationship feature coefficient may include a superior-subordinate relationship feature coefficient for the user and a sender, and a superior-subordinate relationship feature coefficient for the user and a receiver other than the user. The superior-subordinate relationship feature coefficient for the user and the receiver other than the user may be used to indicate a superior-subordinate relationship between the user and the receiver other than the user. The horizontal relationship feature coefficient may include a horizontal relationship feature coefficient for the user and the sender, and a horizontal relationship feature coefficient for the user and a receiver other than the user. The horizontal relationship feature coefficient for the user and the receiver other than the user may be used to indicate a minimum unit organization of the user and the receiver other than the user. The collaboration relationship feature coefficient may include a collaboration relationship feature coefficient for the user and the sender, and a collaboration relationship feature coefficient for the user and a receiver other than the user. The collaboration relationship feature coefficient for the user and the receiver other than the user may be used to indicate whether the user and the receiver other than the user work in collaboration. The communicate relationship feature coefficient may include a communicate relationship feature coefficient for the user and the sender, and a communicate relationship feature coefficient for the user and a receiver other than the user. The communicate relationship feature coefficient for the user and the receiver other than the user may be used to indicate a frequency of communication between the user and the receiver other than the user.

The text recognition apparatus provided in the embodiments of this application may be a function module in a device. It may be understood that the foregoing function module may be an element in a hardware device, for example, a chip in a mobile phone, or may be a software function running on dedicated hardware, or may be a virtual function instantiated on a platform (for example, a cloud platform).

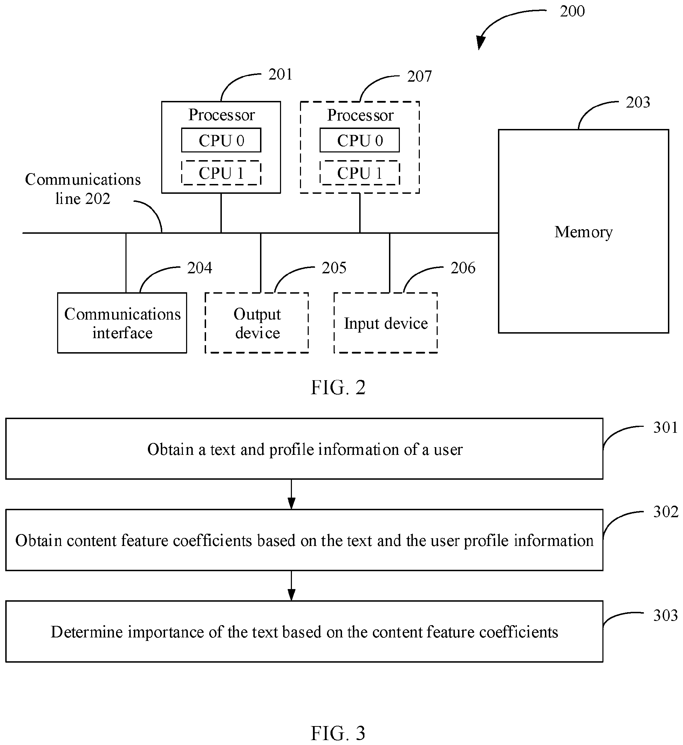

For example, the text recognition apparatus may be implemented by using the hardware device 200 in FIG. 2. FIG. 2 is a schematic diagram of a hardware structure of the hardware device applicable to an embodiment of this application. The hardware device 200 includes at least one processor 201, a communications line 202, a memory 203, and at least one communications interface 204.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communications line 202 may include a path such as a bus for transmitting information between the foregoing components.

The communications interface 204 is configured to communicate with another device or a communications network by using any apparatus such as a transceiver, and is, for example, an Ethernet interface, a radio access network (radio access network, RAN) interface, or a wireless local area network (wireless local area networks, WLAN) interface. The memory 203 may be a read-only memory (read-only memory, ROM) or another type of static storage device that can store static information and instructions, or a random access memory (random access memory, RAM) or another type of dynamic storage device that can store information and instructions. The memory 203 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or magnetic disk storage medium or another magnetic storage device, or any other medium that can be used to carry or store expected program code in a form of instructions or a data structure and that is accessible by a computer, but is not limited thereto. The memory may exist independently, and is connected to the processor through the communications line 202. The memory may alternatively be integrated with the processor. The memory provided in this embodiment of this application may usually be non-volatile. The memory 203 is configured to store a computer-executable instruction for executing the solution in this application, and execution is controlled by the processor 201. The processor 201 is configured to execute the computer-executable instruction stored in the memory 203, to implement the method provided in the embodiments of this application.

Optionally, the computer-executable instructions in this embodiment of this application may also be referred to as application program code. This is not specifically limited in this embodiment of this application.

In specific implementation, in an embodiment, the processor 201 may include one or more CPUs, for example, the CPU 0 and the CPU 1 in FIG. 2.

In specific implementation, in an embodiment, the hardware device 200 may include a plurality of processors, for example, the processor 201 and the processor 207 in FIG. 2. Each of the processors may be a single-core (single-CPU) processor or a multi-core (multi-CPU) processor. The processor herein may be one or more devices, circuits, and/or processing cores configured to process data (for example, computer program instructions).

In specific implementation, in an embodiment, the hardware device 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, a projector (projector), or the like. The input device 206 communicates with the processor 201, and may receive a user input in a plurality of manners. For example, the input device 206 may be a mouse, a keyboard, a touchscreen device, or a sensing device.

The foregoing hardware device 200 may be a general-purpose device or a dedicated device. During specific implementation, the hardware device 200 may be a desktop computer, a portable computer, a palmtop computer (personal digital assistant, PDA), a mobile phone, a tablet computer, a wireless terminal device, an embedded device, or a device with a structure similar to that in FIG. 2. A type of the hardware device 200 is not limited in this embodiment of this application.

The text recognition method provided in the embodiments of this application is specifically described below by using an example in which the text is a text received by the user.

It should be noted that a name of information, a name of a parameter, or the like in the following embodiments of this application is merely an example, and another name may also be used in specific implementation. This is not specifically limited in the embodiments of this application.

It may be understood that, in the embodiments of this application, the text recognition apparatus may perform some or all of steps in the embodiments of this application, and these steps are merely examples. In the embodiments of this application, another step or various step variations may be performed. In addition, the steps may be performed in a sequence different from a sequence presented in the embodiments of this application, and not all steps in the embodiments of this application need to be performed.

### Embodiment 1

After a user receives a text, the text recognition apparatus may obtain the text and user profile information, obtain content feature coefficients based on the text and the user profile information, and determine importance of the text based on the content feature coefficients, so that the importance of the text can be determined based on content of the text. As shown in FIG. 3, the text recognition method may include step 301 to step 303.

Step 301: Obtain a text and user profile information.

For description of the text and the user profile information, refer to the description of the foregoing terms. Details are not described herein again.

Optionally, the obtaining a text and user profile information includes: obtaining the text and the user profile information from a remote end (for example, a server) and/or locally.

The server may be connected to the text recognition apparatus, and the server stores the text and/or the user profile information.

The following describes a specific process of obtaining the text and the user profile information with reference to FIG. 2.

For example, if the text and the user profile information are stored in the memory 203, the processor 201 invokes an interface to obtain the text and the user profile information from the memory 203.

For another example, if the text is stored in the memory 203, and the user profile information is stored in the server, the processor 201 invokes an interface to obtain the text from the memory 203, and the processor 201 sends a request to the server by using the communications interface 204. The request includes an identifier of the user. After receiving the request, the server sends the user profile information. The processor 201 receives the user profile information through the communications interface 204.

It should be noted that, in step 301, the text may be replaced with content of the text. Subsequently, content feature coefficients may be obtained based on the content of the text and the user profile information.

Step 302: Obtain the content feature coefficients based on the text and the user profile information.

For description of the content feature coefficient, refer to the description of the foregoing term. Details are not described herein again.

Optionally, a content feature coefficient is positively related to importance of a text. In other words, when other feature coefficients remain unchanged, a larger content feature coefficient indicates higher importance of a text.

For a specific process of step 302, refer to the following examples.

Example 1: If the user profile information includes N pieces of tag information, a content feature coefficient may be determined based on a quantity of times that tag information in the user profile information appears in a text.

For example, if the n^{th} piece of tag information in the user profile information appears in the text, a coefficient corresponding to the n^{th} piece of tag information may be 1; if the n^{th} piece of tag information in the user profile information does not appear in the text, the coefficient corresponding to the n^{th} piece of tag information may be 0. For another example, the content feature coefficient may be determined based on a correspondence shown in Table 2. In Table 2, if the n^{th} piece of tag information in the user profile information does not appear in the text, a coefficient corresponding to the n^{th} piece of tag information may be 0; if a quantity of times that the n^{th} piece of tag information in the user profile information appears in the text is greater than or equal to 1 and less than or equal to 8, the coefficient corresponding to the n^{th} piece of tag information may be 1; if a quantity of times that the n^{th} piece of tag information in the user profile information appears in the text is greater than or equal to 9, the coefficient corresponding to the n^{th} piece of tag information may be 2.

**Table 2**

| Quantity of times tag information appears in the text | Coefficient corresponding to the tag information |
|---|---|
| 0 | 0 |
| 1 to 8 | 1 |
| 9 or more | 2 |

Example 2: If the user profile information includes N pieces of tag information and a weight of each piece of tag information in the N pieces of tag information, a content feature coefficient may be determined based on a quantity of times that tag information in the user profile information appears in a text and a weight of the tag information. For example, a first parameter of the n^{th} piece of tag information may be obtained based on a quantity of times that the n^{th} piece of tag information in the user profile information appears in the text, and a product of the first parameter of the n^{th} piece of tag information and a weight of the n^{th} piece of tag information is used as a coefficient corresponding to the n^{th} piece of tag information.

For example, the user profile information includes {tag₁, tag₂, tag₃} and {tagVal₁, tagVal₂, tagVal₃}; tag₁ and tag₂ do not appear in the text, and tag₃ appears in the text; if tag information appears in the text, a first parameter of the tag information is 1; if tag information does not appear in the text, a first parameter of the tag information is 0. In this case, first parameters of tag₁ and tag₂ are 0, a first parameter of tag₃ is 1, coefficients corresponding to tag₁ and tag₂ are 0, and a coefficient corresponding to tag₃ is tagVal₃. In this case, the content feature coefficients are {0, 0, tagVal₃}. Example 3: If the user profile information includes N pieces of tag information, a keyword of a text may be extracted from the text, a similarity between the keyword of the text and each piece of tag information is obtained, and the similarity is used as a content feature coefficient.

Optionally, the keyword of the text may include a word and/or a phrase extracted from the text, for example, a word and/or a phrase extracted from the text by using word segmentation software (for example, jieba software, ansj software, or HanLP software). The keyword of the text may include one or more words and/or phrases.

Further, optionally, the keyword of the text includes tag information or a synonym (or a similar word) of the tag information.

A similarity between the keyword of the text and tag information may be used to indicate a degree of similarity between the keyword of the text and the tag information. Similarities between the keyword of the text and tag information may include two types: sameness and differentness, or may include three types: sameness, differentness, and closeness.

For example, the keyword of the text may be compared with tag information. If characters included in the keyword and characters included in the tag information are the same, it is determined that the keyword of the text is the same as the tag information. If a quantity of characters that are in the characters included in the keyword and the tag information and that are different from each other is greater than or equal to a first preset threshold, it is determined that the keyword of the text is different from the tag information. If different characters exist in the characters included in the keyword and the tag information, and a quantity of the different characters is less than or equal to a second preset threshold, it is determined that the keyword of the text is close to the tag information.

For example, in this embodiment of this application, 0, 1, and 2 may be used to indicate similarities between the keyword of the text and the tag information. For example, if the keyword of the text is the same as the tag information, a similarity between the keyword of the text and the tag information is 1, and a coefficient corresponding to the tag information is 1. If the keyword of the text is different from the tag information, a similarity between the keyword of the text and the tag information is 0, and a coefficient corresponding to the tag information is 0. A person skilled in the art should understand that a similarity between the keyword of the text and the tag information may alternatively be represented in another manner or character. This is not limited.

Example 4: If the user profile information includes N pieces of tag information and a weight of each piece of tag information in the N pieces of tag information, a keyword of a text may be extracted from the text, a similarity between the keyword of the text and each piece of tag information is obtained, a multiplication operation is performed on the n^{th} similarity and a weight of tag information corresponding to the similarity, to obtain the n^{th} second parameter, and the n^{th} second parameter is used as the n^{th} coefficient in the content feature coefficients.

For example, the user profile information includes {tag₁, tag₂, ..., tag_{N}} and {tagVal₁, tagVal₂, ..., tagVal_{N}}. Similarities between the keyword of the text and all the tag information in the user profile information are {similarCoff₁, similarCoff₂, ..., similarCoff_{N}} (similarCoff₁ is a similarity between the keyword of the text and tag₁, similarCoff₂ is a similarity between the keyword of the text and tag₂, and so on). The content feature coefficients may be {contentCoff₁, contentCoff₂, ..., contentCoff_{N}}, where contentCoffₙ = similarCoffₙ ^{∗} tagValₙ.

Further, optionally, the n^{th} second parameter is used as a parameter of a first function, a value of the first function is used as the n^{th} coefficient in the content feature coefficients, and a derivative of the function is greater than and equal to 0.

For example, the user profile information includes {tag₁, tag₂, ..., tag_{N}} and {tagVali, tagVal₂, ..., tagVal_{N}}. Similarities between the keyword of the text and all the tag information in the user profile information are {similarCoff₁, similarCoff₂, ..., similarCoff_{N}} (similarCoff₁ is a similarity between the keyword of the text and tag₁, similarCoff₂ is a similarity between the keyword of the text and tag₂, and so on). The content feature coefficients may be {contentCoff₁, contentCoff₂, ..., contentCoff_{N}}. Herein, contentCoffₙ = Function(x). Function(x) is a function of x, *F*unction*'*(x) ≥ 0 , and x = similarCoffₙ ^{∗} tagValₙ.

Optionally, the content feature coefficients may alternatively be obtained based on the text, the user profile information, and first user behavior feedback data.

The first user behavior feedback data may be used to indicate importance of a historical text that is highly similar to the content of the text. The first user behavior feedback data may be obtained in step 301, or may be obtained before step 302. Subsequently, an affect coefficient of the first user behavior feedback data may be obtained based on the first user behavior feedback data. After the content feature coefficients are obtained according to the method described in Example 1 to Example 4, the content feature coefficients may be corrected by using the affect coefficient of the first user behavior feedback data, so that corrected content feature coefficients are more accurate. For details, refer to the description in the following example 5.

Example 5: The affect coefficient of the first user behavior feedback data may be obtained based on the first user behavior feedback data, and an addition or subtraction operation is performed on the affect coefficient of the first user behavior feedback data and the content feature coefficients obtained in the method described in Example 1 to Example 4, to obtain more accurate content feature coefficients.

The affect coefficient of the first user behavior feedback data may be used to indicate importance of a historical text that is highly similar to the content of the text.

Optionally, an affect coefficient of first user behavior feedback data is positively related to importance of a text. In other words, when other feature coefficients remain unchanged, a larger affect coefficient of first user behavior feedback data indicates higher importance of a text.

Optionally, obtaining the affect coefficient of the first user behavior feedback data based on the first user behavior feedback data includes: obtaining a first correspondence, where the first correspondence is used to indicate an association relationship between the affect coefficient of the first user behavior feedback data and the first user behavior feedback data; and determining the affect coefficient of the first user behavior feedback data based on the first user behavior feedback data and the first correspondence.

The first correspondence may be preset, and is stored in the memory 203 in FIG. 2 or the server.

Optionally, the obtaining a first correspondence includes obtaining the first correspondence from the memory 203 in FIG. 2 or the server.

Table 3 shows a correspondence between the affect coefficient of the first user behavior feedback data and the first user behavior feedback data. In Table 3, if the first user behavior feedback data indicates that the historical text that is highly similar to the content of the text is an important text, the affect coefficient of the first user behavior feedback data is a; if the first user behavior feedback data indicates that the historical text that is highly similar to the content of the text is a non-important text, the affect coefficient of the first user behavior feedback data is -a.

**Table 3**

| | |
|---|---|
| User behavior feedback data | Affect coefficient of the user behavior feedback data |
| Indicating that the historical text that is highly similar to the content of the text is an important text | a |
| Indicating that the historical text that is highly similar to the content of the text is a non-important text | -a |

For example, the content feature coefficients obtained in the method described in Example 1 to Example 4 are {contentCoff₁, contentCoff₂, ..., contentCoff_{N}}, and the correspondence between the affect coefficient of the first user behavior feedback data and the first user behavior feedback data is shown in Table 3. If the first user behavior feedback data indicates that the historical text that is highly similar to the content of the text is an important text, the affect coefficient of the first user behavior feedback data is a. In this case, new content feature coefficients obtained with reference to the affect coefficient of the first user behavior feedback data are {contentCoff₁ + a, contentCoff₂ + a, ..., contentCoff_{N} + a}.

Step 303: Determine importance of the text based on the content feature coefficients.

In a possible implementation, the determining importance of the text based on the content feature coefficients includes: using the content feature coefficients as input data of a machine learning method, and determining the importance of the text by using the machine learning method.

Text importance may have a plurality of forms, for example, important text and non-important text. For another example, texts may be classified into a tier-1 important text, a tier-2 important text, a tier-3 important text, and a non-important text. Importance of the tier-1 important text is greater than importance of the tier-2 important text, the importance of the tier-2 important text is greater than importance of the tier-3 important text, and the importance of the tier-3 important text is greater than importance of the non-important text.

The machine learning method may include a conventional machine learning method and a deep learning method. The conventional machine learning method may include a linear discriminant analysis (linear discriminant analysis, LDA) learning method, a support vector machine (support vector machine, SVM) learning method, an reinforcement learning method (adboost), and the like.

The deep learning method may include a deep neural network (deep neural networks, DNN), a convolutional neural network (convolutional neural networks, CNN), a recurrent neural network (recurrent neural networks, RNN), and the like.

Optionally, when there are a plurality of texts of same importance (for example, there are a plurality of tier-1 important texts), after the determining importance of the text based on the content feature coefficients, the method further includes: performing an addition operation on all or a part of the N coefficients in the content feature coefficients to obtain an importance coefficient of the text; and sorting, based on the importance coefficient of the text, texts received or sent by the user.

Optionally, the performing an addition operation on all or a part of the N coefficients in the content feature coefficients to obtain an importance coefficient of the text includes: calculating the importance coefficient of the text according to a formula: textImportantCoff = contentCoff₁ + contentCoff₂ + ... + contentCoff_{N}. Herein, textImportantCoff is the importance coefficient of the text, and contentCoff₁, contentCoff₂, ..., and contentCoff_{N} are the content feature coefficients.

In another possible implementation, the determining importance of the text based on the content feature coefficients includes: performing an addition operation on all or a part of the N coefficients in the content feature coefficients to obtain an importance coefficient of the text; and determining the importance of the text based on the importance coefficient of the text.

The performing an addition operation on all or a part of the N coefficients in the content feature coefficients to obtain an importance coefficient of the text may include: calculating the importance coefficient of the text according to a formula: textImportantCoff = contentCoff₁ + contentCoff₂ + ... + contentCoff_{N}.

Optionally, the determining the importance of the text based on the importance coefficient of the text includes: if the importance coefficient of the text is greater than or equal to a first threshold, determining that the text is an important text; or determining the importance of the text based on a correspondence between an importance coefficient of a text and importance of the text.

Table 4 shows a correspondence between an importance coefficient of a text and importance of the text. In Table 4, if the importance coefficient of the text is greater than or equal to 9, the importance of the text is tier-1 important text; if the importance coefficient of the text is 6 to 8, the importance of the text is tier-2 important text; if the importance coefficient of the text is 2 to 5, the importance of the text is tier-3 important text; if the importance coefficient of the text is 0 to 1, the importance of the text is non-important text.

**Table 4**

| Importance coefficient of a text | Importance of the text |
|---|---|
| Greater than or equal to 9 | Tier-1 important text |
| 6-8 | Tier-2 important text |
| 2-5 | Tier-3 important text |
| 0-1 | Non-important text |

It should be noted that Table 4 is merely an example of the correspondence between an importance coefficient of a text and importance of the text. In actual application, the correspondence between an importance coefficient of a text and importance of the text may alternatively be in another form. In addition, the correspondence between an importance coefficient of a text and importance of the text may be one row in Table 1, some rows in Table 1, or all the rows of Table 1, or there may be more correspondences than those shown in Table 1. This is not specifically limited in this application.

Further, optionally, when there are a plurality of texts of same importance, after the determining importance of the text based on the content feature coefficients, the method further includes: sorting, based on the importance coefficient of the text, texts received or sent by the user.

Optionally, after the importance of the text is determined based on the content feature coefficients, the texts are classified and displayed based on importance of the texts. For example, the processor 201 in FIG. 2 may display, in a classification manner, the texts in the output device 205 based on importance of the texts by invoking an interface (for example, display an important text before a non-important text).

Optionally, if the user changes the device, the importance of the texts in the old device may be transmitted to a new device by using the following two methods.

Method 1: Identifiers of the texts, the importance of the texts, and/or importance coefficients of the texts are extracted from a data storage area of the old device by using a display instruction, and are encrypted, and the encrypted identifiers, importance, and/or importance coefficients of the texts are transmitted to the server in a network security transmission manner. The new device may download the encrypted identifiers, importance, and/or importance coefficients of the texts from the server by using a display instruction.

Manner 2: The identifiers of the texts, the importance of the texts, and/or the importance coefficients of the texts in the old device are directly copied to the new device.

According to the method shown in FIG. 3, the text and the user profile information may be obtained, the content feature coefficients are obtained based on the text and the user profile information, and the importance of the text is determined based on the content feature coefficients, so that the importance of the text can be determined based on the content of the text.

### Embodiment 2

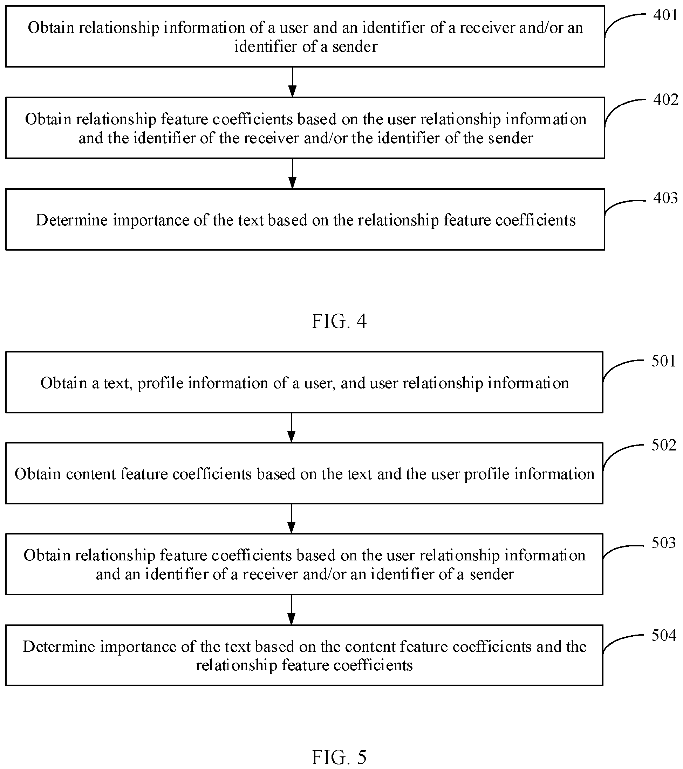

After a user receives a text, user relationship information and an identifier of a receiver and/or an identifier of a sender may be obtained, relationship feature coefficients are obtained based on the user relationship information and the identifier of the receiver and/or the identifier of the sender, and importance of the text is determined based on the relationship feature coefficients. In this way, the importance of the text can be determined based on relationships between the user and the receiver and/or the sender. As shown in FIG. 4, the text recognition method may include step 401 to step 403.

Step 401: Obtain relationship information of a user and an identifier of a receiver and/or an identifier of a sender. For description of the user relationship information and the identifier of the receiver and/or the identifier of the sender, refer to the description of the foregoing terms. Details are not described herein again.

Optionally, the obtaining relationship information of a user and an identifier of a receiver and/or an identifier of a sender includes: obtaining the user relationship information and the identifier of the receiver and/or the identifier of the sender from a remote end (for example, a server) and/or locally.

The server may be connected to the text recognition apparatus, and the server stores the identifier of the receiver, the identifier of the sender, and/or the user relationship information.

The following describes, with reference to FIG. 2, the step of obtaining relationship information of a user and an identifier of a receiver and/or an identifier of a sender.

For example, if the text and the user relationship information are stored in the memory 203, the processor 201 invokes an interface to obtain the user relationship information and the identifier of the receiver and/or the identifier of the sender from the memory 203.

For another example, if the text is stored in the memory 203, and the user relationship information is stored in the server, the processor 201 invokes an interface to obtain the identifier of the receiver and/or the identifier of the sender from the memory 203, and the processor 201 sends a request to the server by using the communications interface 204. The request includes an identifier of the user. After receiving the request, the server sends the user relationship information. The processor 201 receives the user relationship information through the communications interface 204. Optionally, if the user is the sender, the identifier of the receiver and the user relationship information are obtained. If the user is the only receiver of the text, the identifier of the sender and the user relationship information are obtained. If the user is one of a plurality of receivers, the identifier of the receiver, the identifier of the sender, and the user relationship information are obtained.

It should be noted that, when there is no personnel change, the user relationship information is generally fixed. Therefore, the user relationship information may be obtained when a text is sent or received for the first time. Subsequently, when a new text is received or sent, the user relationship information does not need to be obtained again, and only an identifier of a receiver and/or an identifier of a sender need/needs to be obtained. Subsequently, when there is a personnel change (for example, someone is promoted or resigned), an administrator may send a notification message to the text recognition apparatus after updating the change locally or to the server. After receiving the notification message, the text recognition apparatus obtains user relationship information again.

Step 402: Obtain relationship feature coefficients based on the user relationship information and the identifier of the receiver and/or the identifier of the sender.

Optionally, a relationship feature coefficient is positively related to importance of a text. In other words, when other feature coefficients remain unchanged, a larger relationship feature coefficient indicates higher importance of a text. The user relationship information may include organizational relationship information of the user and communicate relationship information of the user. The organizational relationship information of the user includes superior-subordinate relationship information of the user, horizontal relationship information of the user, and collaboration relationship information of the user. For description of the superior-subordinate relationship information of the user, the horizontal relationship information of the user, the collaboration relationship information, and the communicate relationship information of the user, refer to the description of the foregoing terms. Details are not described again. The relationship feature coefficients include organizational relationship feature coefficients and a communicate relationship feature coefficient. The organizational relationship feature coefficients may include a superior-subordinate relationship feature coefficient, a horizontal relationship feature coefficient, and a collaboration relationship feature coefficient. For description of the superior-subordinate relationship feature coefficient, the horizontal relationship feature coefficient, the collaboration relationship feature coefficient, and the communicate relationship feature coefficient, refer to the description of the above terms. Details are not described herein.

The organizational relationship feature coefficients may be obtained based on the organizational relationship information of the user. The communicate relationship feature coefficient may be obtained based on the communicate relationship information of the user.

Optionally, that the organizational relationship feature coefficients may be obtained based on the organizational relationship information of the user includes: obtaining the superior-subordinate relationship feature coefficient based on the superior-subordinate relationship information of the user, obtaining the horizontal relationship feature coefficient based on the horizontal relationship information of the user, and obtaining the collaboration relationship feature coefficient based on the collaboration relationship information.

The superior-subordinate relationship feature coefficient may be obtained based on the superior-subordinate relationship information of the user in the following four cases:
Case 1: The user is the only receiver, and the superior-subordinate relationship information of the user includes superior-subordinate relationships between the user and other users.

If the user is the only receiver, the superior-subordinate relationship feature coefficient may include a superior-subordinate relationship feature coefficient for the user and the sender. The obtaining the superior-subordinate relationship feature coefficient based on the superior-subordinate relationship information of the user includes: obtaining a superior-subordinate relationship between the user and the sender from the superior-subordinate relationships between the user and other users, and obtaining the superior-subordinate relationship feature coefficient for the user and the sender based on the superior-subordinate relationship between the user and the sender.

In a possible implementation, the obtaining the superior-subordinate relationship feature coefficient for the user and the sender based on the superior-subordinate relationship between the user and the sender includes: determining the superior-subordinate relationship feature coefficient for the user and the sender based on the superior-subordinate relationship between the user and the sender according to a setting rule for a superior-subordinate relationship feature coefficient.

The setting rule for a superior-subordinate relationship feature coefficient may be as follows: A superior-subordinate relationship feature coefficient for the user and a superior user is greater than a superior-subordinate relationship feature coefficient for the user and a peer user; the superior-subordinate relationship feature coefficient for the user and the peer user is greater than a superior-subordinate relationship feature coefficient for the user and a subordinate user; and the superior-subordinate relationship feature coefficient for the user and the subordinate user is greater than a superior-subordinate relationship feature coefficient for the user and a user that does not have a superior-subordinate relationship with the user.

For example, superior-subordinate relationship information of user 1 includes {user 1, user 2, superior}, {user1, user3, peer}, {user 1, user 4, subordinate}, and {user 1, user 5, do not have a superior-subordinate relationship}. In the example, the superior-subordinate relationship feature coefficient for the user and the superior user is 6, the superior-subordinate relationship feature coefficient for the user and the peer user is 4, the superior-subordinate relationship feature coefficient for the user and the subordinate user is 2, and the superior-subordinate relationship feature coefficient for the user and the user that does not have a superior-subordinate relationship with the user is 0.01. If the identifier of the sender is user 2, the superior-subordinate relationship feature coefficient for the user and the sender may be 6. If the identifier of the sender is user 3, the superior-subordinate relationship feature coefficient for the user and the sender may be 4. If the identifier of the sender is user 4, the superior-subordinate relationship feature coefficient for the user and the sender may be 2. If the identifier of the sender is user 5, the superior-subordinate relationship feature coefficient for the user and the sender may be 0.01.

Case 2: The user is the only receiver, and the superior-subordinate relationship information of the user may include weights of superior-subordinate relationships between the user and other users.

If the user is the only receiver, the superior-subordinate relationship feature coefficient may include a superior-subordinate relationship feature coefficient for the user and the sender. The obtaining the superior-subordinate relationship feature coefficient based on the superior-subordinate relationship information of the user includes: obtaining a weight of a superior-subordinate relationship between the user and the sender from the weights of the superior-subordinate relationships between the user and other users, and obtaining the superior-subordinate relationship feature coefficient for the user and the sender based on the weight of the superior-subordinate relationship between the user and the sender.

In a possible implementation, the obtaining the superior-subordinate relationship feature coefficient for the user and the sender based on the weight of the superior-subordinate relationship between the user and the sender includes: using the weight of the superior-subordinate relationship between the user and the sender as the superior-subordinate relationship feature coefficient for the user and the sender.

For example, superior-subordinate relationship information of user 1 includes {user 1, user 2, X}, {user 1, user 3, Y}, {user 1, user 4, Z}, {user 1, user 5, W}. Herein, X is a weight of a superior-subordinate relationship between user 1 and user 2, Y is a weight of a superior-subordinate relationship between user 1 and user 3, Z is a weight of a superior-subordinate relationship between user 1 and user 4, and W is a weight of a superior-subordinate relationship between user 1 and user 5. If the identifier of the sender is user 2, the superior-subordinate relationship feature coefficient for the user and the sender may be X. If the identifier of the sender is user 3, the superior-subordinate relationship feature coefficient for the user and the sender may be Y. If the identifier of the sender is user 4, the superior-subordinate relationship feature coefficient for the user and the sender may be Z. If the identifier of the sender is user 5, the superior-subordinate relationship feature coefficient for the user and the sender may be W.

It should be noted that, in addition to using the weight of the superior-subordinate relationship between the user and the sender as the superior-subordinate relationship feature coefficient for the user and the sender, the weight of the superior-subordinate relationship between the user and the sender may be processed (for example, a number is added to the weight or a number is subtracted from the weight), and processed data is used as the superior-subordinate relationship feature coefficient for the user and the sender. The processed data needs to meet the foregoing setting rule for a superior-subordinate relationship feature coefficient.

Case 3: The user is one of a plurality of receivers, and the superior-subordinate relationship information of the user may include superior-subordinate relationships between the user and other users.

If the user is one of a plurality of receivers, the superior-subordinate relationship feature coefficient includes a superior-subordinate relationship feature coefficient for the user and the sender, and a superior-subordinate relationship feature coefficient for the user and a receiver other than the user. The obtaining the superior-subordinate relationship feature coefficient based on the superior-subordinate relationship information of the user includes: obtaining a superior-subordinate relationship between the user and the sender and a superior-subordinate relationship between the user and the receiver other than the user from the superior-subordinate relationships between the user and other users; and obtaining the superior-subordinate relationship feature coefficient for the user and the sender based on the superior-subordinate relationship between the user and the sender, and obtaining the superior-subordinate relationship feature coefficient for the user and the receiver other than the user based on the superior-subordinate relationship between the user and the receiver other than the user.

For specific description of obtaining the superior-subordinate relationship feature coefficient for the user and the sender based on the superior-subordinate relationship between the user and the sender, refer to the description in the foregoing Case 1. Details are not described again.

For specific description of obtaining the superior-subordinate relationship feature coefficient for the user and the receiver other than the user based on the superior-subordinate relationship between the user and the receiver other than the user, refer to the description of obtaining the superior-subordinate relationship feature coefficient for the user and the sender based on the superior-subordinate relationship between the user and the sender in Case 1. Details are not described again.

Case 4: The user is one of a plurality of receivers, and the superior-subordinate relationship information of the user may include weights of superior-subordinate relationships between the user and other users.

If the user is one of a plurality of receivers, the superior-subordinate relationship feature coefficient includes a superior-subordinate relationship feature coefficient for the user and the sender, and a superior-subordinate relationship feature coefficient for the user and a receiver other than the user. The obtaining the superior-subordinate relationship feature coefficient based on the superior-subordinate relationship information of the user includes: obtaining a weight of a superior-subordinate relationship between the user and the sender and a weight of a superior-subordinate relationship between the user and the receiver other than the user from the weights of the superior-subordinate relationships between the user and other users; and obtaining the superior-subordinate relationship feature coefficient for the user and the sender based on the weight of the superior-subordinate relationship between the user and the sender, and obtaining the superior-subordinate relationship feature coefficient for the user and the receiver other than the user based on the weight of the superior-subordinate relationship between the user and the receiver other than the user.

For specific description of obtaining the superior-subordinate relationship feature coefficient for the user and the sender based on the weight of the superior-subordinate relationship between the user and the sender, refer to the description in the foregoing Case 2. Details are not described again.

For specific description of obtaining the superior-subordinate relationship feature coefficient for the user and the receiver other than the user based on the weight of the superior-subordinate relationship between the user and the receiver other than the user, refer to the description of obtaining the superior-subordinate relationship feature coefficient for the user and the sender based on the weight of the superior-subordinate relationship between the user and the sender in Case 2. Details are not described again.

The horizontal relationship feature coefficient may be obtained based on the horizontal relationship information of the user in the following four cases:
Case 5: The user is the only receiver, and the horizontal relationship information of the user includes minimum unit organizations of the user and other users.

If the user is the only receiver, the horizontal relationship feature coefficient includes a horizontal relationship feature coefficient for the user and the sender. The obtaining the horizontal relationship feature coefficient based on the horizontal relationship information of the user includes: obtaining a minimum unit organization of the user and the sender from the minimum unit organizations of the user and other users, and obtaining the horizontal relationship feature coefficient for the user and the sender based on the minimum unit organization of the user and the sender.

In a possible implementation, the obtaining the horizontal relationship feature coefficient for the user and the sender based on the minimum unit organization of the user and the sender includes: determining the horizontal relationship feature coefficient for the user and the sender based on the minimum unit organization of the user and the sender according to a setting rule for a horizontal relationship feature coefficient.

The setting rule for a horizontal relationship feature coefficient may be as follows: A horizontal relationship feature coefficient for users in a small organization is greater than a horizontal relationship feature coefficient for users in a large organization, and the horizontal relationship feature coefficient for users in a large organization is greater than a horizontal relationship feature coefficient for users in a first organization.

For example, horizontal relationship information of user 1 includes {user 1, user 2, small organization 1}, {user 1, user 3, small organization 1}, and {user 1, user 4, large organization 1}. In the example, the horizontal relationship feature coefficient for users in a small organization is 5, the horizontal relationship feature coefficient for users in a large organization is 2, and the horizontal relationship feature coefficient for users in a first organization is 0.01. If the identifier of the sender is user 2, the horizontal relationship feature coefficient for the user and the sender may be 5. If the identifier of the sender is user 3, the horizontal relationship feature coefficient for the user and the sender may be 2. If the identifier of the sender is user 4, the horizontal relationship feature coefficient for the user and the sender may be 0.01.

Case 6: The user is the only receiver, and the horizontal relationship information of the user includes weights of minimum unit organizations of the user and other users.

If the user is the only receiver, the horizontal relationship feature coefficient includes a horizontal relationship feature coefficient for the user and the sender. The obtaining the horizontal relationship feature coefficient based on the horizontal relationship information of the user includes: obtaining a weight of a minimum unit organization of the user and the sender from the weights of the minimum unit organizations of the user and other users, and obtaining the horizontal relationship feature coefficient for the user and the sender based on the weight of the minimum unit organization of the user and the sender.

In a possible implementation, the obtaining the horizontal relationship feature coefficient for the user and the sender based on the weight of the minimum unit organization of the user and the sender includes: using the weight of the minimum unit organization of the user and the sender as the horizontal relationship feature coefficient for the user and the sender.

For example, horizontal relationship information of user 1 includes {user 1, user 2, A}, {user 1, user 3, B}, and {user 1, user 4, C}. In the example, A is a weight of a minimum unit organization of user 1 and user 2, B is a weight of a minimum unit organization of user 1 and user 3, and C is a weight of a minimum unit organization of user 1 and user 4. If the identifier of the sender is user 2, the horizontal relationship feature coefficient for the user and the sender may be A. If the identifier of the sender is user 3, the horizontal relationship feature coefficient for the user and the sender may be B. If the identifier of the sender is user 4, the horizontal relationship feature coefficient for the user and the sender may be C.

It should be noted that, in addition to using the weight of the minimum unit organization of the user and the sender as the horizontal relationship feature coefficient for the user and the sender, the weight of the minimum unit organization of the user and the sender may be processed (for example, a number is added to the weight or a number is subtracted from the weight), and processed data is used as the horizontal relationship feature coefficient for the user and the sender. The processed data needs to meet the foregoing setting rule for a horizontal relationship feature coefficient. Case 7: The user is one of a plurality of receivers, and the horizontal relationship information of the user includes minimum unit organizations of the user and other users.

If the user is one of a plurality of receivers, the horizontal relationship feature coefficient includes a horizontal relationship feature coefficient for the user and the sender, and a horizontal relationship feature coefficient for the user and a receiver other than the user. The obtaining the horizontal relationship feature coefficient based on the horizontal relationship information of the user includes: obtaining a minimum unit organization of the user and the sender and a minimum unit organization of the user and the receiver other than the user from the minimum unit organizations of the user and other users; obtaining the horizontal relationship feature coefficient for the user and the sender based on the minimum unit organization of the user and the sender; and obtaining the horizontal relationship feature coefficient for the user and the receiver other than the user based on the minimum unit organization of the user and the receiver other than the user.

For specific description of obtaining the horizontal relationship feature coefficient for the user and the sender based on the minimum unit organization of the user and the sender, refer to the description in the foregoing Case 5. Details are not described again.

For specific description of obtaining the horizontal relationship feature coefficient for the user and the receiver other than the user based on the minimum unit organization of the user and the receiver other than the user, refer to the description of obtaining the horizontal relationship feature coefficient for the user and the sender based on the minimum unit organization of the user and the sender in Case 5. Details are not described again.

Case 8: The user is one of a plurality of receivers, and the horizontal relationship information of the user includes weights of minimum unit organizations of the user and other users.

If the user is one of a plurality of receivers, the horizontal relationship feature coefficient includes a horizontal relationship feature coefficient for the user and the sender, and a horizontal relationship feature coefficient for the user and a receiver other than the user. The obtaining the horizontal relationship feature coefficient based on the horizontal relationship information of the user includes: obtaining a weight of a minimum unit organization of the user and the sender and a weight of a minimum unit organization of the user and the receiver other than the user from the weights of the minimum unit organizations of the user and other users; obtaining the horizontal relationship feature coefficient for the user and the sender based on the weight of the minimum unit organization of the user and the sender; and obtaining the horizontal relationship feature coefficient for the user and the receiver other than the user based on the weight of the minimum unit organization of the user and the receiver other than the user.

For specific description of obtaining the horizontal relationship feature coefficient for the user and the sender based on the weight of the minimum unit organization of the user and the sender, refer to the description in the foregoing Case 6. Details are not described again.

For specific description of obtaining the horizontal relationship feature coefficient for the user and the receiver other than the user based on the weight of the minimum unit organization of the user and the receiver other than the user, refer to the description of obtaining the horizontal relationship feature coefficient for the user and the sender based on the weight of the minimum unit organization of the user and the sender in Case 6. Details are not described again. The collaboration relationship feature coefficient may be obtained based on the collaboration relationship information in the following four cases:
Case 9: The user is the only receiver, and the collaboration relationship information includes indication information indicating whether the user works in collaboration with other users.

If the user is the only receiver, the collaboration relationship feature coefficient includes a collaboration relationship feature coefficient for the user and the sender. The obtaining the collaboration relationship feature coefficient based on the collaboration relationship information includes: obtaining, from the indication information indicating whether the user works in collaboration with other users, indication information indicating whether the user works in collaboration with the sender, and obtaining the collaboration relationship feature coefficient for the user and the sender based on the indication information indicating whether the user works in collaboration with the sender.

In a possible implementation, the obtaining the collaboration relationship feature coefficient for the user and the sender based on the indication information indicating whether the user works in collaboration with the sender includes: determining, according to a setting rule for a collaboration relationship feature coefficient, the collaboration relationship feature coefficient for the user and the sender based on the indication information indicating whether the user works in collaboration with the sender.

It is assumed that the collaboration relationship feature coefficient includes: a collaboration relationship feature coefficient for a case in which the user has a collaboration relationship with another user, and a collaboration relationship feature coefficient for a case in which the user does not have a collaboration relationship with another user. In this case, the setting rule for a collaboration relationship feature coefficient may be as follows: The collaboration relationship feature coefficient for a case in which the user has a collaboration relationship with another user is greater than the collaboration relationship feature coefficient for a case in which the user does not have a collaboration relationship with another user. It is assumed that the collaboration relationship feature coefficient includes: a collaboration relationship feature coefficient for a case in which the user does not have a collaboration relationship with another user, a collaboration relationship feature coefficient for a case in which the user has a collaboration relationship with another user in an important project, and a collaboration relationship feature coefficient for a case in which the user has a collaboration relationship with another user in a non-important project. In this case, the setting rule for a collaboration relationship feature coefficient may be as follows: The collaboration relationship feature coefficient for a case in which the user has a collaboration relationship with another user in an important project is greater than the collaboration relationship feature coefficient for a case in which the user has a collaboration relationship with another user in a non-important project, and the collaboration relationship feature coefficient for a case in which the user has a collaboration relationship with another user in a non-important project is greater than the collaboration relationship feature coefficient for a case in which the user does not have a collaboration relationship with another user.

For example, collaboration relationship information of user 1 includes {user 1, user 2, 0}, {user 1, user 3, 1}, and {user 1, user 4, 1}. Herein, 0 indicates that the user and another user do not work in collaboration, and 1 indicates that the user and another user work in collaboration. In the example, the collaboration relationship feature coefficient for a case in which the user has a collaboration relationship with another user is 4, and the collaboration relationship feature coefficient for a case in which the user does not have a collaboration relationship with another user is 0.01. If the identifier of the sender is user 2, the collaboration relationship feature coefficient for the user and the sender may be 0.01. If the identifier of the sender is user 3, the collaboration relationship feature coefficient for the user and the sender may be 4. If the identifier of the sender is user 4, the collaboration relationship feature coefficient for the user and the sender may be 4.

Case 10: The user is the only receiver, and the collaboration relationship information includes collaboration relationship weights for the user and other users.

If the user is the only receiver, the collaboration relationship feature coefficient includes a collaboration relationship feature coefficient for the user and the sender. The obtaining the collaboration relationship feature coefficient based on the collaboration relationship information includes: obtaining a collaboration relationship weight for the user and the sender from the collaboration relationship weights for the user and other users, and obtaining the collaboration relationship feature coefficient for the user and the sender based on the collaboration relationship weight for the user and the sender.

In a possible implementation, the obtaining the collaboration relationship feature coefficient for the user and the sender based on the collaboration relationship weight for the user and the sender includes: using the collaboration relationship weight for the user and the sender as the collaboration relationship feature coefficient for the user and the sender. For example, collaboration relationship information of user 1 may include {user 1, user 2, P} and {user 1, user 3, M}. Herein, P is a collaboration relationship weight for user 1 and user 2, and M is a collaboration relationship weight for user 1 and user 3. If the identifier of the sender is user 2, the collaboration relationship feature coefficient for the user and the sender may be P. If the identifier of the sender is user 3, the collaboration relationship feature coefficient for the user and the sender may be M.

It should be noted that, in addition to using the collaboration relationship weight for the user and the sender as the collaboration relationship feature coefficient for the user and the sender, the collaboration relationship weight for the user and the sender may be processed (for example, a number is added to the weight or a number is subtracted from the weight), and processed data is used as the collaboration relationship feature coefficient for the user and the sender. The processed data needs to meet the foregoing setting rule for a collaboration relationship feature coefficient.

Case 11: The user is one of a plurality of receivers, and the collaboration relationship information includes indication information indicating whether the user works in collaboration with other users.

If the user is one of a plurality of receivers, the collaboration relationship feature coefficient includes a collaboration relationship feature coefficient for the user and the sender, and a collaboration relationship feature coefficient for the user and a receiver other than the user. The obtaining the collaboration relationship feature coefficient based on the collaboration relationship information of the user includes: obtaining, from the indication information indicating whether the user works in collaboration with other users, indication information indicating whether the user works in collaboration with the sender and indication information indicating whether the user works in collaboration with the receiver other than the user; obtaining the collaboration relationship feature coefficient for the user and the sender based on the indication information indicating whether the user works in collaboration with the sender; and obtaining the collaboration relationship feature coefficient for the user and the receiver other than the user based on the indication information indicating whether the user works in collaboration with the receiver other than the user.

For specific description of obtaining the collaboration relationship feature coefficient for the user and the sender based on the indication information indicating whether the user works in collaboration with the sender, refer to the description in the foregoing Case 9. Details are not described again.

For specific description of obtaining the collaboration relationship feature coefficient for the user and the receiver other than the user based on the indication information indicating whether the user works in collaboration with the receiver other than the user, refer to the description of obtaining the collaboration relationship feature coefficient for the user and the sender based on the indication information indicating whether the user works in collaboration with the sender in the foregoing Case 9. Details are not described again.

Case 12: The user is one of a plurality of receivers, and the collaboration relationship information includes collaboration relationship weights for the user and other users.

If the user is one of a plurality of receivers, the collaboration relationship feature coefficient includes a collaboration relationship feature coefficient for the user and the sender, and a collaboration relationship feature coefficient for the user and a receiver other than the user. The obtaining the collaboration relationship feature coefficient based on the collaboration relationship information of the user includes: obtaining a collaboration relationship weight for the user and the sender and a collaboration relationship weight for the user and the receiver other than the user from the collaboration relationship weights for the user and other users; obtaining the collaboration relationship feature coefficient for the user and the sender based on the collaboration relationship weight for the user and the sender; and obtaining the collaboration relationship feature coefficient for the user and the receiver other than the user based on the collaboration relationship weight for the user and the receiver other than the user.

For specific description of obtaining the collaboration relationship feature coefficient for the user and the sender based on the collaboration relationship weight for the user and the sender, refer to the description in the foregoing Case 10. Details are not described again.

For specific description of obtaining the collaboration relationship feature coefficient for the user and the receiver other than the user based on the collaboration relationship weight for the user and the receiver other than the user, refer to the description of obtaining the collaboration relationship feature coefficient for the user and the sender based on the collaboration relationship weight for the user and the sender in Case 10. Details are not described again.

The communicate relationship feature coefficient may be obtained based on the communicate relationship information of the user in the following four cases:
Case 13: The user is the only receiver, and the communicate relationship information of the user is used to indicate frequencies of communication between the user and other users.

If the user is the only receiver, the communicate relationship feature coefficient includes a communicate relationship feature coefficient for the user and the sender. That the communicate relationship feature coefficient is obtained based on the communicate relationship information of the user includes: obtaining a frequency of communication between the user and the sender from the communicate relationship information of the user, and obtaining the communicate relationship feature coefficient for the user and the sender based on the frequency of communication between the user and the sender.

In a possible implementation, the obtaining the communicate relationship feature coefficient for the user and the sender based on the frequency of communication between the user and the sender includes: determining the communicate relationship feature coefficient for the user and the sender based on the frequency of communication between the user and the sender according to a setting rule for a communicate relationship feature coefficient.

The setting rule for a communicate relationship feature coefficient may be: The communicate relationship feature coefficient is positively related to the frequency of communication between the user and the sender. That is, a larger frequency of communication between the user and the sender indicates a larger communicate relationship feature coefficient.

For example, the frequency of communication between the user and the sender may be used as the communicate relationship feature coefficient. For example, communicate relationship information of user 1 includes {user 1, user 2, 50}, {user1, user 3, 30}, and {user 1, user 4, 10}. Herein, 50 indicates that a frequency of communication between user 1 and user 2 is 50 times a day, 30 indicates that a frequency of communication between user 1 and user 3 is 30 times a day, and 10 indicates that a frequency of communication between user 1 and user 4 is 10 times a day. If the identifier of the sender is user 2, the communicate relationship feature coefficient for the user and the sender may be 50. If the identifier of the sender is user 3, the communicate relationship feature coefficient for the user and the sender may be 30. If the identifier of the sender is user 4, the communicate relationship feature coefficient for the user and the sender may be 10.

For example, there is a correspondence between the frequency of communication between the user and the sender and the communicate relationship feature coefficient, and the communicate relationship feature coefficient may be determined based on the correspondence. For example, the correspondence between the frequency of communication between the user and the sender and the communicate relationship feature coefficient is shown in Table 5. In Table 5, if the frequency of communication between the user and the sender is 0 to 10 times a day, the communicate relationship feature coefficient is 1; if the frequency of communication between the user and the sender is 11 to 30 times a day, the communicate relationship feature coefficient is 2; if the frequency of communication between the user and the sender is 31 to 50 times a day, the communicate relationship feature coefficient is 3; if the frequency of communication between the user and the sender is more than 50 times a day, the communicate relationship feature coefficient is 4. For example, communicate relationship information of user 1 includes {user 1, user 2, 50}, {user1, user 3, 30}, and {user 1, user 4, 10}. Herein, 50 indicates that a frequency of communication between user 1 and user 2 is 50 times a day, 30 indicates that a frequency of communication between user 1 and user 3 is 30 times a day, and 10 indicates that a frequency of communication between user 1 and user 4 is 10 times a day. If the identifier of the sender is user 2, the communicate relationship feature coefficient for the user and the sender may be 3. If the identifier of the sender is user 3, the communicate relationship feature coefficient for the user and the sender may be 30. If the identifier of the sender is user 2, the communicate relationship feature coefficient for the user and the sender may be 1.

**Table 5**

| Frequency of communication between the user and the sender (times/day) | Communicate relationship feature coefficient |
|---|---|
| 0-10 | 1 |
| 11-30 | 2 |
| 31-50 | 3 |
| More than 51 | 4 |

It should be noted that Table 5 is merely an example of the correspondence between the frequency of communication between the user and the sender and the communicate relationship feature coefficient. In actual application, the correspondence between the frequency of communication between the user and the sender and the communicate relationship feature coefficient may alternatively be in another form. In addition, the correspondence between the frequency of communication between the user and the sender and the communicate relationship feature coefficient may be a specific row in Table 5, some rows in Table 5, all of Table 5, or more correspondences than those shown in Table 5. This is not specifically limited in this application.

It should be noted that, in addition to the foregoing method for determining the communicate relationship feature coefficient for the user and the sender, the frequency of communication between the user and the sender may be processed (for example, a number is added to the frequency or a number is subtracted from the frequency), and processed data is used as the communicate relationship feature coefficient for the user and the sender. The processed data needs to meet the foregoing setting rule for a communicate relationship feature coefficient.

Case 14: The user is the only receiver, and the communicate relationship information of the user includes communication frequency weights.

If the user is the only receiver, the communicate relationship feature coefficient includes a communicate relationship feature coefficient for the user and the sender. That the communicate relationship feature coefficient is obtained based on the communicate relationship information of the user includes: obtaining a communication frequency weight for the user and the sender from the communicate relationship information of the user, and obtaining the communicate relationship feature coefficient for the user and the sender based on the communication frequency weight for the user and the sender.

In a possible implementation, the obtaining the communicate relationship feature coefficient for the user and the sender based on the communication frequency weight for the user and the sender includes: using the communication frequency weight for the user and the sender as the communicate relationship feature coefficient for the user and the sender.

For example, communicate relationship information of user 1 may include {user 1, user 2, R} and {user 1, user 3, S}. Herein, R is a communicate relationship weight for user 1 and user 2, and S is a communicate relationship weight for user 1 and user 3. If the identifier of the sender is user 2, the communicate relationship feature coefficient for the user and the sender may be R. If the identifier of the sender is user 3, the communicate relationship feature coefficient for the user and the sender may be S.

It should be noted that, in addition to using the communicate relationship weight for the user and the sender as the communicate relationship feature coefficient for the user and the sender, the communicate relationship weight for the user and the sender may be processed (for example, a number is added to the weight or a number is subtracted from the weight), and processed data is used as the communicate relationship feature coefficient for the user and the sender. The processed data needs to meet the foregoing setting rule for a communicate relationship feature coefficient.

Case 15: The user is one of a plurality of receivers, and the communicate relationship information of the user is used to indicate frequencies of communication between the user and other users.

If the user is one of a plurality of receivers, the communicate relationship feature coefficient includes a communicate relationship feature coefficient for the user and the sender, and a communicate relationship feature coefficient for the user and a receiver other than the user. That the communicate relationship feature coefficient is obtained based on the communicate relationship information of the user includes: obtaining a frequency of communication between the user and the sender and a frequency of communication between the user and the receiver other than the user from the communicate relationship information of the user; obtaining the communicate relationship feature coefficient for the user and the sender based on the frequency of communication between the user and the sender; and obtaining the communicate relationship feature coefficient for the user and the receiver other than the user based on the frequency of communication between the user and the receiver other than the user.

For specific description of obtaining the communicate relationship feature coefficient for the user and the sender based on the frequency of communication between the user and the sender, refer to the description in the foregoing Case 13. Details are not described again.

For specific description of obtaining the communicate relationship feature coefficient for the user and the receiver other than the user based on the frequency of communication between the user and the receiver other than the user, refer to the description of obtaining the communicate relationship feature coefficient for the user and the sender based on the frequency of communication between the user and the sender in Case 13. Details are not described again. Case 16: The user is one of a plurality of receivers, and the communicate relationship information of the user includes communication frequency weights.

If the user is one of a plurality of receivers, the communicate relationship feature coefficient includes a communicate relationship feature coefficient for the user and the sender, and a communicate relationship feature coefficient for the user and a receiver other than the user. That the communicate relationship feature coefficient is obtained based on the communicate relationship information of the user includes: obtaining a communication frequency weight for the user and the sender and a communication frequency weight for the user and the receiver other than the user from the communicate relationship information of the user; obtaining the communicate relationship feature coefficient for the user and the sender based on the communication frequency weight for the user and the sender; and obtaining the communicate relationship feature coefficient for the user and the receiver other than the user based on the communication frequency weight for the user and the receiver other than the user.

For specific description of obtaining the communicate relationship feature coefficient for the user and the sender based on the communication frequency weight for the user and the sender, refer to the description in the foregoing Case 14. Details are not described again.

For specific description of obtaining the communicate relationship feature coefficient for the user and the receiver other than the user based on the communication frequency weight for the user and the receiver other than the user, refer to the description of obtaining the communicate relationship feature coefficient for the user and the sender based on the communication frequency weight for the user and the sender in Case 14. Details are not described again.

The relationship feature coefficients may not only be obtained based on the user relationship information and the identifier of the receiver and/or the identifier of the sender, but may also be obtained based on the identifier of the receiver and/or the identifier of the sender, the user relationship information, and second user behavior feedback data. The second user behavior feedback data may be used to indicate importance of a historical text that has the same sender as the text, and/or importance of a historical text that has the same receiver as the text. Subsequently, an affect coefficient of the second user behavior feedback data may be obtained based on the second user behavior feedback data. After the relationship feature coefficients are obtained according to the methods described in the foregoing Case 1 to Case 16, one or more coefficients in the relationship feature coefficients may be corrected by using the affect coefficient of the second user behavior feedback data, to enable corrected relationship feature coefficients to be more accurate.

Optionally, the affect coefficient of the second user behavior feedback data is obtained based on the second user behavior feedback data, and an addition or subtraction operation is performed on one or more coefficients in the relationship feature coefficients obtained according to the methods described in the foregoing Case 1 to Case 16 and the affect coefficient of the second user behavior feedback data, to obtain more accurate relationship feature coefficients.

The affect coefficient of the second user behavior feedback data may be used to indicate importance of a historical text that has the same sender as the text, and/or importance of a historical text that has the same receiver as the text. Optionally, an affect coefficient of second user behavior feedback data is positively related to importance of a text. In other words, when other feature coefficients remain unchanged, a larger affect coefficient of second user behavior feedback data indicates higher importance of a text.

Optionally, obtaining the affect coefficient of the second user behavior feedback data based on the second user behavior feedback data includes: obtaining a second correspondence, where the second correspondence is an association relationship between the affect coefficient of the second user behavior feedback data and the second user behavior feedback data; and determining the affect coefficient of the second user behavior feedback data based on the second user behavior feedback data and the second correspondence.

The second correspondence may be preset, and is stored in the memory 203 in FIG. 2 or the server.

Optionally, the obtaining a second correspondence includes obtaining the second correspondence from the memory 203 in FIG. 2 or the server.

Table 6 shows a correspondence between the affect coefficient of the second user behavior feedback data and the second user behavior feedback data. In Table 6, if the second user behavior feedback data indicates that a historical text that has the same sender as the text is an important text, the affect coefficient of the second user behavior feedback data is b. If the second user behavior feedback data indicates that a historical text that has the same sender as the text is a non-important text, the affect coefficient of the second user behavior feedback data is -b. If the second user behavior feedback data indicates that a historical text that has the same receiver as the text is an important text, the affect coefficient of the second user behavior feedback data is c. If the second user behavior feedback data indicates that a historical text that has the same receiver as the text is a non-important text, the affect coefficient of the second user behavior feedback data is -c.

**Table 6**

| User behavior feedback data | Affect coefficient of the user behavior feedback data |
|---|---|
| Indicating that a historical text that has the same sender as the text is an important text | b |
| Indicating that a historical text that has the same sender as the text is a non-important text | -b |
| Indicating that a historical text that has the same receiver as the text is an important text | c |
| Indicating that a historical text that has the same receiver as the text is a non-important text | -c |

For example, the correspondence between the affect coefficient of the second user behavior feedback data and the second user behavior feedback data is shown in Table 6, and an addition or subtraction operation is performed on the superior-subordinate relationship feature coefficient in the relationship feature coefficients and the affect coefficient of the second user behavior feedback data. If the second user behavior feedback data indicates that a historical text that has the same sender as the text is an important text, the affect coefficient of the second user behavior feedback data is b, and a new superior-subordinate relationship feature coefficient for the user and the sender that is obtained with reference to the affect coefficient of the second user behavior feedback data may be the superior-subordinate relationship feature coefficient for the user and the sender plus b. If the second user behavior feedback data indicates that a historical text that has the same receiver as the text is a non-important text, the affect coefficient of the second user behavior feedback data is -c, and a new superior-subordinate relationship feature coefficient for the user and the receiver that is obtained with reference to the affect coefficient of the second user behavior feedback data may be the superior-subordinate relationship feature coefficient for the user and the receiver minus c.

Step 403: Determine importance of the text based on the relationship feature coefficients.

In a possible implementation, the determining importance of the text based on the relationship feature coefficients includes: using the relationship feature coefficients as input data of a machine learning method, and determining the importance of the text by using the machine learning method. For details, refer to the description of using the content feature coefficients as input data of a machine learning method and determining the importance of the text by using the machine learning method in step 303. Details are not described herein again.

Optionally, when there are a plurality of texts of same importance (for example, there are a plurality of tier-1 important texts), after the determining importance of the text based on the relationship feature coefficients, the method further includes: performing a multiplication operation on coefficients in the relationship feature coefficients to obtain an importance coefficient of the text; and sorting, based on the importance coefficient of the text, texts received or sent by the user.

Optionally, the performing a multiplication operation on coefficients in the relationship feature coefficients to obtain an importance coefficient of the text includes: calculating the importance coefficient of the text according to a formula: textImportantCoff = upDownOranCoff ^{∗} horizontalCoff ^{∗} joinCoff ^{∗} communicateCoff. Herein, textImportantCoff is the importance coefficient of the text, upDownOranCoff is the superior-subordinate relationship feature coefficient, horizontalCoff is the horizontal relationship feature coefficient, joinCoff is the collaboration relationship feature coefficient, and communicateCoff is the communicate relationship feature coefficient.

For example, the user is one of a plurality of receivers. In the example, the superior-subordinate relationship feature coefficient for the user and the sender is upDownOranCoff₁, the superior-subordinate relationship feature coefficient for the user and the receiver is upDownOranCoff₂, the horizontal relationship feature coefficient for the user and the sender is horizontalCoffi, the horizontal relationship feature coefficient for the user and the receiver is horizontalCoff₂, the collaboration relationship feature coefficient for the user and the sender is joinCoff₁, the collaboration relationship feature coefficient for the user and the receiver is joinCoff₂, the communicate relationship feature coefficient for the user and the sender is communicateCoff₁, and the communicate relationship feature coefficient for the user and the receiver is communicateCoff₂. In this case, the importance coefficient of the text is textImportantCoff = upDownOranCoff₁ ^{∗} horizontalCoff₁ ^{∗} joinCoff₁ ^{∗} communicateCoff₁ ^{∗} upDownOranCoff₂ ^{∗} horizontalCoff₂ ^{∗} joinCoff₂ ^{∗} communicateCoff₂.

In another possible implementation, the determining importance of the text based on the relationship feature coefficients includes: performing a multiplication operation on coefficients in the relationship feature coefficients to obtain an importance coefficient of the text; and determining the importance of the text based on the importance coefficient of the text.

The performing a multiplication operation on coefficients in the relationship feature coefficients to obtain an importance coefficient of the text may include: calculating the importance coefficient of the text according to a formula: textImportantCoff = upDownOranCoff ^{∗} horizontalCoff ^{∗} joinCoff ^{∗} communicateCoff.

Optionally, the determining the importance of the text based on the importance coefficient of the text includes: if the importance coefficient of the text is greater than or equal to a second threshold, determining that the text is an important text; or determining the importance of the text based on a correspondence between an importance coefficient of a text and importance of the text. For details, refer to the description of determining the importance of the text based on the importance coefficient of the text in step 303. Details are not described herein again.

The second threshold and the first threshold may be the same or different.

Further, optionally, when there are a plurality of texts of same importance, after the determining importance of the text based on a feature coefficient set, the method further includes: sorting, based on the importance coefficient of the text, texts received or sent by the user.

Optionally, after the importance of the text is determined based on the feature coefficient set, the texts are classified and displayed based on importance of the texts.

When the user changes the device, for a method for transmitting the importance of the text in the old device to a new device, refer to the corresponding description in step 303. Details are not described herein again.

According to the method shown in FIG. 4, the user relationship information and the identifier of the receiver and/or the identifier of the sender may be obtained, the relationship feature coefficients are obtained based on the user relationship information and the identifier of the receiver and/or the identifier of the sender, and the importance of the text is determined based on the relationship feature coefficients. In this way, the importance of the text can be determined based on the relationships between the user and the receiver and/or the sender.

### Embodiment 3

After a user receives a text, the text recognition apparatus may obtain the text, user profile information, and user relationship information, obtain content feature coefficients based on the text and the user profile information, obtain relationship feature coefficients based on the user relationship information and an identifier of a receiver and/or an identifier of a sender, and determine importance of the text based on the content feature coefficients and the relationship feature coefficients, so that the importance of the text can be determined based on content of the text and relationships between the user and the receiver and/or the sender. As shown in FIG. 5, the text recognition method may include step 501 to step 504.

Step 501: Obtain a text, user profile information, and user relationship information.

The text may include content of the text, an identifier of a receiver, and an identifier of a sender.

For specific description of step 501, refer to the corresponding description in step 301 and step 401. Details are not described herein again.

Step 502: Obtain content feature coefficients based on the text and the user profile information.

For specific description of step 502, refer to the corresponding description in step 302. Details are not described herein again.

Step 503: Obtain relationship feature coefficients based on the user relationship information and the identifier of the receiver and/or the identifier of the sender.

For specific description of step 503, refer to the corresponding description in step 402. Details are not described herein again.

It should be noted that an execution sequence of step 502 and step 503 is not limited in this embodiment of this application. For example, step 502 may be performed before step 503, or step 503 may be performed before step 502. Step 504: Determine importance of the text based on the content feature coefficients and the relationship feature coefficients.

In a possible implementation, the determining importance of the text based on the content feature coefficients and the relationship feature coefficients includes: using the content feature coefficients and the relationship feature coefficients as input data of a machine learning method, and determining the importance of the text by using the machine learning method. For details, refer to the description of using the content feature coefficients as input data of a machine learning method and determining the importance of the text by using the machine learning method in step 303. Details are not described herein again.

Optionally, when there are a plurality of texts of same importance (for example, there are a plurality of tier-1 important texts), after the determining importance of the text based on the content feature coefficients and the relationship feature coefficients, the method further includes: performing an addition operation on all or a part of N coefficients in the content feature coefficients, and multiplying a result of the addition operation by a result of a multiplication operation on coefficients in the relationship feature coefficients, to obtain an importance coefficient of the text; and sorting, based on the importance coefficient of the text, texts received or sent by the user.

Optionally, the performing an addition operation on all or a part of N coefficients in the content feature coefficients, and multiplying a result of the addition operation by a result of a multiplication operation on coefficients in the relationship feature coefficients, to obtain an importance coefficient of the text includes: calculating the importance coefficient of the text according to a formula: textImportantCoff = (contentCoff₁ + contentCoff₂ + ... + contentCoff_{N}) ^{∗} upDownOranCoff ^{∗} horizontalCoff ^{∗} joinCoff ^{∗} communicateCoff.

In another possible implementation, the determining importance of the text based on the content feature coefficients and the relationship feature coefficients includes: performing an addition operation on all or a part of N coefficients in the content feature coefficients, and multiplying a result of the addition operation by a result of a multiplication operation on coefficients in the relationship feature coefficients, to obtain an importance coefficient of the text; and determining the importance of the text based on the importance coefficient of the text.

The performing an addition operation on all or a part of N coefficients in the content feature coefficients, and multiplying a result of the addition operation by a result of a multiplication operation on coefficients in the relationship feature coefficients, to obtain an importance coefficient of the text includes: calculating the importance coefficient of the text according to a formula: textImportantCoff = (contentCoff₁ + contentCoff₂ + ... + contentCoff_{N}) ^{∗} upDownOranCoff ^{∗} horizontalCoff ^{∗} joinCoff ^{∗} communicateCoff.

Optionally, the determining the importance of the text based on the importance coefficient of the text includes: if the importance coefficient of the text is greater than or equal to a third threshold, determining that the text is an important text; or determining the importance of the text based on a correspondence between an importance coefficient of a text and importance of the text. For details, refer to the description of determining the importance of the text based on the importance coefficient of the text in step 303. Details are not described herein again.

The third threshold may be the same as or different from the first threshold and the second threshold.

Further, optionally, when there are a plurality of texts of same importance, after the determining importance of the text based on a feature coefficient set, the method further includes: sorting, based on the importance coefficient of the text, texts received or sent by the user.

Optionally, after the importance of the text is determined based on the feature coefficient set, the texts are classified and displayed based on importance of the texts.

When the user changes the device, for a method for transmitting the importance of the text in the old device to a new device, refer to the corresponding description in step 303. Details are not described herein again.

According to the method shown in FIG. 5, the text, the user profile information, the identifier of the receiver and/or the identifier of the sender, and the user relationship information may be obtained, the content feature coefficients are obtained based on the text and the user profile information, the relationship feature coefficients are obtained based on the user relationship information and the identifier of the receiver and/or the identifier of the sender, and the importance of the text is determined based on the content feature coefficients and the relationship feature coefficients, so that the importance of the text can be determined based on the content of the text and the relationships between the user and the receiver and/or the sender.

Methods for determining the importance of the text based on the content feature coefficients and/or the relationship feature coefficients are described in the foregoing Embodiment 1 to Embodiment 3. In addition to the foregoing methods, the importance of the text may be determined based on a message affect range feature coefficient, and/or a relationship coefficient for the user and the receiver/sender. The message affect range feature coefficient may be used to indicate a quantity of receivers, and the relationship coefficient for the user and the receiver/sender may be used to indicate closeness of relationships/a relationship between the user and the receiver and/or the sender.

The following uses an example in which the importance of the text is determined based on the content feature coefficients, the relationship feature coefficients, the message affect range feature coefficient, and the relationship coefficient for the user and the receiver/sender for description.

### Embodiment 4

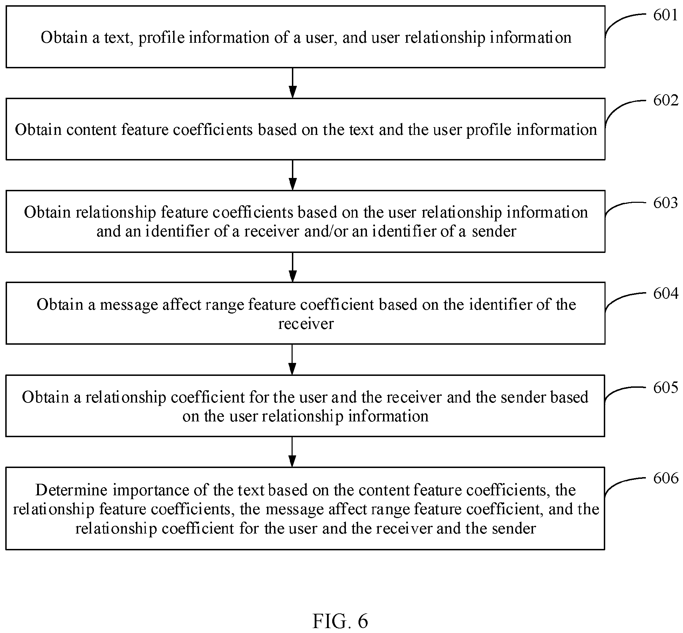

After a user receives a text, the text recognition apparatus may obtain the text, user profile information, and user relationship information, obtain content feature coefficients based on the text and the user profile information, obtain relationship feature coefficients based on the user relationship information and an identifier of a receiver and/or an identifier of a sender, obtain a message affect range feature coefficient based on the identifier of the receiver, obtain a relationship coefficient for the user and the receiver/sender based on the user relationship information, and determine importance of the text based on the content feature coefficients, the relationship feature coefficients, the message affect range feature coefficient, and the relationship coefficient for the user and the receiver/sender. As shown in FIG. 6, the text recognition method may include step 601 to step 606.

Step 601: Obtain a text, user profile information, and user relationship information.

The text may include content of the text, an identifier of a receiver, and an identifier of a sender.

For specific description of step 601, refer to the corresponding description in step 301 and step 401. Details are not described herein again.

Step 602: Obtain content feature coefficients based on the text and the user profile information.

For specific description of step 602, refer to the corresponding description in step 302. Details are not described herein again.

Step 603: Obtain relationship feature coefficients based on the user relationship information and the identifier of the receiver and/or the identifier of the sender.

For specific description of step 603, refer to the corresponding description in step 402. Details are not described herein again.

Step 604: Obtain a message affect range feature coefficient based on the identifier of the receiver.

Optionally, the obtaining a message affect range feature coefficient based on the identifier of the receiver includes: determining a quantity of receivers based on the identifier of the receiver, and obtaining the message affect range feature coefficient based on the quantity of receivers. For example, if the quantity of receivers is 2, the message affect range feature coefficient is 2. For another example, if the quantity of receivers is less than 10, the message affect range feature coefficient is 0.3; if the quantity of receivers is greater than or equal to 10 and less than 30, the message affect range feature coefficient is 0.8; if the quantity of receivers is greater than or equal to 30, the message affect range feature coefficient is 1.

Optionally, the message affect range feature coefficient is negatively related to importance of the text. In other words, when other feature coefficients remain unchanged, a larger message affect range feature coefficient indicates lower importance of the text.

Step 605: Obtain a relationship coefficient for the user and the receiver/sender based on the user relationship information.

If the user is the sender, the relationship coefficient for the user and the receiver/sender may be a ratio of a sum of relationship feature coefficients for receivers having an organizational relationship and/or a communicate relationship with the user to a sum of relationship feature coefficients for all receivers. Alternatively, the relationship coefficient for the user and the receiver/sender may be a ratio of a sum of relationship weights for the user and receivers having an organizational relationship and/or a communicate relationship with the user to a sum of relationship weights for the user and all receivers. The relationship weights may include a weight of a superior-subordinate relationship, a weight of a minimum unit organization, a collaboration relationship weight, and a communication frequency weight. For example, user 1 sends a text to user 2, user 3, and user 4, user 2 and user 3 have organizational relationships and communicate relationships with user 1, a relationship feature coefficient for user 2 is 20, a relationship feature coefficient for user 3 is 33, user 4 and user 1 have no organizational relationship or communicate relationship, and a relationship feature coefficient for user 4 is 2. In this case, a relationship coefficient for user 1 and the receiver/sender may be (20 + 33)/(20 + 33 + 2) = 0.96.

For example, user 1 sends a text to user 2, user 3, and user 4, user 2 and user 3 have organizational relationships with user 1, a relationship weight for user 2 is 25, a relationship weight for user 3 is 22, user 4 has no organizational relationship with user 1, and a relationship weight for user 4 is 1. In this case, a relationship coefficient for user 1 and the receiver/sender may be (25 + 22)/(25 + 22 + 1) = 0.98.

If the user is one of a plurality of receivers, the relationship coefficient for the user and the receiver/sender may be a ratio of a sum of relationship feature coefficients for the sender and receivers having an organizational relationship and/or a communicate relationship with the user to a sum of relationship feature coefficients for all receivers and the sender. Alternatively, the relationship coefficient for the user and the receiver/sender may be a ratio of a sum of weights of relationships between the user and the sender and receivers having an organizational relationship and/or a communicate relationship with the user to a sum of weights of relationships between the user and the sender and all receivers.

For example, user 2 sends a text to user 1, user 3, and user 4, user 2 and user 3 have communicate relationships with user 1, a relationship feature coefficient for user 2 is 15, a relationship feature coefficient for user 3 is 26, user 4 and user 1 have no communicate relationship, and a relationship feature coefficient for user 4 is 2. In this case, a relationship coefficient for user 1 and the receiver/sender may be (15 + 26)/(15 + 26 + 2) = 0.95.

For example, user 2 sends a text to user 1, user 3, and user 4, user 2 and user 1 have an organizational relationship, a relationship weight for user 2 is 27, user 3 and user 4 have no organizational relationship with user 1, a relationship weight for user 3 is 1, and a relationship weight for user 4 is 1. In this case, a relationship coefficient for user 1 and the receiver/sender may be 27/(27 + 1 + 1) = 0.93.

Optionally, the relationship coefficient for the user and the receiver/sender is positively related to importance of the text. In other words, when other feature coefficients remain unchanged, a larger relationship coefficient for the user and the receiver/sender indicates higher importance of the text.

It should be noted that an execution sequence of step 602 to step 605 is not limited in this embodiment of this application. For example, step 605 may be performed first, then step 604 is performed, then step 603 is performed, and finally step 602 is performed. Alternatively, step 604 may be performed first, then step 602 is performed, then step 605 is performed, and finally step 603 is performed. Alternatively, step 603 may be performed first, then step 605 is performed, then step 602 is performed, and finally step 604 is performed.

Step 606: Determine the importance of the text based on the content feature coefficients, the relationship feature coefficients, the message affect range feature coefficient, and the relationship coefficient for the user and the receiver/sender.

In a possible implementation, the determining the importance of the text based on the content feature coefficients, the relationship feature coefficients, the message affect range feature coefficient, and the relationship coefficient for the user and the receiver/sender includes: using the content feature coefficients, the relationship feature coefficients, the message affect range feature coefficient, and the relationship coefficient for the user and the receiver/sender as input data of a machine learning method, and determining the importance of the text by using the machine learning method. For details, refer to the description of using the content feature coefficients as input data of a machine learning method and determining the importance of the text by using the machine learning method in step 303. Details are not described herein again.

Optionally, when there are a plurality of texts of same importance (for example, there are a plurality of tier-1 important texts), after the determining the importance of the text based on the content feature coefficients, the relationship feature coefficients, the message affect range feature coefficient, and the relationship coefficient for the user and the receiver/sender, the method further includes: performing an addition operation on all or a part of N coefficients in the content feature coefficients, multiplying a result of the addition operation by a product of coefficients in the relationship feature coefficients and the relationship coefficient for the user and the receiver/sender, and dividing a result of the multiplication operation by the message affect range feature coefficient, to obtain an importance coefficient of the text; and sorting texts received or sent by the user based on the importance coefficient of the text. Optionally, the performing an addition operation on all or a part of N coefficients in the content feature coefficients, multiplying a result of the addition operation by a product of coefficients in the relationship feature coefficients and the relationship coefficient for the user and the receiver/sender, and dividing a result of the multiplication operation by the message affect range feature coefficient, to obtain an importance coefficient of the text includes: calculating the importance coefficient of the text according to a formula: textImportantCoff = (contentCoff₁ + contentCoff₂ + ... + contentCoff_{N}) ^{∗} upDownOranCoff ^{∗} horizontalCoff ^{∗} joinCoff ^{∗} communicateCoff ^{∗} receiveandsendCoff/textAffectRange. Herein, receiveandsendCoff indicates the relationship coefficient for the user and the receiver/sender, and textAffectRange indicates the message affect range feature coefficient.

In another possible implementation, the determining the importance of the text based on the content feature coefficients, the relationship feature coefficients, the message affect range feature coefficient, and the relationship coefficient for the user and the receiver/sender includes: performing an addition operation on all or a part of N coefficients in the content feature coefficients, multiplying a result of the addition operation by a product of coefficients in the relationship feature coefficients and the relationship coefficient for the user and the receiver/sender, and dividing a result of the multiplication operation by the message affect range feature coefficient, to obtain an importance coefficient of the text; and determining the importance of the text based on the importance coefficient of the text.

The performing an addition operation on all or a part of N coefficients in the content feature coefficients, multiplying a result of the addition operation by a product of coefficients in the relationship feature coefficients and the relationship coefficient for the user and the receiver/sender, and dividing a result of the multiplication operation by the message affect range feature coefficient, to obtain an importance coefficient of the text includes: calculating the importance coefficient of the text according to a formula: textImportantCoff = (contentCoff₁ + contentCoff₂ + ... + contentCoff_{N}) ^{∗} upDownOranCoff ^{∗} horizontalCoff ^{∗} joinCoff ^{∗} communicateCoff ^{∗} receiveandsendCoff/textAffectRange. Optionally, the determining the importance of the text based on the importance coefficient of the text includes: if the importance coefficient of the text is greater than or equal to a fourth threshold, determining that the text is an important text; or determining the importance of the text based on a correspondence between an importance coefficient of a text and importance of the text. For details, refer to the description of determining the importance of the text based on the importance coefficient of the text in step 303. Details are not described herein again.

The fourth threshold may be the same as or different from the first threshold, the second threshold, and the third threshold.

Further, optionally, when there are a plurality of texts of same importance, after the determining the importance of the text based on a feature coefficient set, the method further includes: sorting, based on the importance coefficient of the text, texts received or sent by the user.

Optionally, after the importance of the text is determined based on the feature coefficient set, the texts are classified and displayed based on importance of the texts.

When the user changes the device, for a method for transmitting the importance of the text in the old device to a new device, refer to the corresponding description in step 303. Details are not described herein again.

According to the method shown in FIG. 6, the text, the user profile information, the identifier of the receiver and/or the identifier of the sender, and the user relationship information may be obtained, the content feature coefficients are obtained based on the text and the user profile information, the relationship feature coefficients are obtained based on the user relationship information and the identifier of the receiver and/or the identifier of the sender, the message affect range feature coefficient is obtained based on the identifier of the receiver, the relationship coefficient for the user and the receiver/sender is obtained based on the user relationship information, and the importance of the text is determined based on the content feature coefficients, the relationship feature coefficients, the message affect range feature coefficient, and the relationship coefficient for the user and the receiver/sender.

In the following, an example in which user 1 sends a text to user 2 and user 3, and the text recognition apparatus obtains the text, relationship information of user 2, and profile information of user 2, and obtains content feature coefficients, relationship feature coefficients, and a message affect range feature coefficient based on the text, the relationship information of user 2, and the profile information of user 2 is used to describe the text recognition method.

### Embodiment 5

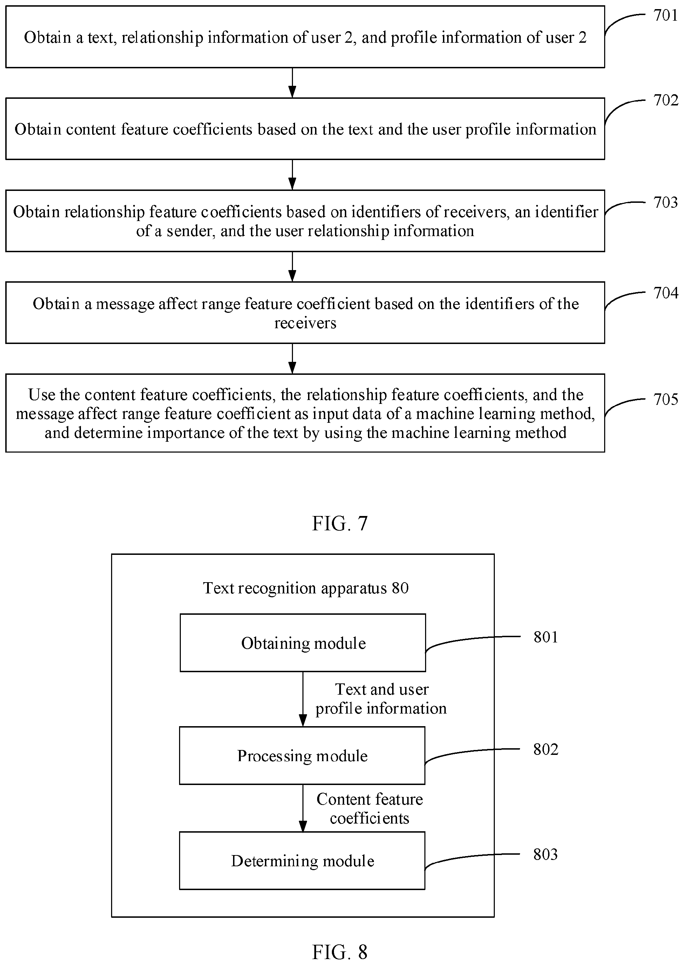

As shown in FIG. 7, the text recognition method includes step 701 to step 705.

Step 701: Obtain a text, relationship information of user 2, and profile information of user 2.

The text may include content of the text, identifiers of the receivers, and an identifier of the sender.

The relationship information of user 2 includes {user 1, user 2, superior, small organization 1, 0, 30} and {user 3, user 2, peer, small organization 1, 1, 50}. In {user 1, user 2, superior, small organization 1, 0, 30}, superior indicates that user 1 is a superior user of user 2, small organization 1 indicates that a minimum unit organization of user 1 and user 2 is small organization 1, 0 indicates that user 1 and user 2 do not work in collaboration, and 30 indicates that a frequency of communication between user 1 and user 2 is 30 times per month. In {user 3, user 2, peer, small organization 1, 1, 50}, peer indicates that user 3 is a peer user of user 2, small organization 1 indicates that a minimum unit organization of user 3 and user 2 is small organization 1, 1 indicates that user 3 and user 2 work in collaboration, and 50 indicates that a frequency of communication between user 3 and user 2 is 50 times per month.

The profile information of user 2 includes {tag₁, tag₂, ..., tag₁₀} and {tagVal₁, tagVal₂, ..., tagVal₁₀}.

For description of step 701, refer to the description of step 301 and step 401. Details are not described herein again. Step 702: Obtain content feature coefficients based on the text and the user profile information.

According to the method described in Example 4 in step 302, a keyword of the text is extracted from the text, and similarities {similarCoff₁, similarCoff₂, ..., similarCoff₁₀} between the keyword of the text and {tag₁, tag₂, ..., tag₁₀} are obtained. The similarities are multiplied by the weights of tag information corresponding to the similarities, and the content feature coefficients {contentCoff₁, contentCoff₂, ..., contentCoffio} are calculated according to a formula: contentCoffᵢ = Function(x). Function(x) = exp(x), x = tagValᵢ ^{∗} similarCoffᵢ, and i is a positive integer greater than or equal to 1 and less than or equal to 10.

Step 703: Obtain relationship feature coefficients based on the user relationship information and the identifier of the receiver and/or the identifier of the sender.

According to the method described in step 402, the relationship feature coefficients {6, 5, 0.01, 30} for user 1 and user 2 may be obtained. Herein, 6 is a superior-subordinate relationship feature coefficient for user 1 and user 2, 5 is a horizontal relationship feature coefficient for user 1 and user 2,0.01 is a collaboration relationship feature coefficient for user 1 and user 2, and 30 is a communicate relationship feature coefficient for user 1 and user 2.

According to the method described in step 402, the relationship feature coefficients {4, 5, 4, 50} for user 3 and user 2 may be obtained. Herein, 4 is a superior-subordinate relationship feature coefficient for user 3 and user 2, 5 is a horizontal relationship feature coefficient for user 3 and user 2, 4 is a collaboration relationship feature coefficient for user 3 and user 2, and 50 is a communicate relationship feature coefficient for user 3 and user 2.

Step 704: Obtain a message affect range feature coefficient based on the identifiers of the receivers.

There are two identifiers of the receivers. In this case, it is determined that a quantity of receivers is 2, and the message affect range feature coefficient is 2.

After step 704, the content feature coefficients, the relationship feature coefficients, and the message affect range feature coefficient may be combined into vectors [contentCoff₁, contentCoff₂, ..., contentCoff₁₀, 6, 5, 0.01, 30, 4, 5, 4, 50, 2], which are 19 dimensions in total.

It should be noted that an execution sequence of step 702 to step 704 is not limited in this embodiment of this application. For example, step 703 may be performed first, then step 702 is performed, and finally step 704 is performed. Alternatively, step 704 may be performed first, then step 702 is performed, and finally step 703 is performed. Alternatively, step 702 may be performed first, then step 704 is performed, and finally step 703 is performed. This is not specifically limited in this embodiment of this application.

Step 705: Use the content feature coefficients, the relationship feature coefficients, and the message affect range feature coefficient as input data of a machine learning method, and determine importance of the text by using the machine learning method.

Before step 705 is performed, a model of the machine learning method needs to be trained. A detailed process includes the following steps.

Step 1: Obtain a large quantity of texts received by user 2 historically. For example, 100,000 different texts received by user 2 historically are obtained.

Step 2: Classify and label the large quantity of texts based on importance of the texts. For example, an important text is labeled 1, and a non-important text is labeled 0.

Step 3: Obtain, according to step 701 to step 704, vectors (19 dimensions) formed by a combination of content feature coefficients, relationship feature coefficients, and a message affect range feature coefficient of each text in the large quantity of texts (100,000 texts), and combine the vectors of the 100,000 texts by column to obtain a 19 ^{∗} 100,000 matrix.

Step 4: Train the model by using a deep learning method. The training model includes an input layer, a hidden layer, and an output layer. Four hidden layers may be set. Parameters of a first hidden layer are: W1 = [12, 19], and b1 = [12, 1]; parameters of a second hidden layer are: W2 = [8, 12], and b2 = [8, 1]; parameters of a third hidden layer are: W3 = [4, 8], and b3 = [4, 1]; and parameters of a fourth hidden layer are: W4 = [2, 4], and b4 = [2, 1]. An activation function of five hidden layers is set to relu, and a final classification probability is obtained by using a normalized exponential function (softmax). That is, a forward propagation formula is predict = softmax(W4 ^{∗} relu(W3 ^{∗} relu(W2 ^{∗} relu(W1 ^{∗} inputX + b1) + b2) + b3) + b4). Then, a cross entropy is used as a loss function, a learning rate is set to 1e-5, and parameters are updated by using the Adam gradient descent optimizer, where a quantity of times of training is set to 20,000. After the training, a calculation formula for predicting an importance category of a text may be obtained: Y = Index(max(predict)). Herein, Y is a subscript corresponding to a largest element of the predict array, and when Y is 0, it indicates that the text is an important text, or when Y is 1, it indicates that the text is a non-important text.

After the training model is obtained, the vectors [contentCoffi, contentCoff₂, ..., contentCoff₁₀, 6, 5, 0.01, 30, 4, 5, 4, 50, 2] that are obtained by combining the content feature coefficients, the relationship feature coefficients, and the message affect range feature coefficient of user 2 after step 704 are input into the training model, to obtain the importance of the text received by user 2.

According to the method shown in FIG. 7, the text, the user relationship information, and the user profile information may be obtained; the content feature coefficients are obtained based on the text and the user profile information; the relationship feature coefficients are obtained based on the identifiers of the receivers, the identifier of the sender, and the user relationship information; the message affect range feature coefficient is obtained based on the identifiers of the receivers; and the importance of the text is determined based on the content feature coefficients, the relationship feature coefficients, and the message affect range feature coefficient, so that the importance of the text can be efficiently recognized.

To implement the foregoing functions, the text recognition apparatus includes a corresponding hardware structure and/or software module for executing each function. A person skilled in the art should be easily aware that, in combination with units and algorithm operations of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, the text recognition apparatus may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in the embodiments of this application, division into the modules is an example, and is merely a logical function division. In actual implementation, another division manner may be used.

For example, the function modules are obtained through division in an integrated manner. FIG. 8 is a schematic diagram of a structure of a text recognition apparatus 80. The text recognition apparatus 80 includes an obtaining module 801, a processing module 802, and a determining module 803.

The obtaining module 801 is configured to obtain a text and profile information of a user, where the text is a text received or sent by the user, the user profile information is used to indicate N keywords in a text related to the user, and N is an integer greater than or equal to 1.

The processing module 802 is configured to obtain content feature coefficients based on the text and the user profile information, where the content feature coefficients are used to indicate importance of content of the text.

The determining module 803 is configured to determine importance of the text based on the content feature coefficients. Optionally, the user profile information includes N pieces of tag information, and the N pieces of tag information correspondingly indicate the N keywords; or the user profile information includes the N pieces of tag information and a weight of each piece of tag information in the N pieces of tag information.

Optionally, the processing module 802 is specifically configured to obtain first user behavior feedback data, where the first user behavior feedback data is used to indicate importance of a historical text that is highly similar to the content of the text. The processing module 802 is further specifically configured to obtain a first correspondence, where the first correspondence is used to indicate an association relationship between the first user behavior feedback data and an affect coefficient of the first user behavior feedback data. The processing module 802 is further specifically configured to obtain the affect coefficient of the first user behavior feedback data based on the first user behavior feedback data and the first correspondence. The processing module 802 is further specifically configured to obtain the content feature coefficients based on the text, the user profile information, and the affect coefficient of the first user behavior feedback data.

Optionally, the obtaining module 801 is further configured to obtain user relationship information, where the user relationship information is used to indicate a hierarchical relationship between the user and another user in an organization. The processing module 802 is further configured to obtain relationship feature coefficients based on the text and the user relationship information, where the relationship feature coefficients are used to indicate relationships between the user and a receiver of the text and/or a sender of the text. The determining module 803 is further configured to determine the importance of the text based on the relationship feature coefficients.

Optionally, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user.

Optionally, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user.

Optionally, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The processing module 802 is specifically configured to obtain second user behavior feedback data, where the second user behavior feedback data is used to indicate importance of a historical text that has the same sender as the text. The processing module 802 is further specifically configured to obtain a second correspondence, where the second correspondence is used to indicate an association relationship between the second user behavior feedback data and an affect coefficient of the second user behavior feedback data. The processing module 802 is further specifically configured to obtain the affect coefficient of the second user behavior feedback data based on the second user behavior feedback data and the second correspondence. The processing module 802 is further specifically configured to obtain the relationship feature coefficients based on the text, the user relationship information, and the affect coefficient of the second user behavior feedback data.

Optionally, the text includes an identifier of the receiver of the text, and the processing module 802 is further configured to obtain a message affect range feature coefficient based on the identifier of the receiver of the text, where the message affect range feature coefficient is used to indicate a quantity of receivers of the text. The determining module 803 is further configured to determine the importance of the text based on the message affect range feature coefficient.

Optionally, the processing module 802 is further configured to obtain a relationship coefficient for the user and the receiver/sender based on the user relationship information, where the relationship coefficient for the user and the receiver/sender is used to indicate closeness of relationships/a relationship between the user and the receiver and/or the sender of the text. The determining module 803 is further configured to determine the importance of the text based on the relationship coefficient for the user and the receiver/sender.

Optionally, the determining module 803 is specifically configured to use the content feature coefficients as input data of a machine learning method, and determine the importance of the text by using the machine learning method. Optionally, the determining module 803 is specifically configured to use the content feature coefficients and the relationship feature coefficients as input data of a machine learning method, and determine the importance of the text by using the machine learning method.

Optionally, the determining module 803 is specifically configured to use the content feature coefficients, the relationship feature coefficients, and the message affect range feature coefficient as input data of a machine learning method, and determine the importance of the text by using the machine learning method.

Optionally, the determining module 803 is specifically configured to use the content feature coefficients, the relationship feature coefficients, the message affect range feature coefficient, and the relationship coefficient for the user and the receiver/sender as input data of a machine learning method, and determine the importance of the text by using the machine learning method.

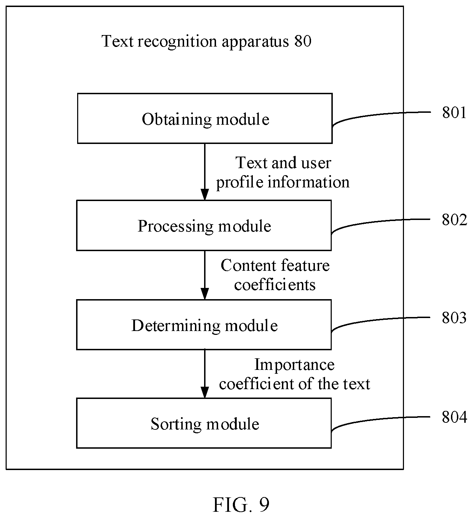

Optionally, the content feature coefficients include N coefficients, and there are a plurality of texts of same importance. As shown in FIG. 9, the text recognition apparatus 80 further includes a sorting module 804. In this case, the processing module 802 is further configured to perform an addition operation on all or a part of the N coefficients in the content feature coefficients to obtain an importance coefficient of the text. The sorting module 804 is configured to sort, based on the importance coefficient of the text, texts received or sent by the user.

Optionally, the content feature coefficients include N coefficients, and there are a plurality of texts of same importance. As shown in FIG. 9, the text recognition apparatus 80 further includes a sorting module 804. In this case, the processing module 802 is further configured to perform a multiplication operation on a sum of coefficients in the content feature coefficients and a product of coefficients in the relationship feature coefficients to obtain an importance coefficient of the text. The sorting module 804 is configured to sort, based on the importance coefficient of the text, texts received or sent by the user.

Optionally, the content feature coefficients include N coefficients, and there are a plurality of texts of same importance. As shown in FIG. 9, the text recognition apparatus 80 further includes a sorting module 804. In this case, the processing module 802 is further configured to perform a multiplication operation on a sum of coefficients in the content feature coefficients and a product of coefficients in the relationship feature coefficients, and divide a result of the multiplication operation by the message affect range feature coefficient, to obtain an importance coefficient of the text. The sorting module 804 is configured to sort, based on the importance coefficient of the text, texts received or sent by the user.

Optionally, the content feature coefficients include N coefficients, and there are a plurality of texts of same importance. As shown in FIG. 9, the text recognition apparatus 80 further includes a sorting module 804. In this case, the processing module 802 is further configured to multiply a sum of coefficients in the content feature coefficients by a product of coefficients in the relationship feature coefficients and the relationship coefficient for the user and the receiver/sender, and divide a result of the multiplication operation by the message affect range feature coefficient, to obtain an importance coefficient of the text. The sorting module 804 is configured to sort, based on the importance coefficient of the text, texts received or sent by the user.

Optionally, the determining module 803 is specifically configured to perform an addition operation on all or a part of the N coefficients in the content feature coefficients to obtain an importance coefficient of the text. The determining module 803 is further specifically configured to determine the importance of the text based on the importance coefficient of the text.

Optionally, the determining module 803 is specifically configured to multiply a sum of coefficients in the content feature coefficients by a product of coefficients in the relationship feature coefficients, to obtain an importance coefficient of the text. The determining module 803 is further specifically configured to determine the importance of the text based on the importance coefficient of the text.

Optionally, the determining module 803 is specifically configured to multiply a sum of coefficients in the content feature coefficients by a product of coefficients in the relationship feature coefficients, and divide a result of the multiplication operation by the message affect range feature coefficient, to obtain an importance coefficient of the text. The determining module 803 is further specifically configured to determine the importance of the text based on the importance coefficient of the text.

Optionally, the determining module 803 is specifically configured to multiply a sum of coefficients in the content feature coefficients by a product of coefficients in the relationship feature coefficients and the relationship coefficient for the user and the receiver/sender, and divide a result of the multiplication operation by the message affect range feature coefficient, to obtain an importance coefficient of the text. The determining module 803 is further specifically configured to determine the importance of the text based on the importance coefficient of the text.

Optionally, when there are a plurality of texts of same importance, the sorting module 804 is configured to sort, based on the importance coefficient of the text, texts received or sent by the user.

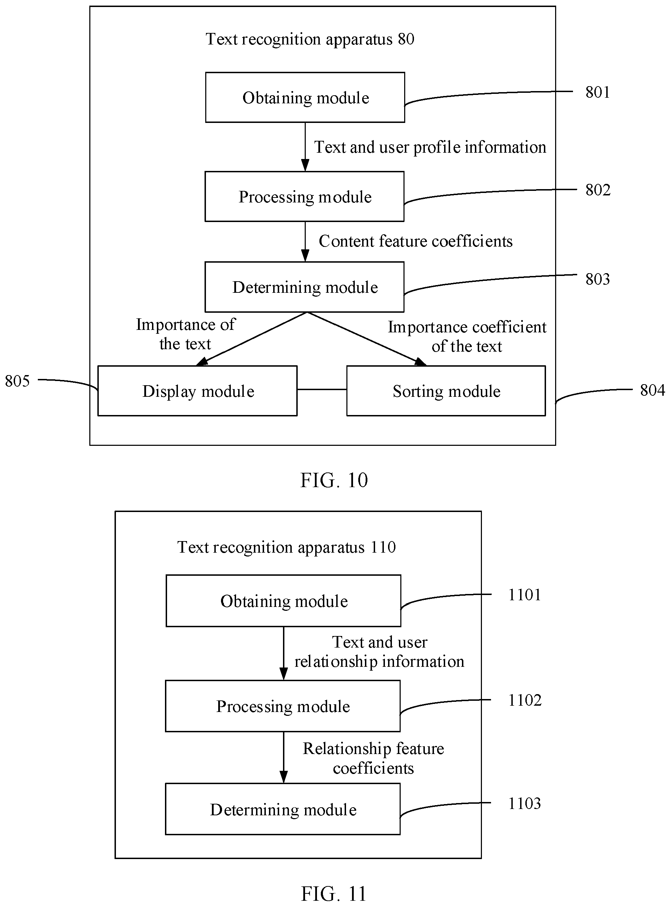

Optionally, as shown in FIG. 10, the text recognition apparatus 80 further includes a display module 805. The display module 805 is configured to classify and display the texts based on importance of the texts.

All related content of the operations in the foregoing method embodiment may be cited in function descriptions of the corresponding function modules. Details are not described herein again.

In this embodiment, the text recognition apparatus 80 is presented in a form of function modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may know that the text recognition apparatus 80 may use the form shown in FIG. 2.

For example, in FIG. 2, the memory 203 stores computer-executable instructions, and the processor 201 may invoke the computer-executable instructions stored in the memory 203 to execute the following process: obtaining a text and profile information of a user from the memory 203 or a server, where the text is a text received or sent by the user, the user profile information is used to indicate information related to importance of the text; obtaining content feature coefficients based on the text and the user profile information, where the content feature coefficients are used to indicate importance of content of the text; and determining the importance of the text based on the content feature coefficients.

For example, functions/implementation processes of the obtaining module 801, the processing module 802, the determining module 803, the sorting module 804, and the display module 804 in FIG. 10 may be implemented by the processor 201 in FIG. 2 by invoking the computer-executable instructions stored in the memory 203. Alternatively, functions/implementation processes of the obtaining module 801, the processing module 802, the determining module 803, and the sorting module 804 in FIG. 10 may be implemented by the processor 201 in FIG. 2 by invoking the computer-executable instructions stored in the memory 203, and a function/implementation process of the display module 805 in FIG. 10 may be implemented by using the output device 205 in FIG. 2.

Because the text recognition apparatus 80 provided in this embodiment can execute the foregoing text recognition method, for technical effects that can be obtained by the text recognition apparatus 80, refer to the foregoing method embodiments. Details are not described herein again.

For example, the function modules are obtained through division in an integrated manner. FIG. 11 is a schematic diagram of a structure of a text recognition apparatus 110. The text recognition apparatus 110 includes an obtaining module 1101, a processing module 1102, and a determining module 1103.

The obtaining module 1101 is configured to obtain a text and relationship information of a user, where the text is a text received or sent by the user, and the user relationship information is used to indicate a hierarchical relationship between the user and another user in an organization.

The processing module 1102 is configured to obtain relationship feature coefficients based on the text and the user relationship information, where the relationship feature coefficients are used to indicate relationships between the user and a receiver of the text and/or a sender of the text.

The determining module 1103 is configured to determine importance of the text based on the relationship feature coefficients.

Optionally, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user.

Optionally, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user.

Optionally, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The processing module 1102 is specifically configured to obtain second user behavior feedback data, where the second user behavior feedback data is used to indicate importance of a historical text that has the same sender as the text. The processing module 1102 is further specifically configured to obtain a second correspondence, where the second correspondence is used to indicate an association relationship between the second user behavior feedback data and an affect coefficient of the second user behavior feedback data. The processing module 1102 is further specifically configured to obtain the affect coefficient of the second user behavior feedback data based on the second user behavior feedback data and the second correspondence. The processing module 1102 is further specifically configured to obtain the relationship feature coefficients based on the text, the user relationship information, and the affect coefficient of the second user behavior feedback data.

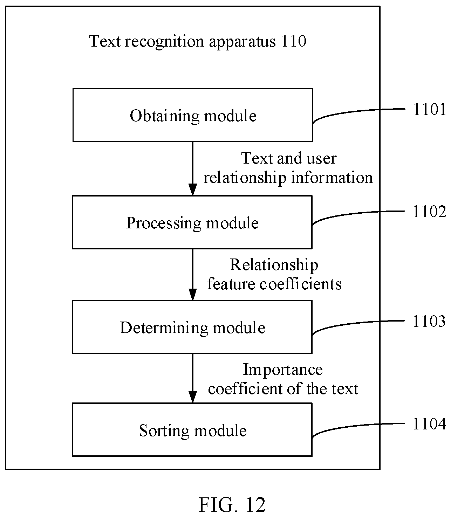

Optionally, the determining module 1103 is specifically configured to use the relationship feature coefficients as input data of a machine learning method, and determine the importance of the text by using the machine learning method. Optionally, there are a plurality of texts of same importance. As shown in FIG. 12, the text recognition apparatus 110 further includes a sorting module 1104. In this case, the processing module 1102 is further configured to perform a multiplication operation on coefficients in the relationship feature coefficients to obtain an importance coefficient of the text. The sorting module 1104 is configured to sort, based on the importance coefficient of the text, texts received or sent by the user.

Optionally, the determining module 1103 is specifically configured to perform a multiplication operation on coefficients in the relationship feature coefficients to obtain an importance coefficient of the text. The determining module 1103 is further specifically configured to determine the importance of the text based on the importance coefficient of the text.

Optionally, when there are a plurality of texts of same importance, the sorting module 1104 is further configured to sort, based on the importance coefficient of the text, texts received or sent by the user.

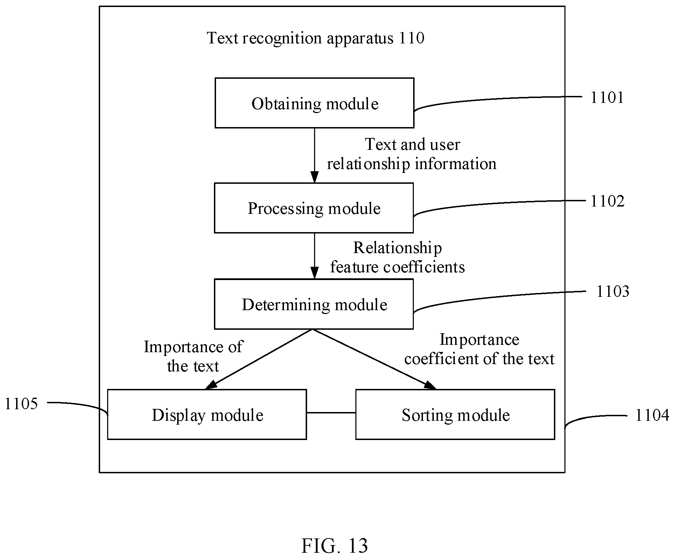

Optionally, as shown in FIG. 13, the text recognition apparatus 110 further includes a display module 1105. The display module 1105 is configured to classify and display the texts based on importance of the texts.

All related content of the operations in the foregoing method embodiment may be cited in function descriptions of the corresponding function modules. Details are not described herein again.

In this embodiment, the text recognition apparatus 110 is presented in a form of function modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may know that the text recognition apparatus 110 may use the form shown in FIG. 2.

For example, in FIG. 2, the memory 203 stores computer-executable instructions, and the processor 201 may invoke the computer-executable instructions stored in the memory 203 to execute the following process: obtaining a text and relationship information of a user from the memory 203 or a server, where the text is a text received or sent by the user, and the user relationship information is used to indicate a hierarchical relationship between the user and another user in an organization; obtaining relationship feature coefficients based on the text and the user relationship information, where the relationship feature coefficients are used to indicate a relationship between the user and a receiver of the text and/or a sender of the text; and determining importance of the text based on the relationship feature coefficients.

For example, functions/implementation processes of the obtaining module 1101, the processing module 1102, the determining module 1103, the sorting module 1104, and the display module 1104 in FIG. 13 may be implemented by the processor 201 in FIG. 2 by invoking the computer-executable instructions stored in the memory 203. Alternatively, functions/implementation processes of the obtaining module 1101, the processing module 1102, the determining module 1103, and the sorting module 1104 in FIG. 13 may be implemented by the processor 201 in FIG. 2 by invoking the computer-executable instructions stored in the memory 203, and a function/implementation process of the display module 1105 in FIG. 13 may be implemented by using the output device 205 in FIG. 2.

Because the text recognition apparatus 110 provided in this embodiment can execute the foregoing text recognition method, for technical effects that can be obtained by the text recognition apparatus 110, refer to the foregoing method embodiments. Details are not described herein again.

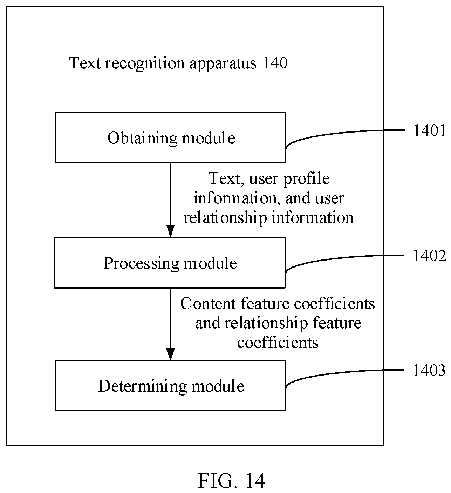

For example, the function modules are obtained through division in an integrated manner. FIG. 14 is a schematic diagram of a structure of a text recognition apparatus 140. The text recognition apparatus 140 includes an obtaining module 1401, a processing module 1402, and a determining module 1403.

The obtaining module 1401 is configured to obtain a text, profile information of a user, and user relationship information, where the text is a text received or sent by the user, the user profile information is used to indicate N keywords in a text related to the user, N is an integer greater than or equal to 1, and the user relationship information is used to indicate a hierarchical relationship between the user and another user in an organization.

The processing module 1402 is configured to obtain content feature coefficients based on the text and the user profile information, where the content feature coefficients are used to indicate importance of content of the text.

The processing module 1402 is further configured to obtain relationship feature coefficients based on the text and the user relationship information, where the relationship feature coefficients are used to indicate relationships between the user and a receiver of the text and/or a sender of the text.

The determining module 1403 is configured to determine importance of the text based on the content feature coefficients and the relationship feature coefficients.

Optionally, the user profile information includes N pieces of tag information, and the N pieces of tag information correspondingly indicate the N keywords; or the user profile information includes the N pieces of tag information and a weight of each piece of tag information in the N pieces of tag information.

Optionally, the processing module 1402 is specifically configured to obtain first user behavior feedback data, where the first user behavior feedback data is used to indicate importance of a historical text that is highly similar to the content of the text. The processing module 1402 is further specifically configured to obtain a first correspondence, where the first correspondence is used to indicate an association relationship between the first user behavior feedback data and an affect coefficient of the first user behavior feedback data. The processing module 1402 is further specifically configured to obtain the affect coefficient of the first user behavior feedback data based on the first user behavior feedback data and the first correspondence. The processing module 1402 is further specifically configured to obtain the content feature coefficients based on the text, the user profile information, and the affect coefficient of the first user behavior feedback data.

Optionally, the user relationship information includes organizational relationship information of the user and communicate relationship information of the user. The organizational relationship information of the user includes superior-subordinate relationship information of the user, horizontal relationship information of the user, and collaboration relationship information. The superior-subordinate relationship information of the user is used to indicate a superior-subordinate relationship between the user and another user. The horizontal relationship information of the user is used to indicate a minimum unit organization of the user and another user, and the minimum unit organization is an organization with the smallest quantity of users in organizations to which both the user and the another user belong. The collaboration relationship information is used to indicate whether the user works in collaboration with another user. The communicate relationship information of the user is used to indicate a frequency of communication between the user and another user.

Optionally, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The superior-subordinate relationship feature coefficient is obtained based on the superior-subordinate relationship information of the user. The horizontal relationship feature coefficient is obtained based on the horizontal relationship information of the user. The collaboration relationship feature coefficient is obtained based on the collaboration relationship information. The communicate relationship feature coefficient is obtained based on the communicate relationship information of the user.

Optionally, the relationship feature coefficients include organizational relationship feature coefficients and a communicate relationship feature coefficient, and the organizational relationship feature coefficients include a superior-subordinate relationship feature coefficient, a horizontal relationship feature coefficient, and a collaboration relationship feature coefficient. The processing module 1402 is specifically configured to obtain second user behavior feedback data, where the second user behavior feedback data is used to indicate importance of a historical text that has the same sender as the text. The processing module 1402 is further specifically configured to obtain a second correspondence, where the second correspondence is used to indicate an association relationship between the second user behavior feedback data and an affect coefficient of the second user behavior feedback data. The processing module 1402 is further specifically configured to obtain the affect coefficient of the second user behavior feedback data based on the second user behavior feedback data and the second correspondence. The processing module 1402 is further specifically configured to obtain the relationship feature coefficients based on the text, the user relationship information, and the affect coefficient of the second user behavior feedback data.

Optionally, the processing module 1402 is further configured to obtain a message affect range feature coefficient based on the text, where the message affect range feature coefficient is used to indicate a quantity of receivers of the text. The determining module 1403 is further configured to determine the importance of the text based on the message affect range feature coefficient.

Optionally, the processing module 1402 is further configured to obtain a relationship coefficient for the user and the receiver/sender based on the user relationship information, where the relationship coefficient for the user and the receiver/sender is used to indicate closeness of relationships/a relationship between the user and the receiver and/or the sender of the text. The determining module 1403 is further configured to determine the importance of the text based on the relationship coefficient for the user and the receiver/sender.

Optionally, the determining module 1403 is specifically configured to use the content feature coefficients and the relationship feature coefficients as input data of a machine learning method, and determine the importance of the text by using the machine learning method.

Optionally, the determining module 1403 is specifically configured to use the content feature coefficients, the relationship feature coefficients, and the message affect range feature coefficient as input data of a machine learning method, and determine the importance of the text by using the machine learning method.

Optionally, the determining module 1403 is specifically configured to use the content feature coefficients, the relationship feature coefficients, the message affect range feature coefficient, and the relationship coefficient for the user and the receiver/sender as input data of a machine learning method, and determine the importance of the text by using the machine learning method.

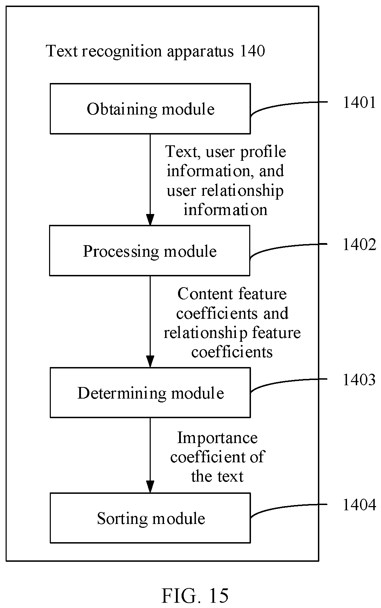

Optionally, the content feature coefficients include N coefficients, and there are a plurality of texts of same importance. As shown in FIG. 15, the text recognition apparatus 140 further includes a sorting module 1404. In this case, the processing module 1402 is further configured to perform a multiplication operation on a sum of coefficients in the content feature coefficients and a product of coefficients in the relationship feature coefficients to obtain an importance coefficient of the text. The sorting module 1404 is configured to sort, based on the importance coefficient of the text, texts received or sent by the user.

Optionally, the content feature coefficients include N coefficients, and there are a plurality of texts of same importance. As shown in FIG. 15, the text recognition apparatus 140 further includes a sorting module 1404. In this case, the processing module 1402 is further configured to perform a multiplication operation on a sum of coefficients in the content feature coefficients and a product of coefficients in the relationship feature coefficients, and divide a result of the multiplication operation by the message affect range feature coefficient, to obtain an importance coefficient of the text. The sorting module 1404 is configured to sort, based on the importance coefficient of the text, texts received or sent by the user.

Optionally, the content feature coefficients include N coefficients, and there are a plurality of texts of same importance. As shown in FIG. 15, the text recognition apparatus 140 further includes a sorting module 1404. In this case, the processing module 1402 is further configured to multiply a sum of coefficients in the content feature coefficients by a product of coefficients in the relationship feature coefficients and the relationship coefficient for the user and the receiver/sender, and divide a result of the multiplication operation by the message affect range feature coefficient, to obtain an importance coefficient of the text. The sorting module 1404 is configured to sort, based on the importance coefficient of the text, texts received or sent by the user.

Optionally, the determining module 1403 is specifically configured to multiply a sum of coefficients in the content feature coefficients by a product of coefficients in the relationship feature coefficients, to obtain an importance coefficient of the text. The determining module 1403 is further specifically configured to determine the importance of the text based on the importance coefficient of the text.

Optionally, the determining module 1403 is specifically configured to multiply a sum of coefficients in the content feature coefficients by a product of coefficients in the relationship feature coefficients, and divide a result of the multiplication operation by the message affect range feature coefficient, to obtain an importance coefficient of the text. The determining module 1403 is further specifically configured to determine the importance of the text based on the importance coefficient of the text.

Optionally, the determining module 1403 is specifically configured to multiply a sum of coefficients in the content feature coefficients by a product of coefficients in the relationship feature coefficients and the relationship coefficient for the user and the receiver/sender, and divide a result of the multiplication operation by the message affect range feature coefficient, to obtain an importance coefficient of the text. The determining module 1403 is further specifically configured to determine the importance of the text based on the importance coefficient of the text.

Optionally, when there are a plurality of texts of same importance, the sorting module 1404 is further configured to sort, based on the importance coefficient of the text, texts received or sent by the user.

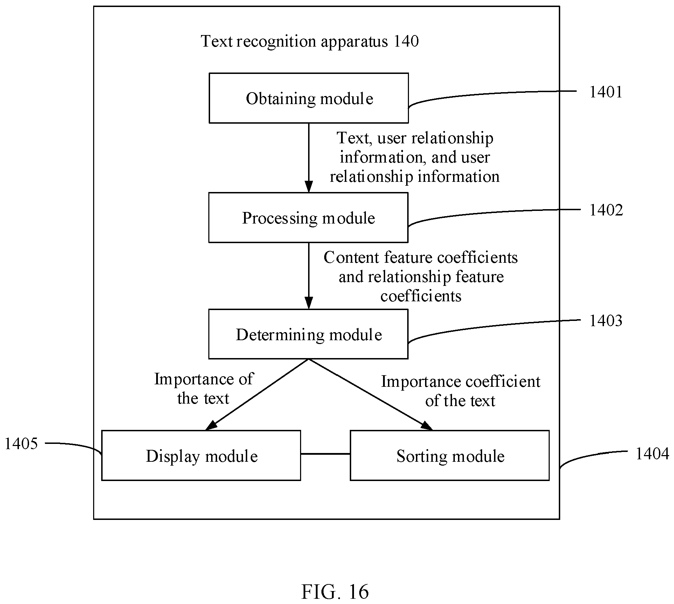

Optionally, as shown in FIG. 16, the text recognition apparatus 140 further includes a display module 1405. The display module 1405 is configured to classify and display the texts based on importance of the texts.

All related content of the operations in the foregoing method embodiment may be cited in function descriptions of the corresponding function modules. Details are not described herein again.

In this embodiment, the text recognition apparatus 140 is presented in a form of function modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may know that the text recognition apparatus 140 may use the form shown in FIG. 2.

For example, in FIG. 2, the memory 203 stores computer-executable instructions, and the processor 201 may invoke the computer-executable instructions stored in the memory 203 to execute the following process: obtaining a text, profile information of a user, and user relationship information from the memory 203 or a server, where the text is a text received or sent by the user, the user profile information is used to indicate information related to importance of the text, and the user relationship information is used to indicate a hierarchical relationship between the user and another user in an organization; obtaining content feature coefficients based on the text and the user profile information, where the content feature coefficients are used to indicate importance of content of the text; obtaining relationship feature coefficients based on the text and the user relationship information, where the relationship feature coefficients are used to indicate a relationship between the user and a receiver of the text and/or a sender of the text; and determining the importance of the text based on a feature coefficient set, where the feature coefficient set includes the content feature coefficients and the relationship feature coefficients.

For example, functions/implementation processes of the obtaining module 1401, the processing module 1402, the determining module 1403, the sorting module 1404, and the display module 1405 in FIG. 16 may be implemented by the processor 201 in FIG. 2 by invoking the computer-executable instructions stored in the memory 203. Alternatively, functions/implementation processes of the obtaining module 1401, the processing module 1402, the determining module 1403, and the sorting module 1404 in FIG. 16 may be implemented by the processor 201 in FIG. 2 by invoking the computer-executable instructions stored in the memory 203, and a function/implementation process of the display module 1405 in FIG. 16 may be implemented by using the output device 205 in FIG. 2.

Because the text recognition apparatus 140 provided in this embodiment can execute the foregoing text recognition method, for technical effects that can be obtained by the text recognition apparatus 140, refer to the foregoing method embodiments. Details are not described herein again.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to the embodiments, in a process of implementing this application that claims protection, a person skilled in the art may understand and implement other variations of the disclosed embodiments by viewing the accompanying drawings, disclosed content, and the appended claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a great effect.

Although this application is described with reference to specific features and the embodiments thereof, it is clear that various modifications and combinations may be made to them without departing from the spirit and scope of this application. Correspondingly, the specification and the accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the claims of this application and equivalent technologies thereof.

## Claims

1. A text recognition apparatus, wherein the apparatus comprises a processor and a memory, the memory stores a software program, and the processor is configured to invoke the software program in the memory to execute the following process:
obtaining a text and profile information of a user from the memory or a server, wherein the text is a text received or sent by the user, the user profile information is used to indicate N keywords in a text related to the user, N is an integer greater than or equal to 1, the server is connected to the text recognition apparatus, and the server stores the text and the user profile information;
obtaining content feature coefficients based on the text and the user profile information, wherein the content feature coefficients are used to indicate importance of content of the text; and
determining importance of the text based on the content feature coefficients.

2. The apparatus according to claim 1, wherein
the user profile information comprises N pieces of tag information, and the N pieces of tag information correspondingly indicate the N keywords; or
the user profile information comprises the N pieces of tag information and a weight of each piece of tag information in the N pieces of tag information.

3. The apparatus according to claim 1 or 2, wherein
the obtaining content feature coefficients based on the text and the user profile information comprises:
obtaining first user behavior feedback data from the memory or the server, wherein the first user behavior feedback data is used to indicate importance of a historical text that is highly similar to the content of the text;
obtaining a first correspondence from the memory or the server, wherein the first correspondence is used to indicate an association relationship between the first user behavior feedback data and an affect coefficient of the first user behavior feedback data;
obtaining the affect coefficient of the first user behavior feedback data based on the first user behavior feedback data and the first correspondence; and
obtaining the content feature coefficients based on the text, the user profile information, and the affect coefficient of the first user behavior feedback data.

4. The apparatus according to any one of claims 1 to 3, wherein the processor is further configured to invoke the software program in the memory to execute the following process:
obtaining user relationship information from the memory or the server, wherein the user relationship information is used to indicate a hierarchical relationship between the user and another user; and
obtaining relationship feature coefficients based on the text and the user relationship information, wherein the relationship feature coefficients are used to indicate relationships between the user and a receiver of the text and/or a sender of the text; wherein
the determining importance of the text further comprises:
determining the importance of the text based on the relationship feature coefficients.

5. The apparatus according to claim 4, wherein the relationship feature coefficients comprise organizational relationship feature coefficients and a communicate relationship feature coefficient, and the organizational relationship feature coefficients comprise a superior-subordinate relationship feature coefficient, a horizontal relationship feature coefficient, and a collaboration relationship feature coefficient.

6. The apparatus according to any one of claims 1 to 5, wherein
the determining importance of the text based on the content feature coefficients comprises:
using the content feature coefficients as input data of a machine learning method, and determining the importance of the text by using the machine learning method.

7. The apparatus according to claim 6, wherein the content feature coefficients comprise N coefficients, and when there are a plurality of texts of same importance, the processor is further configured to invoke the software program in the memory to execute the following process:
performing an addition operation on all or a part of the N coefficients in the content feature coefficients to obtain an importance coefficient of the text; and
sorting, based on the importance coefficient of the text, texts received or sent by the user.

8. A text recognition apparatus, wherein the apparatus comprises a processor and a memory, the memory stores a software program, and the processor is configured to invoke the software program in the memory to execute the following process:
obtaining a text and relationship information of a user from the memory or a server, wherein the text is a text received or sent by the user, the user relationship information is used to indicate a hierarchical relationship between the user and another user, the server is connected to the text recognition apparatus, and the server stores the text and the user relationship information;
obtaining relationship feature coefficients based on the text and the user relationship information, wherein the relationship feature coefficients are used to indicate relationships between the user and a receiver of the text and/or a sender of the text; and
determining importance of the text based on the relationship feature coefficients.

9. The apparatus according to claim 8, wherein the relationship feature coefficients comprise organizational relationship feature coefficients and a communicate relationship feature coefficient, and the organizational relationship feature coefficients comprise a superior-subordinate relationship feature coefficient, a horizontal relationship feature coefficient, and a collaboration relationship feature coefficient.

10. The apparatus according to claim 9, wherein the determining importance of the text based on the relationship feature coefficients comprises:
using the relationship feature coefficients as input data of a machine learning method, and determining the importance of the text by using the machine learning method.

11. The apparatus according to claim 10, wherein when there are a plurality of texts of same importance, the processor is further configured to invoke the software program in the memory to execute the following process:
performing a multiplication operation on coefficients in the relationship feature coefficients to obtain an importance coefficient of the text; and
sorting, based on the importance coefficient of the text, texts received or sent by the user.

12. A text recognition method, wherein the method comprises:
obtaining a text and profile information of a user, wherein the text is a text received or sent by the user, the user profile information is used to indicate N keywords in a text related to the user, and N is an integer greater than or equal to 1;
obtaining content feature coefficients based on the text and the user profile information, wherein the content feature coefficients are used to indicate importance of content of the text; and
determining importance of the text based on the content feature coefficients.

13. The method according to claim 12, wherein
the user profile information comprises N pieces of tag information, and the N pieces of tag information correspondingly indicate the N keywords; or
the user profile information comprises the N pieces of tag information and a weight of each piece of tag information in the N pieces of tag information.

14. The method according to claim 12 or 13, wherein the obtaining content feature coefficients based on the text and the user profile information comprises:
obtaining first user behavior feedback data, wherein the first user behavior feedback data is used to indicate importance of a historical text that is highly similar to the content of the text;
obtaining a first correspondence, wherein the first correspondence is used to indicate an association relationship between the first user behavior feedback data and an affect coefficient of the first user behavior feedback data;
obtaining the affect coefficient of the first user behavior feedback data based on the first user behavior feedback data and the first correspondence; and
obtaining the content feature coefficients based on the text, the user profile information, and the affect coefficient of the first user behavior feedback data.

15. The method according to any one of claims 12 to 14, wherein the method further comprises:
obtaining user relationship information, wherein the user relationship information is used to indicate a hierarchical relationship between the user and another user; and
obtaining relationship feature coefficients based on the text and the user relationship information, wherein the relationship feature coefficients are used to indicate relationships between the user and a receiver of the text and/or a sender of the text; and
the determining importance of the text further comprises:
determining the importance of the text based on the relationship feature coefficients.

16. The method according to claim 15, wherein the relationship feature coefficients comprise organizational relationship feature coefficients and a communicate relationship feature coefficient, and the organizational relationship feature coefficients comprise a superior-subordinate relationship feature coefficient, a horizontal relationship feature coefficient, and a collaboration relationship feature coefficient.

17. The method according to any one of claims 12 to 16, wherein the determining importance of the text based on the content feature coefficients comprises:
using the content feature coefficients as input data of a machine learning method, and determining the importance of the text by using the machine learning method.

18. The method according to claim 17, wherein the content feature coefficients comprise N coefficients, and when there are a plurality of texts of same importance, the method further comprises:
performing an addition operation on all or a part of the N coefficients in the content feature coefficients to obtain an importance coefficient of the text; and
sorting, based on the importance coefficient of the text, texts received or sent by the user.

19. A text recognition method, wherein the method comprises:
obtaining a text and relationship information of a user, wherein the text is a text received or sent by the user, and the user relationship information is used to indicate a hierarchical relationship between the user and another user;
obtaining relationship feature coefficients based on the text and the user relationship information, wherein the relationship feature coefficients are used to indicate relationships between the user and a receiver of the text and/or a sender of the text; and
determining importance of the text based on the relationship feature coefficients.

20. The method according to claim 19, wherein the relationship feature coefficients comprise organizational relationship feature coefficients and a communicate relationship feature coefficient, and the organizational relationship feature coefficients comprise a superior-subordinate relationship feature coefficient, a horizontal relationship feature coefficient, and a collaboration relationship feature coefficient.

21. The method according to claim 20, wherein the determining importance of the text based on the relationship feature coefficients comprises:
using the relationship feature coefficients as input data of a machine learning method, and determining the importance of the text by using the machine learning method.

22. The method according to claim 21, wherein when there are a plurality of texts of same importance, the method further comprises:
performing a multiplication operation on coefficients in the relationship feature coefficients to obtain an importance coefficient of the text; and
sorting, based on the importance coefficient of the text, texts received or sent by the user.

23. A computer storage medium, wherein the computer-readable storage medium stores program instructions, and when the program instructions run, the text recognition method according to claims 12 to 18 is executed.

24. A computer storage medium, wherein the computer-readable storage medium stores program instructions, and when the program instructions run, the text recognition method according to claims 19 to 22 is executed.
